(19) **Europäisches Patentamt**

**European Patent Office**

**Office européen des brevets**

(11) **EP 1 677 210 A1**

(12) **EUROPEAN PATENT APPLICATION**
published in accordance with Art. 158(3) EPC

(43) Date of publication:
**05.07.2006 Bulletin 2006/27**

(51) Int Cl.:
***G06F 17/30*** (1995.01)

(21) Application number: **04792323.0**

(22) Date of filing: **13.10.2004**

(86) International application number:
**PCT/JP2004/015082**

(87) International publication number:
**WO 2005/038672 (28.04.2005 Gazette 2005/17)**

(84) Designated Contracting States:
**AT BE BG CH CY CZ DE DK EE ES FI FR GB GR HU IE IT LI LU MC NL PL PT RO SE SI SK TR**

(30) Priority: **21.10.2003 JP 2003393081**
**31.05.2004 JP 2004160401**

(71) Applicant: **Intellectual Property Bank Corp.**
**Tokyo 105-0001 (JP)**

(72) Inventors:
• **MASUYAMA, Hiroaki**
**Toyonaka-shi, Osaka 5600054 (JP)**
• **SATO, Haru-Tada,**
**Intellectual Property Bank Corp.**
**Minato-ku, Tokyo 1050001 (JP)**

(74) Representative: **Style, Kelda Camilla Karen et al**
**Page White & Farrer,**
**54 Doughty Street**
**London WC1N 2LS (GB)**

(54) **DOCUMENT CHARACTERISTIC ANALYSIS DEVICE FOR DOCUMENT TO BE SURVEYED**

(57)  An index term extraction device including: input means (1) for inputting a document-to-be-surveyed d and documents-to-be-compared P; index term extraction means (120) for extracting an index term from the document-to-be-surveyed d; first appearance frequency calculation means (142) for calculating a function value IDF (P) of the appearance frequency of the extracted index term in the documents-to-be-compared P; similar documents selecting means (160) for selecting similar documents S similar to the document-to-be-surveyed d in the documents-to-be-compared P according to the data on the document-to-be-surveyed d; second appearance frequency calculation means (171) for calculating the function value IDF (S) of the appearance frequency of the extracted index term in the similar documents S; and output means (4) for outputting each index term and its positioning data according to the combination of the function values of the respective appearance frequencies in the documents-to-be-compared and the similar documents which have been calculated. Thus, it is possible to accurately grasp the feature of the document-to-be-surveyed.

FIG. 2

**Description**

TECHNICAL FIELD

The present invention relates to the extraction of index terms in a document-to-be-surveyed, and in particular to an automatic extraction device, extraction program and extraction method of the index terms, which enable to properly analyze the character of the document-to-be-surveyed and the positioning of the document-to-be-surveyed in a document group, as well as a character representative diagram employing the extracted index terms.

Further, the present invention also relates to a document characteristic analysis device, and in particular to a document characteristic analysis device, analysis program, analysis method and document characteristic representative diagram which enable to analyze the general positioning of a document-to-be-surveyed included in a document-group-to-be-surveyed with respect to other document group and the character of the overall document-group-to-be-surveyed.

BACKGROUND ART

The amount of technical documents such as patent documents and other documents is steadily increasing year after year. In recent years, ever since document data has been distributed electronically, a system for automatically retrieving documents similar to the document to be surveyed among the vast amounts of documents has been put into practical application. For example, Japanese Patent Laid-Open Publication H11-73415 "Device and Method for Retrieving Similar Document" (Patent Document 1) compares the index terms contained in the document to be surveyed with the index terms contained in the other documents, calculates the similarity based on the type and number of appearances of the similar index terms, and outputs documents in order from those having the highest similarity.

Nevertheless, although similar documents can be retrieved, the character of the document to be surveyed or its positioning in the documents cannot be known. In order to know the character of the document to be surveyed or its positioning in the documents, it is necessary to read the retrieved similar documents and then evaluate the document-to-be-surveyed subject to such read similar documents.

Meanwhile, as a method of automatically extracting the document characteristic itself, for instance, there is Japanese Patent Laid-Open Publication No. H11-34523 "Method and Device for Extracting Document Information and Storage Medium Stored with Document Information Extraction Program" (Patent Document 2). In this publication, an "object document set" is extracted by retrieval from a "standard document set", and characteristic information of each "individual document" configuring this "object document set" is extracted.

Specifically, the "overall characteristic of the object document set" which characterizes the "object document set" against the "standard document set" is calculated, and the "individual document characteristic" which characterizes each "individual document" in the "object document set" against other individual documents is calculated. And, the characteristic information of each "individual document" is output based on such "overall characteristic of the object document set" and "individual document characteristic". This technology is advantageous in that a user is able to find and sort out useful information among vast amounts of information.

[Patent Document 1] Japanese Patent Laid-Open Publication H11-73415 "Device and Method for Retrieving Similar Document"

[Patent Document 2] Japanese Patent Laid-Open Publication No. H11-345239 "Method and Device for Extracting Document Information, and Storage Medium Stored with Document Information Extraction Program"

DISCLOSURE OF THE INVENTION

Nevertheless, the technology described in Japanese Patent Laid-Open Publication No. H11-345239 (Patent Document 2) has the.following three problems.

Foremost, with the technology described in this publication, for instance, a specific theme such as "cherry blossom viewing" is foremost decided, and then an "object document set" coinciding therewith is extracted. And, each "individual document" to become the extraction target of characteristic information is defined only after this "object document set" is extracted. In other words, if the "object document set" or a specific theme for extracting such object document set is not decided in advance, it is not even possible to define the "individual document". Therefore, the technology described in this publication is not able to analyze the character of a specific document-to-be-surveyed when it is primarily defined.

Secondly, with the technology described in this publication, information for characterizing the "object document set" and information for characterizing each "individual document" is output by calculating the product of the "overall characteristic of the object document set" and the "individual document characteristic". Therefore, with the technology described in this publication, characteristic information is merely captured in one dimensional quantity, and it is not possible to analyze the character of the document-to-be-surveyed multilaterally.

Thirdly, a document characteristic analysis device capable of analyzing the general positioning of a document-to-be-surveyed included in a document-group-to-be-surveyed, or analyzing the trend of the overall document-group-to-be-surveyed from the perspective of specialty or originality is not disclosed, nor is this disclosed in other documents.

Thus, a first object of the present invention is to provide an index term extraction device capable of properly comprehending the character of a document-to-be-surveyed when it is provided.

Further, a second object of the present invention is to provide an index term extraction device and character representative diagram enabling the multilateral analysis of the character of the document-to-be-surveyed.

Moreover, a third object of the present invention is to provide a document characteristic analysis device and document characteristic representative diagram enabling the analysis of the general positioning of a document-to-be-surveyed included in a document-group-to-be-surveyed, and the trend of the overall document-group-to-be-surveyed.

In order.to achieve the first object described above, the index term extraction device of the present invention includes: input means for inputting a document-to-be-surveyed, documents-to-be-compared to be compared with the document-to-be-surveyed, and source-documents-for-selection to become the selection source of similar documents that are similar to the document-to-be-surveyed; index term extraction means for extracting index terms from the document-to-be-surveyed; first appearance frequency calculation means for calculating a function value of an appearance frequency of each of the extracted index.terms in the documents-to-be-compared; similar documents selecting means for selecting the similar documents from the source-documents-for-selection based on data of the document-to-be-surveyed; second appearance frequency calculation means for calculating a function value of an appearance frequency of each of the extracted index terms in the similar documents; and output means for outputting each index term and positioning data thereof, based on the combination of the calculated function value of the appearance frequency in the documents-to-be-compared and the calculated function value of the appearance frequency in the similar documents, regarding each index term.

The present invention enables the analysis of the character of the document-to-be-surveyed by observing the function value of the appearance frequency in the combination of each index term.

According to the present invention, since the processing of extracting the index terms from the document-to-be-surveyed, processing for selecting similar documents from the source-documents-for-selection, processing for calculating the function value of the appearance frequency in the documents-to-be-compared or similar documents and so on are all performed with a computer, a person will not have to read the contents of documents at all in order to perform the foregoing processing.

In particular, the similar documents are newly selected based on data of the document-to-be-surveyed, and each index term and the positioning data thereof are output based on the combination of the function value of the appearance frequency in the similar documents and the function value of the appearance frequency in the documents-to-be-compared. Therefore, the character of the document-to-be-surveyed can be properly analyzed.

Although the documents-to-be-compared and the source-documents-for-selection need to be electronically retrievable data, there is no other limitation on the contents thereof and, for instance, these may be the same document group or different document groups. Further, one or both of these document groups can be randomly extracted or fully extracted under certain conditions from a certain document group. In a typical example, all patent documents (unexamined patent publications and so on) in a certain country during a certain period will be the documents-to-be-compared and the source-documents-for-selection.

In the present invention, a single document or a plurality of documents may be surveyed. When a plurality of documents are subject to be surveyed in a bundle, the character of the document group as a whole will be represented rather than the character of the individual documents-to-be-surveyed. Further, a document-to-be-surveyed may or may not be included in the documents-to-be-compared or the source-documents-for-selection.

Extraction of the index terms by the index term extraction means is conducted by clipping words from the whole or a part of the document. There is no other limitation on the method of clipping the words, and, for instance, a method of extracting significant words excluding particles and conjunctions via conventional methods or with commercially available morphological analysis software, or a method of retaining an index term dictionary (thesaurus) database in advance and using index terms that can be obtained from such database may be adopted.

As the appearance frequency in the document group of the index term, for instance, the number of document hits (document frequency; DF) when retrieving a certain index term among the document group is used, but this is not limited thereto, and, for example, the total number of hits of the index term may also be used.

Output of the index terms by the output means may be the output of all index terms extracted by the index term extraction means, or the output of only a portion of the index terms that strongly show the character of.the document. Further, the positioning data to be output together with the index terms from the output means may be output as the function value of the appearance frequency in the documents-to-be-compared and in the similar documents as is, or output as a diagram which disposes the index terms on a coordinate system based thereon, or output as a list of index terms classified into groups based on the function value of the appearance frequency described above.

In the foregoing index term extraction device, it is preferable to use the documents-to-be-compared as the source-documents-for-selection. Thereby, there will be no need to input the source-documents-for-selection separately from the input of the documents-to-be-compared, and the configuration of the device can be simplified. Further, since the similar documents will become a subset of the documents-to-be-compared, analysis of data can be facilitated.

In the foregoing index term extraction device, it is desirable that the similar documents selecting means calculates, with respect to each document of the document-to-be-surveyed and the source-documents-for-selection, a vector having as its component a function value of an appearance frequency in each document of each index term contained in each document, or a function value of an appearance frequency in the source-documents-for-selection of each index term contained in each document; and selects from the source-documents-for-selection documents having a vector of a high degree of similarity to the vector calculated with respect to the document-to-be-surveyed, and makes the selected documents similar documents.

Since the selection of similar documents is conducted based on the vector of each document, it is possible to secure high reliability. Further, for instance, unlike a case of selecting similar documents based on the concurrence of IPC (International Patent Classification) or the like, the number of cases in order from the highest degree of similarity can also be designated freely.

Determination on the degree.of similarity between the vectors may employ the function of the product between vector components such as cosine or Tanimoto correlation (similarity) between the vectors, or the function of the difference between vector components such as distance (non-similarity) between the vectors.

In the foregoing index term extraction device, it is desirable that the output means outputs, based on the results of the respective calculation means, an index term of a first group having a low appearance frequency in the documents-to-be-compared and in the similar documents, an index term of a second group having a higher appearance frequency in the documents-to-be-compared in comparison to the index term of the first group, and an index term of a third group having a higher appearance frequency.in the similar documents in comparison to the index term of the first group.

As a result of outputting the index terms of the first to third groups through the use of the function value of the appearance frequency in the documents-to-be-compared and the function value of the appearance frequency in the similar documents, the character of the document-to-be-surveyed can be analyzed multilaterally.

For example, the index terms of the first group includes terms (specialty terms) representing the specialty of the contents included in the document-to-be-surveyed or representing the concept directly linked thereto.

Further, for example, the second group includes terms (original concept terms) representing a concept that was not noted in similar fields even though the appearance frequency was high in the documents-to-be-compared.

Moreover, for example, the third group includes terms (similar documents prescribed terms) that characterize the similar documents. For instance, when technical documents are the target of survey, the user will be able to know the technical field of the similar documents and document-to-be-surveyed when viewing the index terms of this third group.

In the foregoing index term extraction device, it is desirable that the output means outputs, based on the results of the respective calculation means, an index term of a third group having a lower appearance frequency in the documents-to-be-compared in comparison to an index term of a fourth group having a high appearance frequency in the documents-to-be-compared and in the similar documents, an index term of a second group having a lower appearance frequency in the similar documents in comparison to the index term of the fourth group, and an index term of a first group having a lower appearance frequency in the similar documents in comparison to the index term of the third group and further having a lower appearance frequency in the documents-to-be-compared in comparison to the index term of the second group.

As a result of outputting the index terms of the first to third groups through the use of the function value of the appearance frequency in the documents-to-be-compared and the function value of the appearance frequency in the similar documents, the character of the document-to-be-surveyed can be analyzed multilaterally.

For example, the index terms of the third group can be evaluated as terms (similar documents prescribed terms) that characterize the similar documents. For instance, when technical documents are the target of survey, the user will be able to know the technical field of the similar documents and document-to-be-surveyed when viewing the index terms of this third group.

Further, for example, the index terms of the second group can be evaluated to be terms (original concept terms) representing a concept that was not noted in similar fields even though the appearance frequency was high in the documents-to-be-compared

Moreover, for example, the index terms of the first group can be evaluated to be terms (specialty terms) representing the specialty of the contents included in the document-to-be-surveyed or representing the concept directly linked thereto.

Highly proper analysis can be performed since the third group and second group do not include index terms (general terms) of the fourth group having a high appearance frequency in both the documents-to-be-compared and in the similar documents.

In order to achieve the second object described above, the index term extraction device of the present invention includes: input means for inputting a document-to-be-surveyed, documents-to-be-compared to be compared with the document-to-be-surveyed, and similar documents that are similar to the document-to-be-surveyed; index term extraction means for extracting index terms from the document-to-be-surveyed; first appearance frequency calculation means for calculating a function value of an appearance frequency of each of the extracted index terms in the documents-to-be-compared; second appearance frequency calculation means for calculating a function value of an appearance frequency of each of the extracted index terms in the similar documents; and output means for outputting, based on the results of the respective calculation means, an index term of a first group having a low appearance frequency in the documents-to-be-compared and in the similar documents, an index term of a second group having a higher appearance frequency in the documents-to-be-compared in comparison to the index term of the first group, and an index term of a third group having a higher appearance frequency in the similar documents in comparison to the index term of the first group.

As a result of outputting the index terms of the first to third groups based on the function value of the appearance frequency in the documents-to-be-compared and the function value of the appearance frequency in the similar documents of the index terms in the document-to-be-surveyed, the character of the document-to-be-surveyed can be analyzed multilaterally.

For example, the index terms of the first group includes terms (specialty terms) representing the specialty of the contents included in the document-to-be-surveyed or representing the concept directly linked thereto.

Further, for example, the second group includes terms (original concept terms) representing a concept that was not noted in similar fields even though the appearance frequency was high in the documents-to-be-compared.

Moreover, for example, the third group includes terms (similar documents prescribed terms) that characterize the similar documents. For instance, when technical documents are the target of survey, the user will be able to know the technical field of the similar documents and document-to-be-surveyed when viewing the index terms of this third group.

According to the present invention, since the processing of extracting the index terms from the document-to-be-surveyed, processing for calculating the function value of the appearance frequency in the documents-to-be-compared or similar documents and so on are all performed with a computer, a person will not have to read the contents of documents at all in order to perform the foregoing processing.

Although the documents-to-be-compared need to be electronically retrievable data, there is no other limitation on the contents thereof and, for instance, the documents-to-be-compared can be randomly extracted or fully extracted under certain conditions from a certain document group. In a typical example, all patent documents (unexamined patent publications and so on) in a certain country during a certain period will be the documents-to-be-compared.

Similar documents also need to be electronically retrievable data. Similar documents may be selected and input from a document group such as the documents-to-be-compared based on data of the document-to-be-surveyed. Similar documents may also be selected and input irrespective of data of the document-to-be-surveyed. For instance, by selecting the document-to-be-surveyed from the similar documents selected with a publicly known method, such similar documents may result in becoming the similar documents that are similar to the document-to-be-surveyed.

In the present invention, a single document or a plurality of documents may be surveyed. When a plurality of documents are subject to be surveyed in a bundle, the character of the document group as a whole will be represented rather than the character of the individual documents-to-be-surveyed. Further, a document-to-be-surveyed may or may not be included in the documents-to-be-compared or the source-documents-for-selection.

Extraction of the index terms by the index term extraction means is conducted by clipping words from the whole or a part of the document. There is no other limitation on the method of clipping the words, and, for instance, a method of extracting significant words excluding particles and conjunctions via conventional methods or with commercially available morphological analysis software, or a method of retaining an index term dictionary (thesaurus) database in advance and using index terms that can be obtained from such database may be adopted.

As the appearance frequency in the document group of the index term, for instance, the number of document hits (document frequency; DF) when retrieving a certain index term among the document group is used, but this is not limited thereto, and, for example, the total number of hits of the index term may also be used.

Output of the index terms by the output means may be the output of all index terms extracted by the index term extraction means, or the output of only a portion of the index terms that strongly show the character of the document.

Further, the index term extraction device of the present invention includes: input means for inputting a document-to-be-surveyed, documents-to-be-compared to be compared with the document-to-be-surveyed, and similar documents that are similar to the document-to-be-surveyed; index term extraction means for extracting index terms from the document-to-be-surveyed; first appearance frequency calculation means for calculating a function value of an appearance frequency of each of the extracted index terms in the documents-to-be-compared; second appearance frequency calculation means for calculating a function value of an appearance frequency of each of the extracted index terms in the similar documents; and output means for outputting, based on the results of the respective calculation means, an index term of a third group having a lower appearance frequency in the documents-to-be-compared in comparison to an index term of a fourth group having a high appearance frequency in the documents-to-be-compared and in the similar documents, an index term of a second group having a lower appearance frequency in the similar documents in comparison to the index term of the fourth group, and an index term of a first group having a lower appearance frequency in the:

similar documents in comparison to the index term of the third group and further having a lower appearance frequency in the documents-to-be-compared in comparison to the index term of the second group.

As a result of outputting the index terms of the first to third groups based on the function value of the appearance frequency in the documents-to-be-compared and the function value of the appearance frequency in the similar documents of the index terms of the document-to-be-surveyed, the character of the document-to-be-surveyed can be analyzed multilaterally.

For example, the index terms of the third group can be evaluated as terms (similar documents prescribed terms) that characterize the similar documents. For instance, when technical documents are the target of survey, the user will be able to know the technical field of the similar documents and document-to-be-surveyed when viewing the index terms of this third group.

Further, for example, the index terms of the second group can be evaluated to be terms (original concept terms) representing a concept that was not noted in similar fields even though the appearance frequency was high in the documents-to-be-compared.

Moreover, for example, the index terms of the first group can be evaluated to be terms (specialty terms) representing the specialty of the contents included in the document-to-be-surveyed or representing the concept directly linked thereto. Highly proper analysis can be performed since the third group and second group do not include index terms (general terms) of the fourth group having a high appearance frequency in both the documents-to-be-compared and in the similar documents.

In each of the foregoing index term extraction devices, it is desirable that the function value of the appearance frequency in the documents-to-be-compared or the similar documents is a logarithm of a value obtained by multiplying the total number of documents of the documents-to-be-compared or the similar documents to the reciprocal of the appearance frequency.

Thereby, it will be possible to prevent the function value of the appearance frequency from concentrating near a specific value, and the positioning of the index term can be easily comprehended thereby. In particular, when each index term is disposed on a coordinate system, it is possible to prevent such function value of the appearance frequency of each index term from concentrating near the origin of the coordinate system, and the visual comprehension of the positioning can be facilitated thereby.

In each of the foregoing index term extraction devices, it is desirable that the output means disposes and outputs each index term by taking the function value of the appearance frequency in the documents-to-be-compared as a first axis of a coordinate system and taking the function value of the appearance frequency in the similar documents as a second axis of the coordinate system.

Positioning of each index term can be visually comprehended from the position of the index terms disposed on the coordinate system. In other words, the classification of the index terms of the first to third groups can be clearly comprehended at a glance based on the two-dimensional positioning on the coordinate system.

For instance, a planar orthogonal coordinate system may be used as the coordinate system, and an X axis (horizontal axis) is used as the first axis and a Y axis (vertical axis) is used as the second axis. Nevertheless, without limitation to the above, a three-dimensional coordinate system may also be used and an index other than the above may take the Z axis.

In each of the foregoing index term extraction devices, it is.desirable that the output means respectively lists and outputs the index term of the first group, the index term of the second group, and the index term of the third group.

Thereby, it will be possible to view the state of the list of the index terms belonging to the respective areas. This list, for instance, can be obtained by sorting the index terms in order according to the appearance frequency in each document group in order to realize a more accurate analysis of the character of the document-to-be-surveyed.

In each of the foregoing index term extraction devices, it is desirable that the output means automatically creates and outputs supporting documentation of the document-to-be-surveyed through the use of the index term of the first group, the index term of the second group, and the index term of the third group.

Thereby, supporting documentation describing the character of the document-to-be-surveyed can be output. This supporting documentation, for instance, is created as "a document in the technical field relating to **, **(index terms of third group), by using the specialized concept and technology relating to **, **(index terms of first group), and focusing on the perspective of **, **.(index terms of second group)".

Further, for instance, when there is no index term corresponding to the first group, the supporting documentation can be created as "a document in the technical field relating to **, **(index terms of third group), and focusing on the perspective of **, **(index terms of second group)" upon excluding the description relating to the index terms of the first group.

In each of the foregoing index term extraction devices, it is desirable that each of the similar documents is included in the documents-to-be-compared, the output means disposes.and outputs each index term by further transforming the function value of the appearance frequency in the documents-to-be-compared and taking the same as a first axis of a coordinate system and taking the function value of the appearance frequency in the similar documents as a second axis of the coordinate system, and the transformation is conducted such that a boundary line of an existable area of the index terms on the coordinate system, based on the similar documents being a subset of the documents-to-be-compared, approaches vertical line of the first axis.

When the source-documents-for-selection for selecting the similar documents are made to be the documents-to-be-compared, the similar documents will become a subset of the documents-to-be-compared. Accordingly, for example, the number of hit documents DF(P) when searching the documents-to-be-compared P with a certain index term will never be a number smaller than the number of hit documents DF(S) when searching the similar documents S with the same index term. Therefore, for instance, when the foregoing DF(P) is to be taken as the X axis on the orthogonal coordinate system and DF(S) is to be taken as the Y axis, since each index term will only be disposed in an area where $X \geq Y$, the boundary line of the existable area will be inclined in a 45 degree angle. Further, for example, when taking the logarithm IDF(P) of a value obtained by multiplying a total number N of documents-to-be-compared to the reciprocal of the foregoing DF(P) as the X axis of the orthogonal coordinate system, and taking the logarithm IDF(S) of a value obtained by multiplying a total number N' of similar documents to the reciprocal of the foregoing DF(S) as the Y axis, since each index term will only be disposed in an area where $Y \geq X - \ln(N/N')$ (here, a natural logarithm was used as the logarithm), the boundary line of the existable area will be inclined in a 45 degree angle.

According to the present invention, since the existable area when disposing the respective index terms on the coordinates will approach a rectangular shape, it will be even easier to visually comprehend in which area each index term is located.

In the foregoing index term extraction device, it is desirable that the transformation is given according to the function with the appearance frequency in the similar documents.

For example, when the coordinates of the points before transformation are set at (X, Y), the coordinates of the points after transformation may be (X', Y') = (X-Y + const, Y). Further, for instance, the coordinates of the points after transformation may be (X', Y') = (X $\times$ ($\alpha$ + $\beta_2$/2)/(Y + $\alpha$), Y).

Thereby, upon approaching the existable area of the index term coordinates to a rectangular shape, the displacement of the index term coordinates along the horizontal axis is made to differ based on the value of the vertical axis, and it is thereby possible to avoid the concentration of the index term coordinates near the origin of the coordinate system.

In each of the foregoing index term extraction devices, it is desirable to further include term frequency calculation means for calculating an appearance frequency, in the document-to-be-surveyed, of each index term in the document-to-be-surveyed, wherein the output means reflects and outputs the appearance frequency, in the document-to-be-surveyed, of each index term in the document-to-be-surveyed.

Thereby, the character of the document-to-be-surveyed can be analyzed by adding the weight of each index term in the document-to-be-surveyed.

The method of reflection, for instance, when disposing each index term on a coordinate system based on the function value of the appearance frequency in the documents-to-be-compared or in the similar documents, a method of displaying each index term using different colors based on the value of the appearance frequency (TF) in the document-to-be-surveyed of each index term in such document-to-be-surveyed, a method of displaying on a three-dimensional coordinate system with three-dimensional graphics taking the appearance frequency (TF) of each index term as the Z component, and so on may be adopted. Further, for example, a method of using so-called TFIDF and outputting positioning data of each index term may also be adopted.

Incidentally, the appearance frequency of each index term in the document-to-be-surveyed calculated with the term frequency calculation means may also be used in determining the degree of similarity of documents upon selecting similar documents.

In each of the foregoing index term extraction devices, it is desirable that when the output means, for each index term, takes the function value of the appearance frequency in the documents-to-be-compared as a first axis of a coordinate system and takes the function value of the appearance frequency in the similar documents as a second axis of the coordinate system, the output means disposes each index term so as to further approach a reference point that is the closest to the index term among a plurality of reference points on the coordinate system and outputs each index term on the coordinate system.

Thereby, since the position of each index term will approach one of the reference points, the display on the coordinates will be easier to see. In order to perform this kind of processing, it is desirable to employ technology applying a self-organization map (SOM).

In each of the foregoing index term extraction devices, it is desirable to further include: reference point setting means for setting coordinates of a plurality of reference points on a coordinate system; means for updating a prescribed number of times the coordinate data of a reference point that is closest to the index term among the plurality of reference points so as to further approach the index term when, for each index term, the function value of the appearance frequency in the documents-to-be-compared is taken as the first axis of the coordinate system and the function value of the appearance frequency in the similar documents is taken as the second axis of the coordinate system; and coordinate calculation means for calculating coordinates for disposing the index term based on the updated reference point; wherein the output means disposes and outputs each index term on the coordinate system based on the coordinates calculated with the coordinate calculation means.

Thereby, since the position of the index term will approach the reference point, the display on the coordinates will be easier to see.

With the character representative diagram of the present invention, for each index term in the document-to-be-surveyed, a function value of an appearance frequency in documents-to-be-compared to be compared with the document-to-be-surveyed is taken as the first axis of a coordinate system, and a function value of an appearance frequency in similar documents that are similar to the document-to-be-surveyed is taken as the second axis of the coordinate system.

Positioning of each index term can be visually comprehended from the position of the index terms disposed on the coordinate system, and, therefore, the character of the document-to-be-surveyed can be analyzed properly. In other words, the classification of the index terms of the first to third groups can be clearly comprehended at a glance based on the two-dimensional positioning on the coordinate system.

For instance, a planar orthogonal coordinate system may be used as the coordinate system, and an X axis (horizontal axis) is used as the first axis and a Y axis (vertical axis) is used as the second axis. Nevertheless, without limitation to the.above, a three-dimensional coordinate system may also be used and an index other than the above may take the Z axis.

Another character representative diagram of the present invention is a diagram having disposed therein index terms in the document-to-be-surveyed, wherein an index term of a first group having a low appearance frequency in documents-to-be-compared to be compared with the document-to-be-surveyed and in similar documents that are similar to the document-to-be-surveyed is disposed in a first area, an index term of a second group having a higher appearance frequency in the documents-to-be-compared in comparison to the index term of the first group is disposed in a second area, and an index term of a third group having a higher appearance frequency in the similar documents in comparison to the index term of the first group is disposed in a third area.

The character of the document-to-be-surveyed can be multilaterally analyzed by disposing each index term in the first area to third area based on the function value of the appearance frequency.

For example, the index terms of the first group includes terms (specialty terms) representing the specialty of the contents included in the document-to-be-surveyed or representing the concept directly linked thereto.

Further, for example, the second area includes terms (original concept terms) representing a concept that was not noted in similar fields even though the appearance frequency was high in the documents-to-be-compared.

Moreover, for example, the third group includes terms (similar documents prescribed terms) that characterize the similar documents. For instance, when technical documents are the target of survey, the user will be able to know the technical field of the similar documents and document-to-be-surveyed when viewing the index terms of this third group.

This character representative diagram may be a diagram where index terms are disposed on a two-dimensional coordinate system, or a diagram which displays the index terms by allocating the respective columns of a table for listing the index terms to the respective areas.

Still another character representative diagram of the present invention is a diagram having disposed therein index terms in the document-to-be-surveyed, wherein an index term of a third group having a lower appearance frequency in documents-to-be-compared to be compared with the document-to-be-surveyed in comparison to an index term of a fourth group having a high appearance frequency in the documents-to-be-compared and in similar documents that are similar to the document-to-be surveyed is disposed in a third area, an index term of a second group having a lower appearance frequency in the similar documents in comparison to the index term of the fourth group is disposed in a second area, and an index term of a first group having a lower appearance frequency in the similar documents in comparison to the index term of the third group and further having a lower appearance frequency in the documents-to-be-compared in comparison to the index term of the second group is disposed in a first area.

The character of the document-to-be-surveyed can be multilaterally analyzed by disposing each index term in the first area to third area based on the function value of the appearance frequency.

For example, the index terms of the third group can be evaluated as terms (similar documents prescribed terms) that characterize the similar documents. For instance, when technical documents are the target of survey, the user will be able to know the technical field of the similar documents and document-to-be-surveyed when viewing the index terms of this third group.

Further, for example, the index terms of the second group can be evaluated to be terms (original concept terms.) representing a concept that was not noted in similar fields even though the appearance frequency was high in the documents-to-be-compared.

Moreover, for example, the.index terms of the first group can be evaluated to be terms (specialty terms) representing the specialty of the contents included in the document-to-be-surveyed or representing the concept directly linked thereto.

Highly proper analysis can be performed since the third group and second group do not include index terms (general terms) of the fourth group having a high appearance frequency in both the documents-to-be-compared and in the similar documents.

In order to achieve the third object described above, the document characteristic analysis device of the present invention includes: input means for inputting a document-group-to-be-surveyed including a plurality of documents-to-be-surveyed, documents-to-be-compared to be compared with each document-to-be-surveyed, and related documents having a common attribute with the document-group-to-be-surveyed; index term extraction means for extracting index terms in each document-to-be-surveyed; third appearance frequency.calculation means for calculating a function value of an appearance frequency of each of the extracted index terms in the documents-to-be-compared; fourth appearance frequency calculation means for calculating a function value of an appearance frequency of each of the extracted index terms in the related documents; central point calculation means for calculating a central point in each document-to-be-surveyed based on the combination of the calculated function value of the appearance frequency in the documents-to-be-compared and the calculated function value of the appearance frequency in the related documents, regarding each index term; and output means for outputting data of the central point in each document-to-be-surveyed.

Thereby, the general, positioning of each document-to-be-surveyed included in the document-group-to-be-surveyed can be known in relation to the documents-to-be-compared and the related documents. For example, it will be possible to know whether the document-to-be-surveyed has general contents, original contents or specialized contents compared with the documents-to-be-compared and the related documents. Further, for instance, it will be possible to detect a document having general contents, original contents or specialized contents from the document-group-to-be-surveyed.

Moreover, it will also be possible to evaluate the trend of the overall document-group-to-be-surveyed. For instance, it will be possible to make an evaluation such as a document group with many documents having general contents, a document group with many documents having original contents, or a document group with many documents having specialized contents.

As the foregoing document-group-to-be-surveyed, for example, a document group of companies to be surveyed, or a document group of technical fields to be surveyed may be considered. In the former case, for instance, all documents in which the company to be surveyed is the applicant can be retrieved from all patent documents, or further narrowed based on IPC or the like and made to be the document-group-to-be-surveyed. In the latter case, for instance, all documents given a specific IPC can be retrieved from all patent documents, or further narrowed based on the filing period or the like and made to be the document-group-to-be-surveyed. It is desirable that the foregoing document-group-to-be-surveyed are included in the documents-to-be-compared and in the related documents, but such inclusion is not essential. Although the documents-to-be-compared need to be electronically retrievable data, there is no particular limitation on the contents thereof and, for instance, the documents-to-be-compared may be randomly extracted or fully extracted under certain conditions.from a certain document group. In a typical example, all patent documents (unexamined patent publications and so on) in a certain country during a certain period will be the documents-to-be-compared.

Although the foregoing related documents also need to be electronically retrievable data, there is no particular limitation on the selection method thereof. For example, when the document-group-to-be-surveyed are to be a document group of a company to be surveyed, the related documents maybe a document group of a plurality of companies selected by a user designation in the same industry as those of the company to be surveyed. The related documents may also be a document group of a plurality of companies selected in the same industry based on the company name and the industrial classification of the company to be surveyed. Moreover, documents belonging to the same technical field as those of a company to be surveyed may also be retrieved based on IPC (International Patent Classification) or the like. In addition, the document group may be even further narrowed under certain conditions from such document group of the same industry or the document group of the same field.

Further, for instance, when adopting a document group in a technical field to be surveyed as the document-group-to-be-surveyed, a document group in a broader technical field of a scope (that was designated and retrieved up to an IPC main group, for instance) than the document-group-to-be-surveyed belonging to a specific technical field (that was designated and retrieved up to an IPC subgroup, for instance) can be made to the related documents. Further, for example, when the document-group-to-be-surveyed are retrieved based on IPC and narrowed with a specific filing period, the related documents can be.retrieved with a longer filing period.

It is desirable that the related documents are selected from the documents-to be-compared, but this is not essential. When a document group in which documents of the company to be surveyed have been narrowed based on IPC is to be made the document-group-to-be-surveyed, it is preferable to use the related documents which were also retrieved or narrowed based on the same IPC.

Extraction of the index terms by the index term extraction means is conducted by.clipping words from the whole or a part of the document. There is no other limitation on the method of clipping the words, and, for instance, a method of extracting significant words excluding particles and. conjunctions via conventional methods or with commercially available morphological analysis software, or a method of retaining an index term dictionary (thesaurus) database in advance and using index terms that can be obtained from such database may be adopted.

As the appearance frequency in the document group of the index term, for instance, the number of document hits (document frequency; DE) when retrieving a certain index term among the document group is used, but this is not limited thereto, and; for example, the total.number of hits of the index term may also be used.

Further, it is desirable that the function value of the appearance frequency is a logarithm (IDF) of a value obtained by multiplying the total number of documents of the documents-to-be-compared or the related documents to the reciprocal of the appearance frequency.

The central point in each of the foregoing documents-to-be-surveyed, for instance, will be a point (provided "< >$_w$" is the average value in each document) given in the coordinates (<IDF(P)>$_w$, <IDF (S) >$_w$) , but it is not limited thereto.

It is desirable that the output means outputs the central point as a map disposed on a coordinate system. For instance; a planar orthogonal coordinate system is used as the coordinate system, and an X axis (horizontal axis) is used as the first axis and a Y axis (vertical axis) is used as the second axis. Nevertheless, without limitation to the above, a three-dimensional coordinate system may be used and an index other than the above may take the Z axis.

In the foregoing document characteristic analysis device, it is desirable that the calculation of the central point in each document-to-be-surveyed is conducted by calculating-the weighted average of the index term coordinates, which is an average value obtained by performing weighting to the coordinate value of each index term based on the function value of the appearance frequency in the documents-to-be-compared and the function value of the appearance frequency in the related documents regarding each index term with the ratio of term frequency value of each index term in relation to term frequency value total in the documents.

Thereby, weighting based on the term frequency can be reflected in the calculation of the central point.

In the foregoing document characteristic analysis device, it is desirable that data of the central point is output by extracting documents each having high similarity with the document-group-to-be-surveyed..and documents each having low similarity with the document-group-to-be-surveyed, among the document-group-to-be-surveyed.

Even when there are vast amounts of documents in the document-group-to-be-surveyed, the trend of the document-group-to-be-surveyed can be more easily comprehended by narrowing and outputting representative documents.

Determination of similarity of each document in relation to the document-group-to-be-surveyed is made, for instance, by calculating for each document d,

$$(1/d_N)\{DF(w_1, E0) + DF(w_2, E0) + \cdots + DF(w_{dN}, E0)\}$$

representing an average value of the number of hit documents DF ($w_i$, E0) upon searching the document-group-to-be-surveyed (E0) with index terms $w_i$ of each document d ($d_N$ represents the number of index terms in the document d). A document with a high average value is determined to be "similar", and a document with a low average value is determined to be "non-similar". As the.extraction method, for instance, a method of extracting a fixed number in the ascending order and descending order of the average value may be considered. Also as the extraction method, for example, a method of calculating Z through dividing the average value by the number of documents-to-be-surveyed and extracting documents that has Z greater than "average value of every Z + standard deviation of every Z" and extracting documents that has Z less than "average number of every Z - standard deviation of every Z" may be considered.

The document characteristic representative diagram of documents-to-be-surveyed of the present invention takes positioning of each of the documents-to-be-surveyed with respect to documents-to-be-compared to be compared with each document-to-be-surveyed as a first axis of a coordinate system and with respect to related documents having a common attribute with the documents-to-be-surveyed as a second axis of the coordinate system, wherein a coordinate value of each of the documents-to-be-surveyed in the coordinate system is set to be a central point, in each document-to-be-surveyed, of index term coordinate values each having as its component a function value of an appearance frequency in the documents-to-be-compared of each index term and a function value of an appearance frequency in the related documents of each index term.

Thereby, the trend.of the overall documents-to-be-surveyed can be analyzed.

Although the central point.in.each document of the documents-to-be-surveyed, for instance, will be a point (provided "< >$_w$" is an average value in each document) given in the coordinates (<IDF (P)>$_w$, <IDF (S)>$_w$), it is not limited thereto. Further, for example, this may also be an average value subject to weighting based on a ratio of the term frequency value of each index term against the term frequency value total in the document-to-be-surveyed.

The present invention is also an extraction method and analysis method including the same steps as those executed by the respective devices described above, as well as an extraction program and analysis program capable of causing a computer to perform the same processing steps as those executed by the respective devices described above. This program may be recorded in a recording medium such as a FD, CDROM or DVD, or be transmitted and received via network.

[Effect of the Invention]

Foremost, according to the present invention, it is possible to provide an index term extraction device capable of properly representing the character of a document-to-be-surveyed when it is provided.

Secondly, it is possible to provide an index term extraction device and character representative diagram enabling the multilateral analysis of the character of the document-to-be-surveyed.

Thirdly, it is possible to provide a document characteristic analysis device and document characteristic representative diagram enabling the analysis of the general positioning of a document-to-be-surveyed included in a document-group-to-be-surveyed, and the trend of the overall document-group-to-be-surveyed.

BRIEF DESCRIPTION OF THE DRAWINGS

FIG. 1 is a diagram showing a hardware configuration of a characteristic index term extraction device according to an embodiment of the present invention;

FIG. 2 is a diagram for explaining the details of the configuration and function of the characteristic index term extraction device;

FIG. 3 is a flowchart showing the operation of condition setting in the input device 2;

FIG. 4 is a flowchart showing the operation of the processing device 1;

FIG. 5 is a flowchart showing the output operation of the map, list and comment in the out put device 4;

FIG. 6 is a diagram showing a display example of an input condition setting screen of a document-to-be-surveyed;

FIG. 7 is a diagram showing a display example of an input condition setting screen of documents-to-be-compared;

FIG. 8 is a diagram showing a display example of an index term extracting condition setting screen and similar documents selecting condition setting screen;

FIG. 9 is a diagram showing a display example of an output condition setting screen;

FIG. 10 is a conceptual diagram for explaining the nature of a map;

FIG. 11 is a diagram showing a specific example of a map display of an unexamined patent publication pertaining to an "external auxiliary storage device" based on the characteristic index term extraction device of a first embodiment;

FIG. 12 is a diagram showing a specific example of the list output concerning the same document-to-be-surveyed as in FIG. 11;

FIG. 13 is a diagram showing a specific example of a map display of an unexamined patent publication pertaining to an "urgent message" based on the characteristic index term extraction device of the first embodiment;

FIG. 14 is a diagram showing a specific example of the list output concerning the same document-to-be-surveyed as in FIG. 13;

FIG. 15 is a diagram showing a specific example of a map display of ten (10) unexamined patent publications pertaining to "hair shaimpoo" based on the characteristic index term extraction device of the first embodiment;

FIG. 16 is a diagram showing a specific example of the list output concerning the same document-to-be-surveyed as in FIG. 15;

FIG. 17 is a diagram showing an example of a map reflecting TFIDF (S) based on the characteristic index term extraction device of a second embodiment;

FIG. 18 is a diagram showing an example of a map reflecting TF(d) based on the characteristic index term extraction device of the second embodiment;

FIG. 19 is a diagram showing an example of a TFIDF plan view based on the characteristic index term extraction device of the second embodiment;

FIG. 20 is a diagram showing an example of a DF plan view based on the characteristic index term extraction device of the second embodiment;

FIG. 21 is a diagram showing an example of a map output upon being subject to linear transformation based on the characteristic index term extraction device of a third embodiment;

FIG. 22 is adiagrain showing an example of a map output upon being subject to scale transformation based on the characteristic index term extraction device of the third embodiment;

FIG. 23 is a.diagram showing an example of a map output upon being subject to combined transformation based on the characteristic index term extraction device of the third embodiment;

FIG. 24 is a diagram showing another example of a map output upon being subject to combined transformation based on the characteristic index term extraction device of.the third embodiment;

FIG. 25 is a.diagram in which FIG. 10 was rewritten for explaining a fourth embodiment;

FIG. 26 is a diagram showing the initial values of reference points in example 1 of the fourth embodiment;

FIG. 27 is a diagram showing an example of a map obtained based on the transformation in example 1 of the fourth embodiment;

FIG. 28 is a diagram showing the initial values of reference points in example 2 of the fourth embodiment;

FIG. 29 is a diagram showing an example of a map obtained based on the transformation in example 2 of the fourth embodiment;

FIG. 30 is a diagram showing the initial values of reference points in example 3 of the fourth embodiment;

FIG. 31 is a diagram showing an example of a map obtained based on the transformation in example 3 of the fourth embodiment;

FIG. 32 is a diagram showing an example of a map obtained based on the transformation in example 4 of the fourth embodiment;

FIG. 33 is a diagram showing a hardware configuration of a document characteristic analysis device of a fifth embodiment;

FIG. 34 is a flowchart showing the operation of the processing device 1 of the document characteristic analysis device of the fifth embodiment;

FIG. 35 is a flowchart showing the operation of a map output in the output device 4 of the document characteristic analysis device of the fifth embodiment;

FIG. 36 is a diagram showing the document characteristic of a certain company based on the document characteristic analysis device of the fifth embodiment; and

FIG. 37 is a diagram showing the document characteristics of 3 companies belonging to the same industry based on the document characteristic analysis device of the fifth embodiment.

## BEST MODE FOR CARRYING OUT THE INVENTION

Embodiments of the invention are now explained in detail with reference to the drawings.

<1. Explanation of Vocabulary>

The vocabulary used in this Description is now defined or explained.

Document-to-be-surveyed d: A document or documents that is subject to the survey. For example, this would be a document or a document set of patent publications.

Documents-to-be-compared P: A document set to be compared with the document-to-be-surveyed d. For instance, all patent documents (such as unexamined patent publications) of a certain country during a certain period, or a document set randomly extracted therefrom. Although these are included in the document-to-be-surveyed d in the case explained below, they do not have to be included therein.

Similar documents S: A document set that is similar to the document-to-be-surveyed d. Although these include d in the case explained below, d does not have to be included therein. Further, although a case is explained where these are selected from the documents-to-be-compared P, they may be selected from a separate source-documents-for-selection.

The symbols d or (d), P or (P) and S or (S) attached to the constituent elements in the diagrams represent the document-to-be-surveyed, the documents-to-be-compared and the similar documents, respectively. These symbols are hereinafter also attached to the operation of the constituent elements for ease of differentiation. For example, "index term (d)" refers to the index term of the document-to-be-surveyed d.

"TF calculation" refers to the calculation of the term frequency, and is the calculation of the appearance frequency (term frequency) in a certain document of an index term included in such document.

"DF calculation" refers to the calculation of the document frequency, and is the calculation of the number of hit documents (document frequency) when searching a document group with an index term.

"IDF calculation" is the calculation of a reciprocal of a DF calculation result, or a logarithm of a value obtained by multiplying the number of documents of a search target document group P or S to the reciprocal.

Abbreviations are determined in order to simplify the following explanation.

d: Document-to-be-surveyed

p: Each Document belong to the documents-to-be-compared P

N: Total number of documents of the documents-to-be-compared P

N': Number of documents in the similar documents S

TF(d): Term frequency in d of the index term in d

TF(P): Term frequency in p of the index term in p

DF(P): Document frequency in P of the index term in d.or p

DF(S): Document frequency in S of the index term in d

IDF(P): Logarithm of [reciprocal of DF(P) x number of documents]: $\ln[N/DF(P)]$

IDF(S.): Logarithm of [reciprocal of DF(S) x number of documents] : $\ln[N'/DF(S)]$

TFIDF: Product of TF and IDF which is calculated for each, index term of document

Similarity (similarity ratio): Degree of similarity between the document-to-be-surveyed d and document p belonging to the.documents-to-be-compared P

Here, an index term is a so-called keyword, and is a word that is clipped from the whole or a part of the document. A method of extracting a significant word excluding particles and conjunctions via conventional methods or with commercially available morphological analysis software, or a method of retaining an index term dictionary (thesaurus) database in advance and using index terms that can be obtained from such database may be adopted.

Further, although a natural logarithm is used here as the logarithm, a common logarithm or the like may also be used.

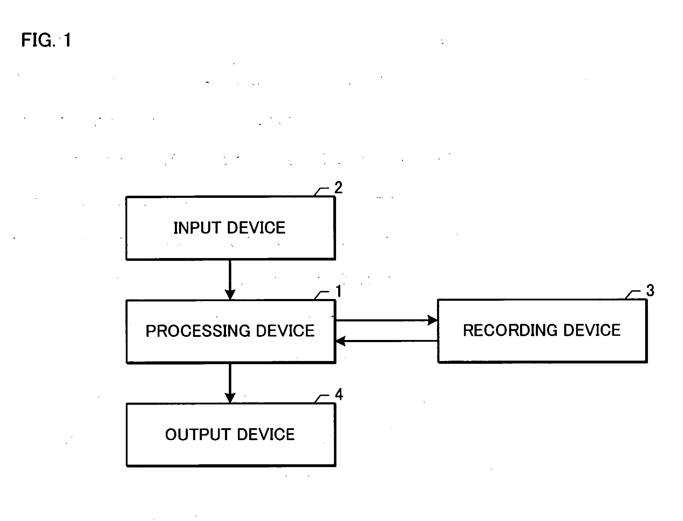

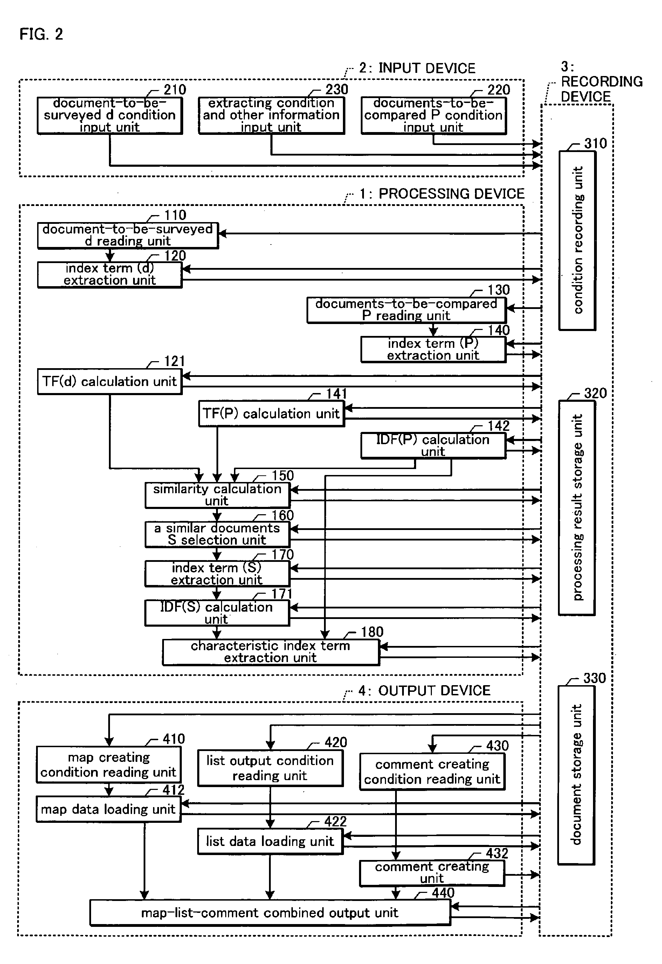

<2. Configuration of Index Term Extraction Device: FIG. 1, FIG. 2>

FIG. 1 is a diagram showing a hardware configuration of a characteristic index term extraction device according to an embodiment of the present invention.

As shown in FIG. 1, the characteristic index term' extraction device of this embodiment is configured from a. processing device 1 having a CPU (Central Processing Unit) and memory (recording device), an input device 2 which is an input means such as a keyboard (manual input unit), a recording device 3 which is a recording means for storing the conditions of the document data or the processing results of the processing device 1, and an output device 4 which is an output means for displaying the extraction results of the characteristic index terms as a map or a list.

FIG. 2 is a diagram for explaining the details of the configuration and function of the characteristic index term extraction device.

The processing device 1 is configured from a document-to-be-surveyed d reading unit 110, an index term (d) extraction unit 120, a TF(d) calculation unit 121, a documents-to-be-compared P reading unit 130, an index term (P) extraction unit 140, a TF(P) calculation unit 141, an IDF(P) calculation unit 142, a similarity calculation unit 150, a similar documents S selection unit 160, an index term (S) extraction unit 170, an IDF(S) calculation unit 171, a characteristic index term extraction unit 180, and so on.

The input device 2 is configured from a document-to-be-surveyed d condition input unit 210, a documents-to-be-compared P condition input unit 220, an extracting condition and other information input unit 2.30, and so on.

The recording device 3 is configured from a condition recording unit 310, a processing result storage unit 320, a document storage unit 330, and so on. The document storage unit 330 includes an external database and an internal database. An external database, for instance, refers to a document database such as IPDL (Industrial Property Digital Library) provided by the Japanese Patent Office, and PATOLIS provided by PATOLIS Corporation. An internal database refers to a database personally storing commercially available data such as a patent JP-ROM, a device for reading documents stored in a medium such as a FD (Flexible Disk), CDROM (Compact Disk), MO (Optical-magnetic Disk), and DVD (Digital Video Disk):, an OCR (Optical Character Reader) device for reading documents output on paper or handwritten documents, and a device for converting the read data into electronic data such as text.

The output device 4 is configured from a map creating condition reading unit 410, a map data loading unit 412, a list output condition reading unit 420, a list data loading unit 422, a comment creating condition reading unit 430, a comment creating unit 432, a map-list-comment combined output unit 440, and so on.

In FIG. 1 and FIG. 2, the communication means for exchanging signals and data among the..processing device 1, input device 2, recording device 3 and output device 4 may be realized through directly connecting via a USB (Universal Serial Bus) cable or the like, performing the transmission and reception via network such as a LAN (Local Area Network), or communicating via a medium storing documents such as an FD, CDROM, MO or DVD. A combination of a part or several of these may also be adopted.

Next, the function in the characteristic index term extraction device of an embodiment pertaining to the present invention is explained in detail with reference to FIG. 2.

<2-1. Details.of Input Device 2>

With the input device 2 of FIG. 2, the document-to-be-surveyed d condition input unit 210 sets the conditions for reading the document-to-be-surveyed d based on an input screen or the like. The documents-to-be-compared P condition input unit 220 sets the conditions for reading the documents-to-be-compared P based on an input screen or the like. The extracting condition and other information input unit 230 sets the index term extracting condition of the document-to-be-surveyed d and the documents to be compared P, TF calculation condition, IDF calculation condition, similarity calculation condition, similar documents selecting condition, map creating condition, list output condition, comment creating condition and so on based on an input screen or the like. These input conditions are sent to and stored in the condition recording unit 310 of the recording device 3.

<2-2. Details of Processing Device 1>

With the processing device 1 of FIG. 2, the document-to-be-surveyed d reading unit 110 reads the document to be surveyed from the document storage unit 330 based on the conditions of the condition recording unit 310. The read document-to-be-surveyed d is sent to the index term (d) extraction unit 120. The index term (d) extraction unit 120 extracts the index terms from the documents obtained with the document-to-be-surveyed d reading unit 110 based on the conditions of the condition recording unit 310, and stores this in the processing result storage unit 320.

The documents-to-be-compared P reading unit 130 reads the plurality of documents to be compared from the document storage unit 330 based on the conditions of the condition recording unit 310. The read documents-to-be-compared P is sent to the index term (P) extraction unit 140. The index term (P) extraction unit 140 extracts the index terms from the documents obtained with the documents-to-be-compared P reading unit 130 based on the conditions of the condition recording unit 310, and stores this in the processing result storage unit 320.

The TF(d) calculation unit 121 performs TF calculation to the processing result of the index term (d) extraction unit. 120 regarding the document-to-be-surveyed d stored in the processing result storage unit 320 based on the conditions of the condition recording unit 310. The obtained TF(d) data is stored in the processing result storage unit 320 or sent directly to the similarity calculation unit 150.

The TF(P) calculation unit 141 performs TF calculation to the processing result of the index term (P) extraction unit 140 regarding the documents-to-be-compared P stored in the processing-result storage unit 320 based on the conditions of the condition recording unit 310. The obtained TF(P) data is stored in the processing result storage unit 320 or sent directly to the similarity calculation unit 150.

The IDF(P) calculation unit 142 performs IDF calculation to the processing result of the index term (P) extraction unit 140 regarding the documents-to-be-compared P stored in the processing result storage unit 320.based on the conditions of the condition recording unit 310. The obtained IDF(P) data is stored in the processing result storage unit 320, sent directly to the similarity calculation unit 150 or sent directly to the characteristic index term extraction unit 180.

The similarity calculation unit 150 obtains, based on the conditions of the condition recording unit 310, the results of the TF(d) calculation unit 121, TF (P) calculation unit 141 and IDF(P) calculation unit 142 directly therefrom or from the processing result storage unit 320, and calculates the similarity of each document of the documents-to-be-compared P in relation to the document-to-be-surveyed d. The obtained similarity is added.as.similarity data to each document of the documents-to-be-compared P, and sent to the processing result storage unit 320 or sent directly to the similar documents S. selection unit 160.

The similarity calculation by the similarity calculation unit 150 is performed through calculation via TFIDF calculation or the like for each index term of each document, and the similarity of each document of the documents-to-be-compared P in relation to the document-to-be-surveyed d is thereby calculated. TFIDF calculation is the product of the TF calculation result and the IDF calculation result. The calculation method of similarity will.be described later in detail.

The similar documents S selection unit 160 obtains the similarity calculation result of the documents-to-be-compared P from the processing result storage unit 320 or directly from the similarity calculation unit 150, and selects the similar documents S based on the conditions of the condition recording unit 310. The selection of the similar documents S, for instance, is conducted by sorting the documents in order from the highest similarity, and selecting a required number indicated in the conditions. The selected similar documents S is output to the processing result storage unit 320 or output directly to the index term (S) extraction unit 170.

The index term (S) extraction unit 170 obtains the data input of the similar documents S from the processing result storage unit 320 or directly from the similar documents S selection unit 160, and extracts the index terms (S) from the similar documents S based on the conditions of the condition recording unit 310. The extracted index terms (S) are sent to the processing result storage unit 320 or sent directly to the IDF(S) calculation unit 171.

The IDF(S) calculation unit 171 obtains the index terms (S) from the processing result storage unit 320 or directly from the index term (S) extraction unit 170, and performs IDF calculation to the index terms (S) based on the conditions of the condition recording unit 310. The obtained IDF.(S) is stored in the processing result storage unit 320 or sent directly to the characteristic index term extraction unit 180.

The characteristic index term extraction unit 180 extracts the index terms (d), based on the conditions of the condition recording unit 310, from the processing result storage unit. 320 or directly from the results of the IDF (S) calculation unit 171 and the results of the IDF (P) calculation unit 142, in a required number as indicated in the conditions, or in a number selected from the calculation result based on the conditions. The index term/terms extracted here is/are referred to as the "characteristic index term/terms". The extracted characteristic index terms (d) are sent to the processing result storage unit 320.

<2-3. Details of Recording.Device 3>

In the recording device 3 of FIG. 2, the condition recording unit 310 records information such as the conditions obtained from the input device 2, and sends data to the processing device 1 or the output device 4, respectively, based on their requests. The processing result storage unit 320 stores the processing results of the respective constituent elements in the processing device 1, and sends necessary data based on the request from the processing device 1.

The document storage unit 330 stores and provides the necessary document data obtained from the external database or internal database based on the request from the input device 2 or processing device 1.

<2-4. Details of Output Device 4>

In the output device 4 of FIG. 2, the map creating condition reading unit 410, based on the conditions of the condition recording unit 310, reads the map creating condition and sends this to the map data loading unit 412. The list output condition reading unit 420, based on the conditions of the condition recording.unit 310, reads the list output condition, and sends this to the list data loading unit 422. The comment creating condition reading unit 430, based on the conditions of the condition recording unit 310, reads the comment creating condition, and sends this to the comment creating unit 432.

The map data loading unit 412, according to the conditions of the map creating condition reading unit 410, loads the processing result of the characteristic index term extraction unit 180 from the processing result storage unit 320. The loaded characteristic index term data is sent to the processing result storage unit 320 or sent directly to the map-list-comment combined output unit 440.

The list data loading unit 422, according to the conditions of the list output condition reading unit.420, loads the processing result of the characteristic index term extraction unit.180 from the processing result storage unit 320. The loaded list data is sent to the processing result storage unit 320 or sent directly to the map-list-comment combined output unit 440.

The comment creating unit 432, according to the conditions of the comment creating condition reading unit 430, prepares data for creating a comment of the evaluation on the document-to-be-surveyed d. The data is provided directly from an external input device such as a keyboard or OCR, or prepared in advance in an internal database of the document storage unit 3.30. The prepared comment data is sent to the processing result storage unit 320 or sent directly to the map-list-comment combined output unit 440.

The map-list-comment combined output unit 440 obtains the conditions and data output from the map data loading unit 412, conditions and data output from the list data loading unit 422, and conditions and data output from the comment creating unit 432 directly therefrom or from the processing result storage unit 320, and creates a field for compositely output the map-list-comment. Simultaneously, it also outputs the processing result of the characteristic index term extraction unit 180 so that it can be displayed on the map or output as a list or a comment, or so that a part thereof can be displayed, printed or stored as data.

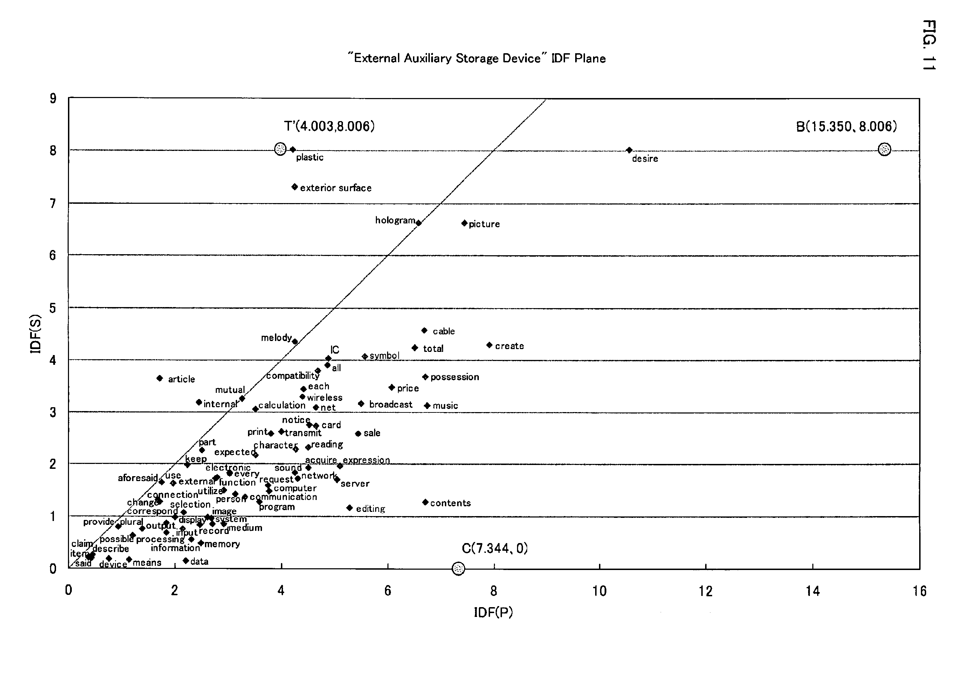

A characteristic example of the map output from the map-list-comment combined output unit 440 would be a map in which, with respect to each characteristic index term of the document-to-be-surveyed d extracted with the characteristic index term extraction unit 180, the result of the IDF(P) calculation unit 142 based on the documents-to-be-compared P is made to be a horizontal axis value, and the result of the IDF(S) calculation unit 171 based on the similar documents S that is similar to the document-to-be-surveyed d is made to be a vertical axis value, and these are distributed on a two-dimensional IDF(P)-IDF(S) plane (hereinafter referred to as the IDF plane). This will be explained in detail with reference to FIG. 11 onward. The character of the document-to-be-surveyed d can be perceived from the distribution status of the characteristic index terms represented on the IDF plane.

<3. Operation of Index Term Extraction Device>

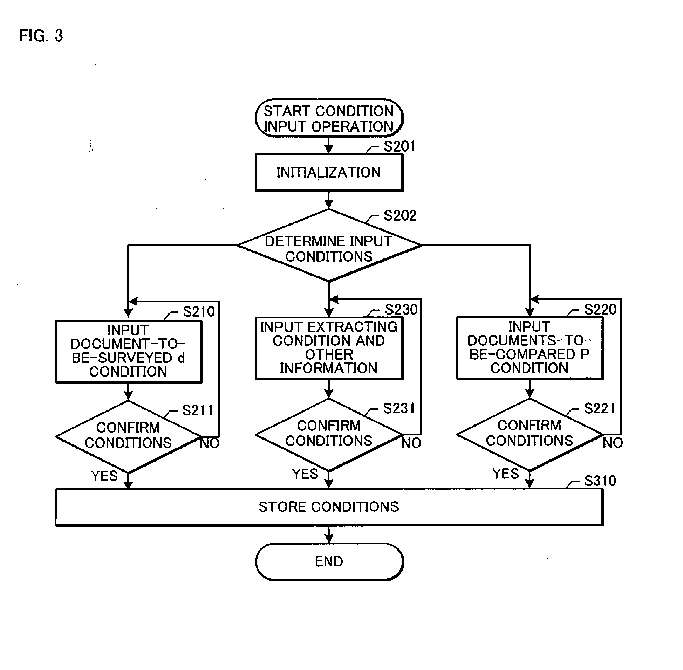

FIG. 3, FIG. 4 and FIG. 5 are diagrams for explaining the operation of the characteristic index term extraction device.

<3-1. Input Operation: FIG. 3>

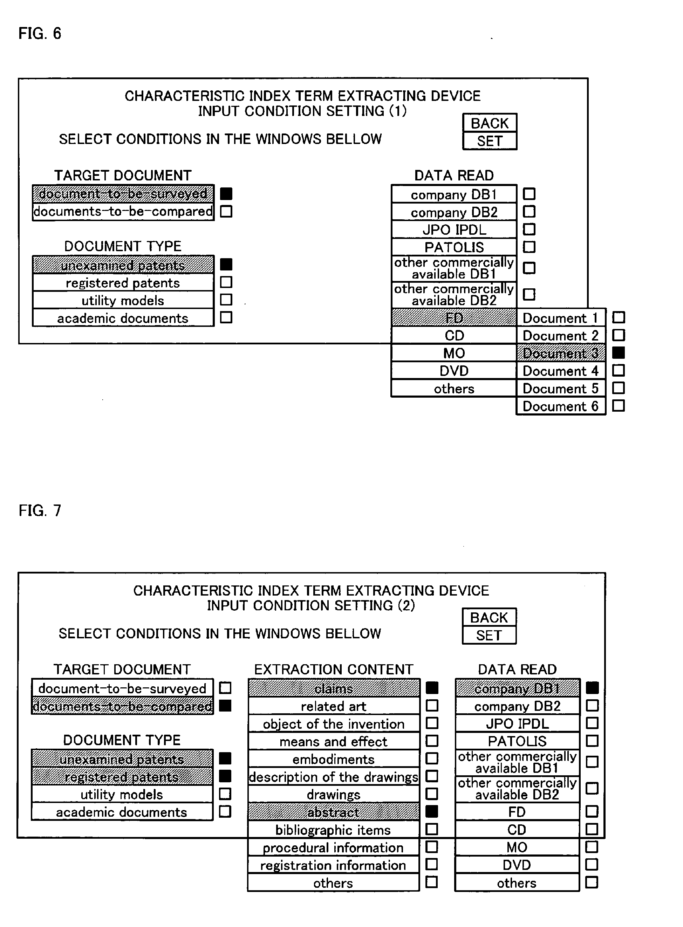

FIG. 3 is a flowchart showing the operation of condition setting in the input device 2. FIG. 6 to FIG. 9 described later illustrate.the operating screen for the condition setting to be input with the input device. Foremost after initialization (step S201), the input conditions are determined (step 5202). When the operator selects to input the conditions of the document-to-be-surveyed d, input of conditions.of the document-to-be-surveyed d is accepted'at the document-to-be-surveyed d condition input unit 210 (step S210). Next, the input conditions are confirmed by the operator with a display screen shown in FIG. 6, and "Set" is selected on the screen if the input conditions are correct. Thus, the input conditions are stored in the condition recording unit 310 (step S310). Since "Back" will be selected if the input conditions are incorrect, the routine returns to step S210 (step S211).

Meanwhile, when the operator selects to input the conditions of the documents-to-be-compared P at step S202, input of conditions of the documents-to-be-compared P is accepted by the documents-to-be-compared P condition input unit 220 (step S220). Next, the input conditions are confirmed by the operator with a display screen shown in FIG. 7, and "Set" is selected on the screen if the input conditions are correct. Thus, the input conditions are stored in the condition recording unit 310 (step S310). Since "Back" will be selected if the input conditions are incorrect, the routine returns to step S220 (step S221).

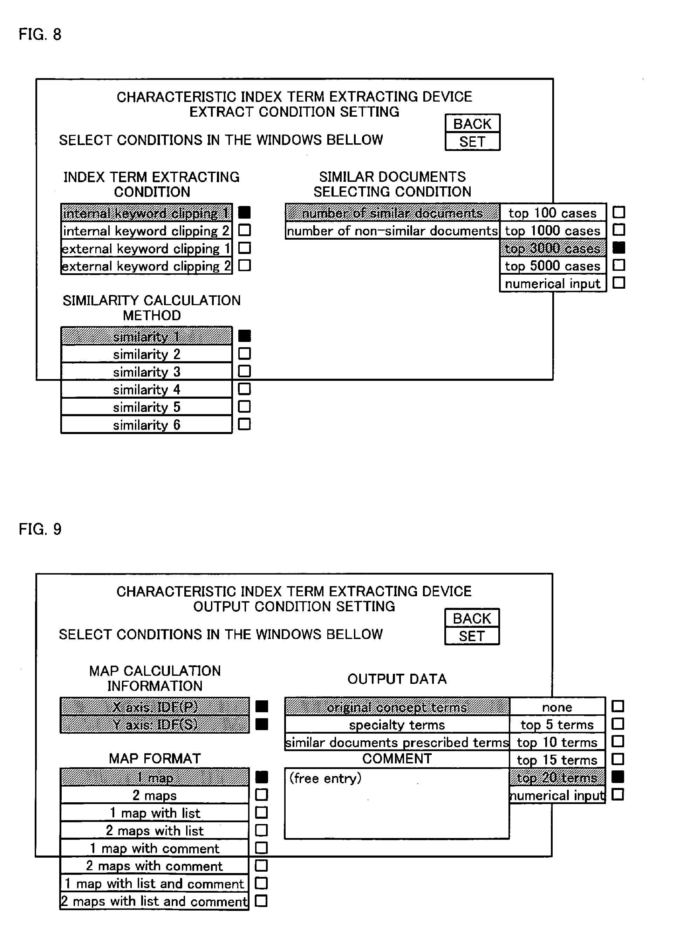

Further, when the operator selects to input extracting conditions or other conditions at step S202, input of extracting conditions and other conditions is accepted by the extracting condition and other information input unit 230 (step S230). Next, the input conditions are confirmed by the operator with a display screen shown in FIG. 8 or FIG. 9, and "Set" is selected on the screen if the input conditions are correct. Thus, the input conditions are stored in the condition recording unit 310 (step S310). Since "Back" will be selected if the input conditions are incorrect, the routine returns to step S230 (step S231). At step S230, the extracting condition of the index terms (d) and the selecting condition of the similar documents S, and the output condition of the characteristic index terms and the like are both set.

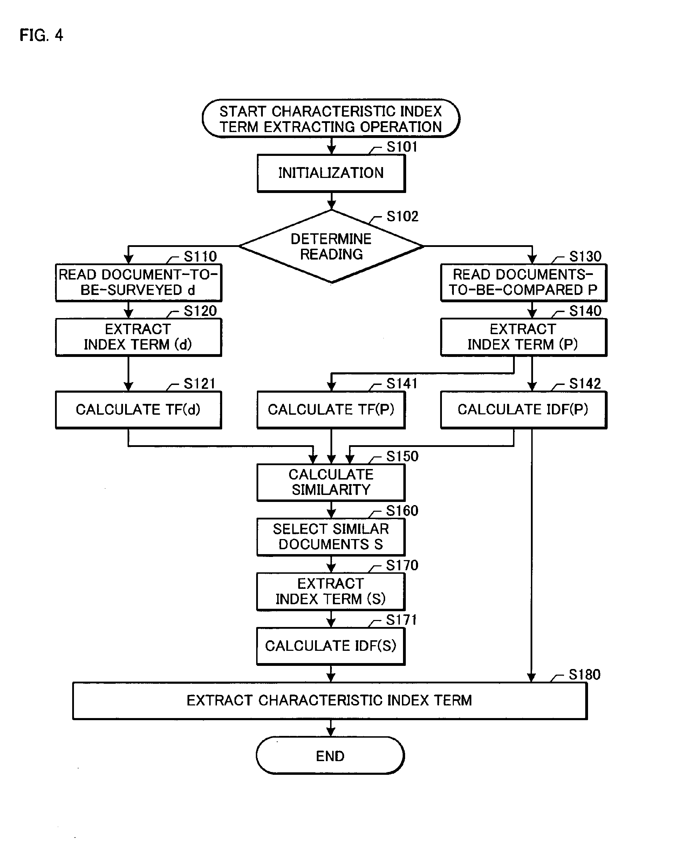

<3-2. Extracting Operation of Characteristic Index Term: FIG. 4>

FIG. 4 is a flowchart showing the operation of the processing device 1. Foremost after initialization (step S101), based on the conditions of the condition recording unit 310, documents to be read from the document storage unit 330 are determined whether a document-to-be-surveyed d or documents-to-be-compared P-(step S102). When the document to be read is a document-to-be-surveyed d, the document-to-be-surveyed d reading unit 110 reads the document-to-be-surveyed from the document storage unit 330 (step S110). Next, the index.term (d) extraction .unit 120 extracts the index terms of the document-to-be-surveyed d (step S120). Subsequently, the TF(d) calculation unit 121 performs TF calculation to each of the extracted index terms (step S121).
Meanwhile, when the documents to be read are documents-to-be-compared P at.step S102, the documents-to-be-compared P reading unit 130 reads the documents-to-be-compared P (step S130). Next, the index term (P) extraction unit 140 extracts the index terms of the documents-to-be-compared P (step S140). Subsequently, the TF(P) calculation unit 141 performs TF calculation to each of the extracted index terms (step S141), and the IDF(P) calculation unit 142 performs IDF calculation thereto (step S142).
Next, the similarity calculation unit 150 performs similarity calculation based on the TF(d) calculation result output from the TF(d) calculation unit 121, the TF(P) calculation result output from the TF.(P) calculation unit 141, and the IDF(P) calculation.result output from the IDF(P) calculation unit 142 (step S150). This similarity calculation is executed by calling a similarity calculation module for calculating the similarity from the external recording unit 310 based on the conditions input from the input device 2.
A specific example of similarity calculation is as explained below. Here, assume that d is the document-to-be-surveyed, and p is a document in the documents-to-be-compared P. As a result of processing on these documents d and p, assume that the.index terms clipped from document d are "red", "blue" and "yellow". Further, assume that the index terms clipped from document p will be "red" and "white". In this case, the term frequency of the index term in document d will be TF(d), the term.frequency of the index term in document p will be TF(P), the document frequency of the index term obtained from the documents-to-be-compared P will be DF(P). Also assume that the total number of documents is 50. Here, for example, assume the following conditions:
[Table 1]

| | |
|---|---|
| Index term and TF(d) | red(1), blue(2), yellow(4) |
| Index term and TF(P) | red(2), white(1) |
| Index term and DF(P) | red(30), blue(20), yellow(45), white(13) |

The TFIDF(P) is calculated for each index term of each document in order to calculate the vector representation. The result, with respect to document vectors d and p, will be as follows:
[Table 2]

| | red | blue | yellow | White |
|---|---|---|---|---|
| d | $1 \times \ln(50/-30)$ | $2 \times \ln(50/20)$ | $4 \times \ln(50/45)$ | 0 |
| p | $2 \times \text{in}(50/30)$ | 0 | 0 | $1 \times \ln(50/13)$ |

If the function of the cosine (or distance) between these vectors d and p can be acquired, the similarity (or non-similarity) between the document vectors d and p can be obtained. Incidentally, greater the value of the cosine (similarity) between the vectors means that the degree of similarity is high, and lower the value of the distance (non-similarity) between vectors means that the degree of similarity is high. The obtained similarity is stored in the processing result storage unit 320 and also sent to the similar documents S selection unit 160.

Next, the similar documents S selection unit 160 rearranges the documents subject to the similarity calculation at step S150 in order of the similarity, and selects the similar documents S in a number along the conditions that have been set in the extracting condition and other information input unit 230 (step S160).

Next, at step S170, the index term (S) extraction unit 170 of the similar documents S extracts the index terms (S) of the similar documents S selected at step S160.

Next, the IDF(S) calculation unit 171 performs IDF calculation to the similar documents S with respect to each index term (d) (step S171).

Next, at step S180, the characteristic index terms are extracted based on the result of the IDF(S) calculation at step S171 and the result of the IDF(P) calculation at step S142.

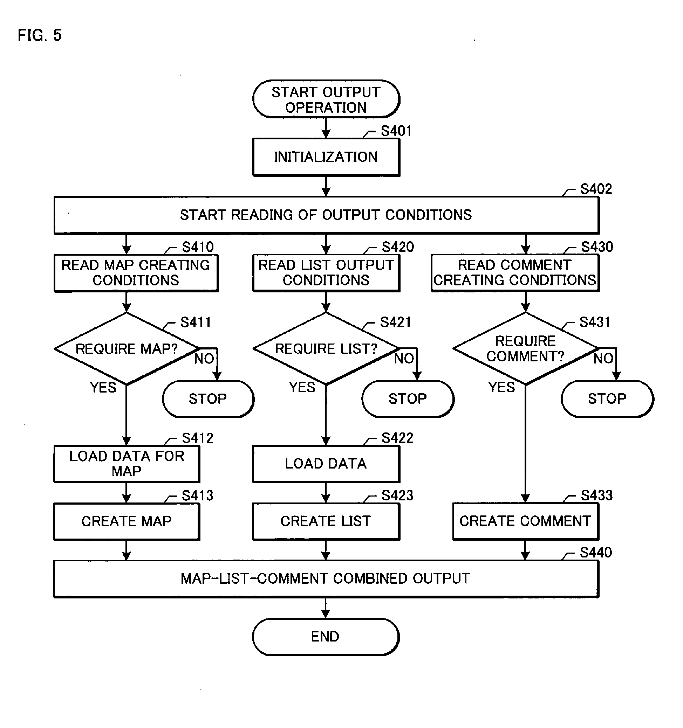

<3-3. Output Operation: FIG. 5>

FIG. 5 is a flowchart showing the output operation of the map, list and comment in the output device 4. Foremost after initialization (step S401), the reading of conditions from the condition recording unit 310 is commenced for each of a map creating condition, a list output condition and a comment creating condition (step S402).

When the map creating condition reading unit 410 of the output device reads the map creating condition from the condition recording unit 310 (step S410), if it is a condition requiring a map (step S411), map data is loaded from the processing result storage unit 320 to the map data loading unit 412 (step S412). Next, a map is created along the map creating condition of the map creating condition reading unit 410 (step S413), and this is sent to the map-list-comment combined output unit 440.

Meanwhile, when the list output condition reading unit 420 of the output device reads the list output condition from the condition recording unit 310 (step S420), if it is a condition requiring a list (step S421), list data is loaded from the processing result storage unit 320 to the list data loading unit 422 (step S422). Next, a list is created along the list output condition of the li.st output condition reading unit 420 (step S423), and this is thereafter sent to the map-list-comment combined output unit 440.

In addition, when the comment creating condition reading unit 430 of the output device reads the comment creating condition from the condition recording unit 310 (step S430), if it is a condition requiring a comment (step S431), the map-list-comment combined output unit 440 prepares a frame for creating the comment, and creates the comment in such frame with fixed phrase data prepared in advance through manual input via a keyboard or OCR or in the internal database of the document storage unit 330 (step S433), and this is thereafter sent to the map-list-comment combined output unit 440.

If the condition does not require displaying a map at step S411, or outputting a.list at step S421, or creating a comment at step S431, the routine ends at such time, and data is not sent to the map-list-comment combined output unit 440.

<3-4. Input Screen: FIG. 6 to FIG. 9>

FIG. 6 is a diagram showing a display example of an input condition setting screen of a document-to-be-surveyed.

FIG. 6 illustrates an example where "document-to-be-surveyed" is selected among the "document-to-be-surveyed" and the "documents-to-be-compared" in the "target document" window, then "unexamined patents" is selected among "unexamined patents," "registered patents," "utility models," "academic documents" and so on in the "document type" window, and then "FD" is selected among "company DB1," "company DB2," "JPO IPDL," "PATOLIS," "other commercially available DB1," "other commercially available DB2," "FD," "CD," "MO," "DVD," "others" and so on in the "data read" window, and.further "document 3" is selected among "document 1," "document 2," "document 3," "document 4," "document 5," "document 6" and so on of the "FD". The setting condition in this kind of input condition setting screen is input with the document-to-be-surveyed d condition input unit 210.

FIG. 7 is a diagram showing a display example of an input condition setting screen of documents-to-be-compared P. FIG. 7 illustrates an example where "documents-to-be-compared" is selected among the "document-to-be-surveyed" and the "documents-to-be-compared" in the "target document" window, then both "unexamined patents" and "registered patents" are selected among "unexamined patents," "registered patents," "utility models," "academic documents" and so on in the "document type" window, then both "claims" and "abstract" are selected among "claims", "related art", "object of the invention", "means and effect", "embodiments", "description of the drawings", "drawings", "abstract", "bibliographic items", "procedural information", "registration information", "others" and so on in the "extraction content" window, and then "company DB1" is selected from the aforementioned items of the "data read" window. The s.etting condition in this kind of input condition setting screen is input with the documents-to-be-compared P condition input.unit 220.

FIG. 8 is a diagram showing a display example of an index term extracting condition setting screen and similar documents selecting condition setting screen. FIG. 8 illustrates an example where "internal keyword clipping 1" is selected among "internal keyword clipping 1", "internal keyword clipping 2", "external keyword clipping 1", "external keyword clipping 2" and so on of the "index term extracting condition" window, then "similarity-1" is selected among "similarity 1", "similarity 2", "similarity 3", "similarity 4", "similarity 5", "similarity 6" and so on of the "similarity calculation method" window, then "number of similar documents" is selected among "number of similar documents", "number of non-similar documents" and so on of the "similar documents selecting condition" window, and then "top 3:000 cases" is selected among "top 100 cases", "top 1000 cases", "top 3000 cases", "top 5000 cases", "numerical input" and so on. The setting condition in this kind of input condition setting screen is input with the extracting condition.and other information input unit 230.

FIG. 9 is a diagram showing a display example of an output condition setting screen of the characteristic index term extraction device. FIG. 9 illustrates an example where "X axis: IDF(P)" is selected as the "X axis" and "Y axis: IDF (S)" is selected as the "Y axis" in the "map calculation information" window, then "1 map" is selected among "1 map", "2 maps", "1 map with list", "2 maps with list", "1 map with comment", "2 maps with comment", "1 map with list and comment", "2 maps with list and comment" and so on in the "map format" window, then "original concept terms" is selected among "original concept terms", "specialty terms", "similar documents prescribed terms" and so on of the "output data." window, and then "top. 20 terms" is selected among "none", "top 5 terms", "top 10 terms", "top 15 terms", "top 20 terms", "numerical input" and so on. The frame of the "comment" window has been left blank (free entry). Like this, the output condition is input.with the extracting condition and other information input unit 230.

<4. First Embodiment>

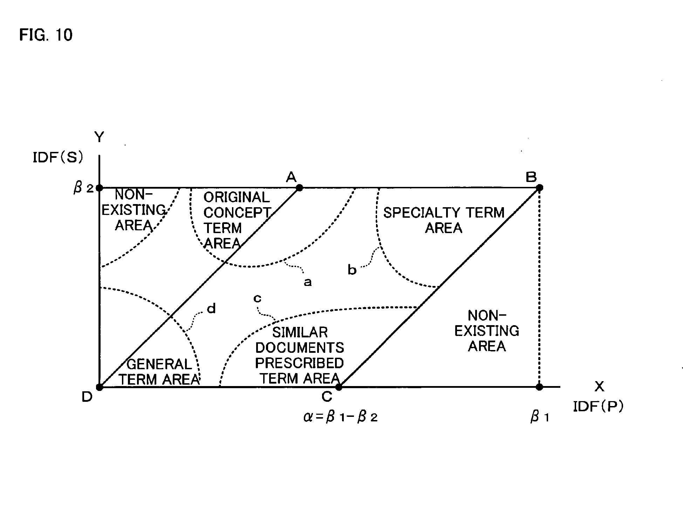

<4-1. Nature of Map: FIG. 10>

FIG. 10 is a conceptual diagram for explaining the nature of a map output with the index term extraction device of the first embodiment. This map is for representing, with a display means, the index terms (hereinafter referred to as a "characteristic index terms") extracted with the characteristic index term extraction unit 180 among the index terms (d) of the document-to-be-surveyed d being output with the map-list-comment combined output unit 440. This map, with respect to each of the characteristic index terms, takes the calculation result of the IDF(P) calculation unit 142 based on the documents-to-be-compared P as the horizontal axis value, and takes the calculation result of the IDF(S) calculation unit 171 based on the similar documents S as the vertical axis value, and disposes these on the IDF plane.

FIG. 10 is now explained. In FIG. 10, the X-Y plane is a plane created based on the X axis being a value of IDF(P) and the Y axis being a value of IDF(S). If the number of documents of the documents-to-be-compared P is N, and the number of documents of the similar documents S is N', maximum value $\beta_1$ of IDF(P) = ln N, and maximum value $\beta_2$ of IDF (S) =ln N'.
Assume that the origin of the coordinate system is D. Also assume that the intersecting point of a straight line where Y = X and a line where Y = $\beta_2$ is A. Also assume that the intersecting point of a line where Y = $\beta_2$ and a line where X= $\beta_1$ is B. Also assume that the.point in which a straight line where Y-$\beta_2$ = X-$\beta_1$ cuts across the X axis is C. Therefore, the quadrilateral ABCD is a parallelogram. When $\alpha$ = $\beta_1$-$\beta_2$ = ln(N/N'), coordinate values of the respective apexes of the quadrilateral ABCD will be D = ( 0, 0 ) , B = ($\beta_1$, $\beta_2$), A = ($\beta_2$, $\beta_2$) , C = ($\alpha$, 0), respectively.

Line segment AB is a straight line where Y = $\beta_2$, and line segment AD is a straight line where Y = X. Line segment BC is a straight line where Y-$\beta_2$ = X-$\beta_1$. Line segment DC is a straight line where Y = 0.

In FIG. 10, since the X coordinate is a value of IDF(P)-, the area where the X value is near 0 (near D) is an area where the index terms existing in nearly all of the documents-to-be-compared P are disposed. The area where the X coordinate value is near $\beta_1$ = ln N is an.area of index terms that hardly exist in the documents-to-be-compared P. The area where the X coordinate value is near $\alpha$ = ln(N/N') (near C) is an area of index terms that exist in documents, the number of which is corresponding to the number of documents N' of the similar documents S, in the documents-to-be-compared P. Meanwhile, since the Y coordinate is a value of IDF(S), the area where the Y value is near 0 (near D) is an area of the index terms existing in almost all of similar documents S. The area near the line segment AB where the Y coordinate is $\beta_2$ = ln N' is an area of index terms that hardly exists in the similar documents S-, and that exist almost only in the document-to-be-surveyed d.

In FIG. 10, an index term having a small document frequency DF(P) in the documents-to-be-compared P, namely a rare index term, has a large IDF(P). Therefore, such index term appears at the right side in FIG. 10. An index term having a large DF(P), namely a frequently used index term, has a small IDF(P). Therefore, such index term appears near the Y axis in FIG. 10. Accordingly, rarer the index term in the documents-to-be-compared P, the more rightward it appears, and the more frequently an index term is used in the documents-to-be-compared P, the more leftward it appears. On a two-dimensional plane, since there is a restriction based on the fact that the similar documents S is a subset of the documents-to-be-compared P, points of index terms only exist inside the area cut off with line segment BC on the right side of FIG. 10.

Similarly, an index term having a document frequency DF(S) value of only one (1) in the similar documents S, namely an index term only included in the document-to-be-surveyed d, has a large IDF(S). Therefore, such index term appears on the BA line in FIG. 10. When DF(S) is greater than 1, the/Index term will be positioned below the BA line. Contrarily, an index term existing in all documents of the similar documents S will be IDF(S) = 0. Therefore, such index term will appear on the DC line, namely on a line where y = 0 in FIG. 10. Accordingly, rarer the index term in S, the more upward it appears,' and the more frequently an index term is used in S, the more downward it appears.

Here, line segment BC is derived from the following. Since the similar documents S is a subset of the documents-to-be-compared P,

$$DF(P) \geq DF(S).$$

Further, based on the definition of IDF above,

$$DF(P) = N \exp[-IDF(P)],$$

$$DF(S) = N' \exp[-IDF(S)].$$

Based on these relational expressions, y = x-$\alpha$; that is, y-$\beta_2$ = x-$\beta_1$ is obtained as: the boundary line formula.

In the case of an index term included uniformly, not depending on the number of documents of the similar documents S, such index term will appear on the line segment DA (straight line Y = X) in FIG. 10. Here, the meaning of "uniformly" is as follows: When changing the number of documents $N_Q$ of the document group Q to be measured, Q realizing.

DF(Q) $N_Q$/k (where k is a constant greater than 1), is a document group having spatial uniformity, and an index term having this property is referred to an index term having spatial uniformity. When uniformity is hypothesized in relation to Q = P, S, a straight line where Y = X is obtained from

$$\ln k = \ln[N/DF(P)] = \ln[N'/DF(S)].$$

In practice, since many of the index terms will also frequently appear in the documents-to-be-compared P, which is a document group that is more enormous than the similar documents S, it is natural for the index terms to appear in the lower area of line segment DA. Only exceptional index terms will appear on the upper side of this line segment. Particularly among this, index terms that are not rare in the documents-to-be-compared P but which are rare in the similar documents S will appear in an area that is higher than roughly half the height of the line segment BA in FIG. 10. Based on this trend, the area near A can be referred to as an original concept term area.

In FIG. 10, index terms could exist in an area fairly outside the left side of line segment AD. However, when giving consideration to the.following points, analysis of the nature of the document-to-be-surveyed d will not be hindered even if such area is treated as a non-existing area of index terms: Since this area is an area that is distant from the original concept term area A, even if an index term does appear, it will be an extremely exceptional index term. Also; there is an existence limit line near the Y axis to be derived from the limitation of DF(S) ≥ DF(P) - N + N' where:

$$Y = -\ln(\gamma \exp(-x) - \gamma + 1), \text{ provided } \gamma = N/N',$$

it will be near this line. Still also, as an objective fact, when the similarity of the similar documents S is sufficiently high, an index term was not observed in this area. When combining these facts, this area will substantially be a non-existing area as a consequence of the above.

As described above, the characteristic index term extracted from the document-to-be-surveyed d has a lower document frequency in the documents-to-be-compared P if it is positioned at the farther right and has a lower document frequency in the similar documents S if it is positioned at the higher on the IDF plane in FIG. 10. Thus, since index terms having the following properties are disposed in each area shown in FIG. 10, it is possible to perceive the positioning and character of the document-to-be-surveyed d in the documents-to-be-compared P from the distribution status of points on the IDF plane.

Specialty term area b: Area where index terms having a low usage frequency in both the documents-to-be-compared P and similar documents S appear. In other words, this is an area where index terms describing highly specialized matters included in the document-to-be-surveyed d or concepts directly linked thereto appear. This is included in the first area of the present invention.

Original concept term area a: Area where index terms having a relatively high appearance frequency in the documents-to-be-compared P but show concepts that were not noted in similar fields appear. This is included in the second area of the.present invention.

Similar documents prescribed term area c: Area where index terms existing in nearly all documents of the similar documents S and also existing in documents, the number of which is corresponding to the number of the similar documents S, in the documents-to-be-compared P, appear. These index terms are therefore extremely natural for representing the nature of the similar documents S. For example, in the case where technical documents are to be surveyed, when viewing the similar documents prescribed te.rms, it will be possible to know the technical field of the similar documents S and document-to-be-surveyed d. This is included in the.third area of the present invention.

General term area d: Area where index terms that are frequently shown in both the documents-to-be-compared P and similar documents S appear. This is usually not too important when analyzing the character of the document-to-be-surveyed d in the comparison with the documents-to-be-compared P.

<4-2. Map Output Example 1: FIG. 11 (External Auxiliary Storage Device)>

FIG. 11 is a diagram showing a specific example of:a map display of an unexamined patent publication pertaining to an "external auxiliary storage device" as the document-to-be-surveyed d based on the characteristic index term extraction device of the first embodiment. This map corresponds to the character representative diagram of the present invention (the same applies to the following maps). Here, as the documents-to-be-compared P, roughly 4,640,000 registered or unexamined patent publications for the past 10 years are selected, claims and abstract are selected .as the extraction content, internal keyword clipping 1 (commercially available index term clipping tool) is selected as the index term extraction method, a method of calculating the TFIDF of each component of the document vector and calculating the cosine of both the document-to-be-surveyed d and documents-to-be-compared P is selected as the similarity calculation method, top 30.00. similar cases are selected as the selection of a similar documents S, and IDF in relation to documents-to-be-compared P for X axis and IDF in relation to similar documents S for Y axis are selected as the map calculation method, and 1 map is selected for the map output position.

From FIG. 11, it is possible to find characteristic index terms such as "picture", "hologram", "desire", "plastic" and "exterior surface" in the original concept term area as shown in FIG. 10, it is not possible to find any corresponding characteristic index term in the specialty term area b, and it is possible to find characteristic index terms such as "contents" and "editing" in the similar documents prescribed term area c.

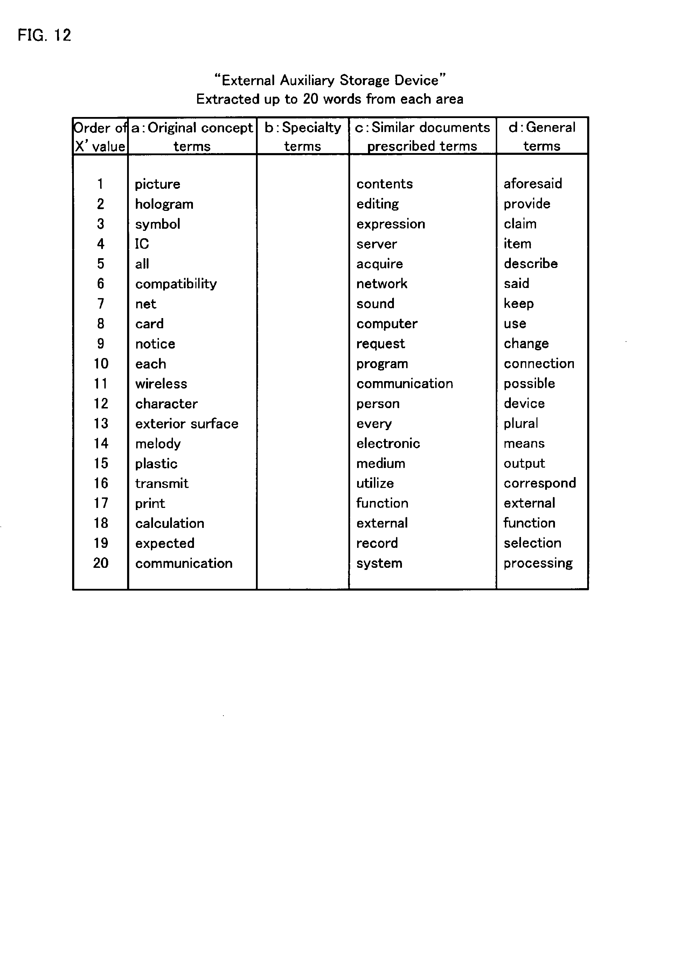

<4-3. List Output Example 1: FIG. 12 (External Auxiliary Storage Device)>

FIG. 12 is a diagram showing a specific example of the list output concerning the same document-to-be-surveyed as in FIG. 11. This list corresponds to the character representative diagram of the present invention (the same applies to the following lists).

The index terms to be output in the respective areas, for instance, can be sought as follows. When transformation M: $(X, Y) \rightarrow (X', Y')$ is given with respect to each area, a point where

$$(s/100) \ \mathrm{Exp}[Y'] < 2$$

is extracted in descending order of X'; provided, however, that this shall be limited to a point where

$$(p/100) \ \mathrm{Exp}[X'] \geq 2.$$

The foregoing transformation M (X' , Y') for extraction from each area is given in the following formulas:

Original concept term area a..... (X, X-Y),
Specialty term area b.................. (Y, Y-X+$\alpha$),
Similar documents prescribed term area c...(X, Y),
General term area d.................. (Y-X+$\alpha$, Y).

Provide, however, that $\alpha = \ln(N/N')$.

When extracting the similar documents prescribed terms, for example, index terms where the document frequency DF(P) ratio in relation to the number of documents N in the documents-to-be-compared P is p/2 (%) or less, and where the document frequency DF(S) ratio in relation to the number of documents N' in the similar documents S exceeds s/2 (%) will be extracted. In FIG. 12, the index-terms were extracted as p = s = 25.

Since the transformed values (X', Y') of the original concept terms, specialty terms and general terms have been respectively mapped near the similar documents prescribed term area c, the index terms of the respective areas can be extracted by using similar extracting conditions.

Incidentally, the extracting condition is not limited to the above, and, for instance, assuming

$$PDF(w_i, P) = (p/100)Exp[X']-1,$$

$$PDF(w_i, S) = (s/100)Exp[Y']-1,$$

digitization is performed such as
when PDF $(w_i, P) \geq 1$,
$X'' = \ln PDF (w_i, P)$,
when $0 < PDF (w_i, P) < 1$,
$X'' = -1$,
when $PDF(w_i, P) \leq 0$,
$X'' = -2$
(perform the same digitization with Y'), and the same result can be obtained.upon extracting the index term of Y''<0 and X''$\geq$0 in descending order of the X'' value.

When reviewing the data output in FIG. 12, it is possible to find characteristic index terms such as "picture", "hologram", "create", "plastic" and "exterior surface" in the original concept term area a shown in FIG. 10, it is not possible to find any corresponding characteristic index term in the specialty term area b, and it is possible to find characteristic index terms such as "contents" and "editing" in the similar documents prescribed term area c.

As a result of reviewing the index terms characteristic for the unexamined patent publication relating to the "external auxiliary storage device" of the document-to-be-surveyed d from FIG. 11 or FIG. 12 in the characteristic index term extraction device of the present invention, it is clear that "plastic", "exterior surface", "hologram" and "picture" are the original concept terms, there are no specialty terms, and "contents" and "editing" are the similar documents prescribed terms.

Incidentally, although it is desirable that a plurality of index terms are output in each of the areas, only one may be output, and there may be 0 in an area where there are no corresponding index terms as in this output example.

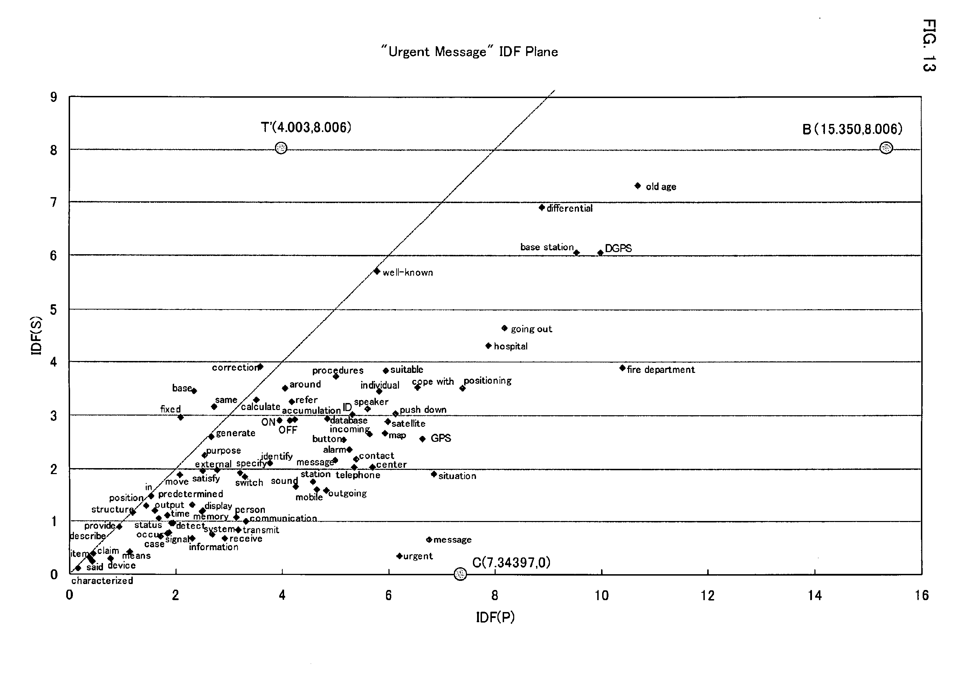

<4-4. Map Output Example 2: FIG. 13 (Urgent Message)>

FIG. 13 is a diagram showing a specific example of a map display of an unexamined patent publication pertaining to an "urgent message" as the document-to-be-surveyed d based on the same conditions as those for FIG. 11.

From FIG. 13, it is possible to find characteristic index terms such as "well-known", "differential", "old age", "base station" and "DGPS" in the original concept term area a, it is possible to find characteristic index terms such as "fire department" in a location slightly away from point B in the specialty term area b, and it is possible to find characteristic index terms such as "message", "urgent" and "situation" in the similar, documents prescribed term area c.

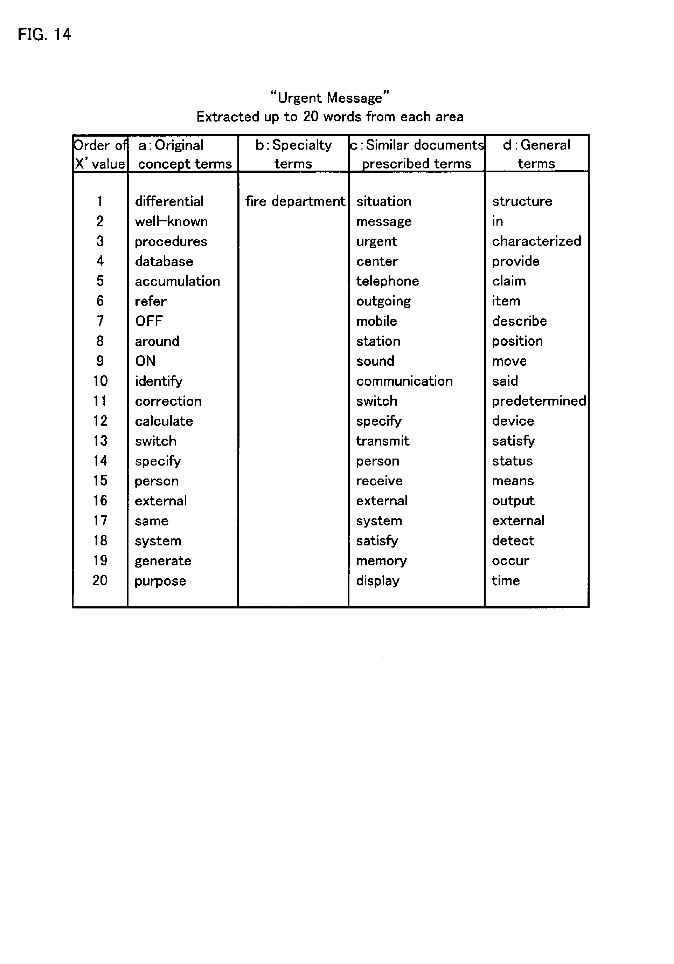

<4-5. List Output Example 2: FIG. 14 (Urgent Message)>

FIG. 14 is a diagram showing a specific example of the list output concerning the same document-to-be-surveyed as in FIG. 13. When reviewing the data output in FIG. 14, characteristic index terms such as "differential", "well-known" and "procedures" are included in the original concept term area a, characteristic index terms such as "fire department" are included in the specialty term area b, and characteristic index terms such as "situation", "message", "urgent", "center" and "telephone" are included in the similar documents prescribed term area c.

From FIG. 13 or FIG. 14, in the characteristic index term extraction device of the present invention, for the unexamined patent publication relating to "urgent message" of the document-to-be-surveyed d, "differential" and "well-known" are original concept terms, "fire department" is a specialty term, and "message", "urgent" and "situation" are similar documents prescribed terms.

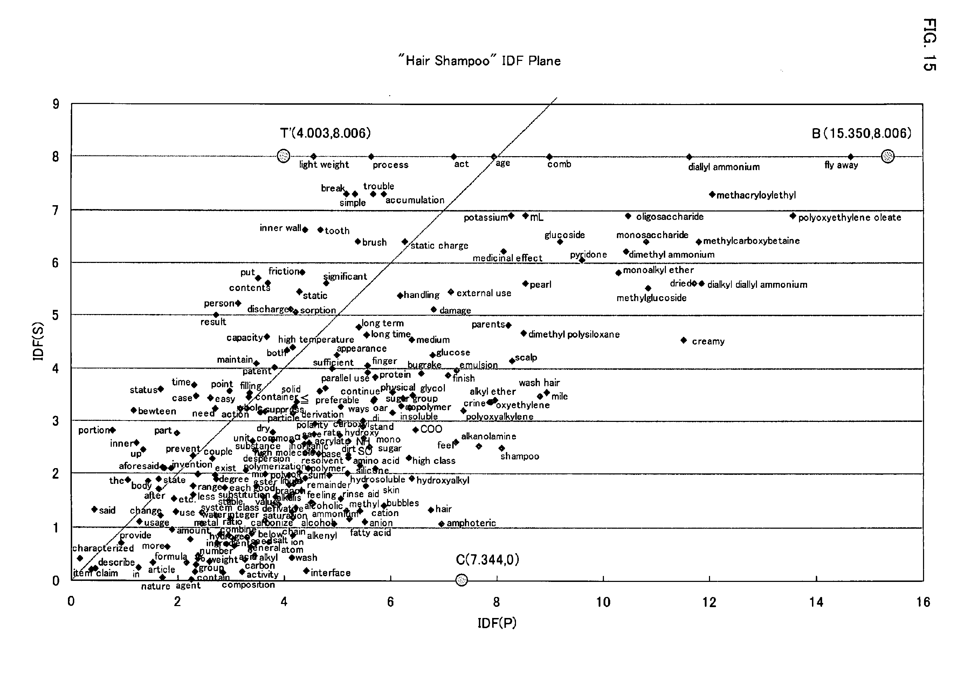

<4-6. Map Output Example 3: FIG. 15 (Hair Shampoo)>

FIG. 15 is a diagram showing a specific example of a map display when selecting ten (10) unexamined patent publications pertaining to "hair shampoo" as the documents-to-be-surveyed d based on the same conditions as those for FIG. 11.

From FIG. 15, it is possible to find characteristic index terms such as "age", "comb", "act", "ml", "potassium", "process", "accumulation" and "brush" in the original concept term area a, it is possible to find characteristic index terms such as "fly away", "diallyl ammonium", "methacryloylethyl" and "polyoxyethylene oleate" in the specialty term area b, and it is possible to find characteristic index terms such as "amphoteric", "hair", "anion", "alkenyl" and "fatty acid" in the similar documents prescribed term area c.

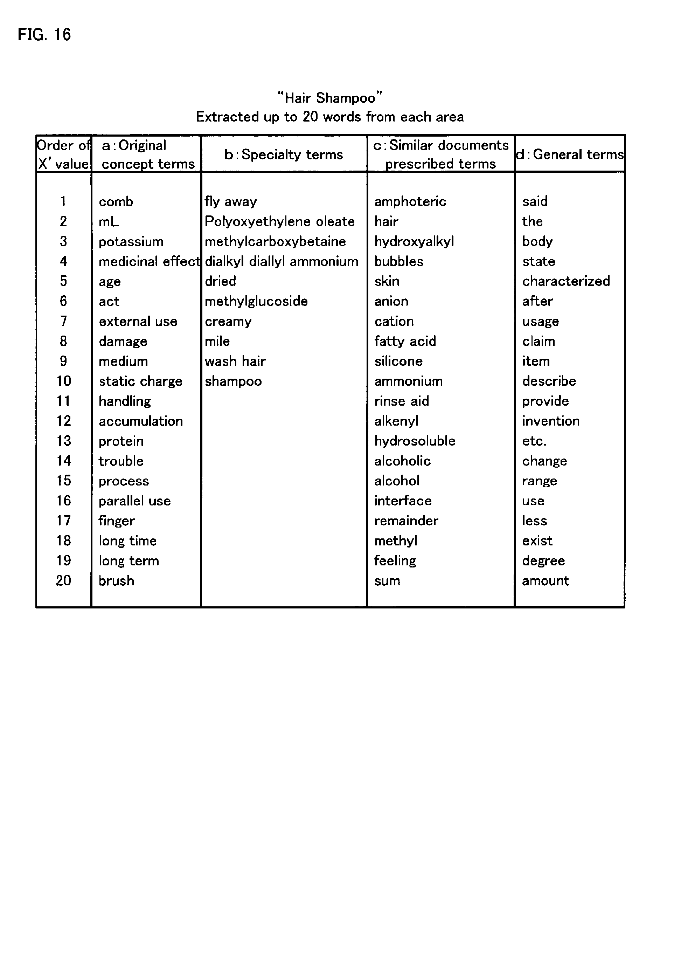

<4-7. List Output Example 3: FIG. 16 (Hair Shampoo)>

FIG. 16 is a diagram showing a specific example of the list output concerning the same documents-to-be-surveyed as in FIG. 15. When reviewing the data output in FIG. 16, it is clear that characteristic index terms such as "comb", "ml", "potassium", "medicinal effect", "age", "act" and "external use" are included in the original concept term area a, characteristic index terms such as "fly away", "polyoxyethylene oleate", "methylcarboxybetaine" and "diallyl ammonium" are included in the specialty term area b, and characteristic index terms such as "amphoteric", "hair", "hydroxyalkyl", "bubbles", "skin", "anion", "cation" and "fatty acid" are included in the similar documents prescribed term area c.

From FIG. 15 or FIG. 16, in the characteristic index term extraction device of the present invention, for the unexamined patent publications relating to "hair shampoo" of the documents-to-be-surveyed d, it is clear that "age" and "comb" are original.concept terms, "fly away" and "polyoxyethylene oleate" are specialty terms, and "amphoteric" and "hair" are similar documents prescribed terms.

As a result of using the characteristic index term extraction.device of the present, invention as described above, it will be possible to provide a patent map that properly represents the character of the document without a person having to read the contents of the document-to-be-surveyed.

<4-8. Comment Output>

The output of the characteristic index term extraction device of the present invention is not limited to the foregoing map or list. A comment for explaining the character of the document-to-be-surveyed d with a representative index term may also be automatically created and output. A comment is created, for instance, based on the several top index terms output and listed in FIG. 12, FIG. 14 or FIG. 16, as "a document in the technical field relating to **, **(index terms of similar documents prescribed term area c), by using the specialized concept and technology relating to **, **(index terms of specialty term area b), and focusing on the perspective of **, **(index terms of original concept term area a) ".

Further, for instance, when there is no index term corresponding to the specialty term area b, a comment can be created as "a document in the technical field relating to **, **(index terms of area c), and focusing on the perspective of **, ** (index terms of area a)" upon excluding the description relating to the specialty terms.

Further, for instance, when there is no index term corresponding to the original concept term area a, a comment can be created as "a document in the technical field relating to **, **(index terms of area c), and by using the specialized concept and technology relating to **, **(index terms of specialty term area b) upon excluding the description relating to the original concept terms.

Further, for instance, when there is no index term corresponding to the original concept term area a or the specialty term area b, a comment can be created as "a document in the technical field relating to **, **(index terms of area c) upon excluding the description relating to the original concept terms and specialty terms.

This comment may be output together with the foregoing map or table, or the comment may be output alone. Incidentally, although it is desirable that a plurality of index terms are output in each of the areas; only one may be output, and there may be 0 in an area where there are no corresponding index terms.

<5. Second Embodiment>

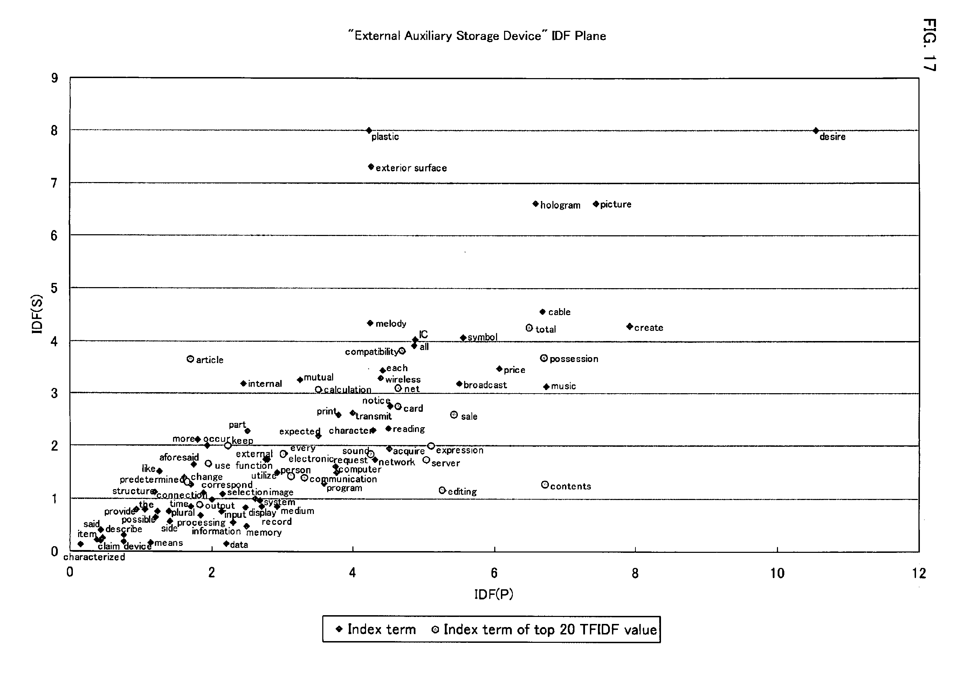

FIG. 17 to FIG. 20 are diagrams showing an example of a map output with the characteristic index term extraction device of the second embodiment. The specific configuration of the characteristic index term extraction device is basically the same as those in the first embodiment, and the detailed explanation thereof is omitted. Thus, only the primary differences will be explained.

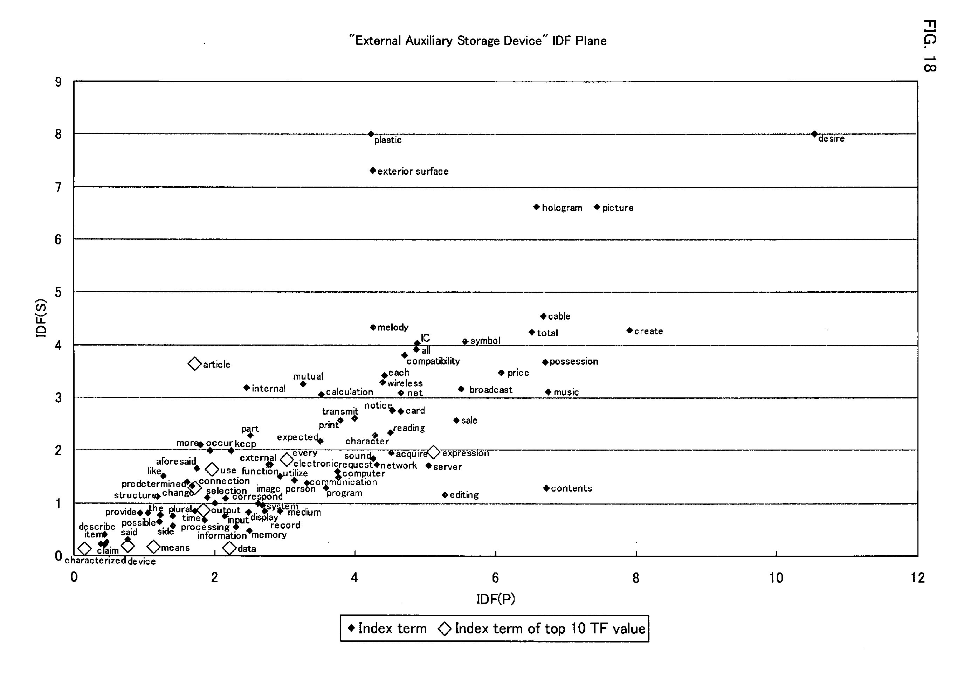

<5-1. TF or TFIDF Weighting: FIG. 17, FIG. 18>

In the IDF plan view shown in FIG. 11, it is not possible to know which index terms are being valued in the document-to-be-surveyed d merely by displaying a map of the extracted characteristic index term. Thus, the appearance frequency TF(d) of the characteristic index term in the document-to-be-surveyed d, or the TFIDF(S) which is the product of such appearance frequency TF(d) and IDF(S) is reflected in the positioning data of the index term. As.the method of reflection, the visualization of the valued characteristic index term is sought by changing the size (display size) of the characteristic index term at the existing points on the map, changing the shape of display, or changing the color thereof. As other methods of reflection, the appearance frequency TF(d) or TFIDF(S) of each index term may be a Z component, and a method of displaying three-dimensional coordinates with three-dimensional graphics can be considered.

Here, as one map:creating condition, information for automatically assigning sizes or shapes or colors in the order of appearance frequency to different characteristic index terms may be stored in the condition recording unit 310. Upon displaying the map, based on the instruction from the input device, the characteristic index term extraction unit 180 may be used to read such information, and the characteristic index term extraction unit 180 may further be used to perform the processing of such assignment and output. This map output signal is an appearance frequency reflection signal reflecting the TF(d) or TFIDF(S).

FIG. 17 and FIG. 18 show examples of performing such processing to the characteristic index terms illustrated in FIG. 11. FIG. 17 is a diagram showing an example of displaying a circle on characteristic index terms for the top 20 TFIDF values. FIG. 18 is a diagram showing an example of displaying a large diamond.mark to the characteristic index terms for the top 10 TF values.

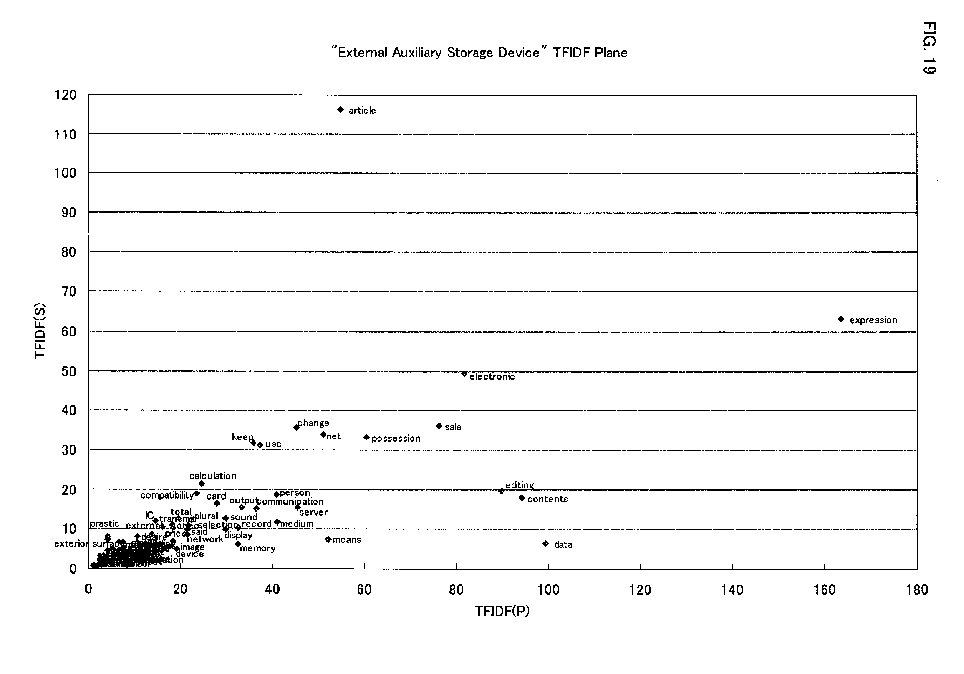

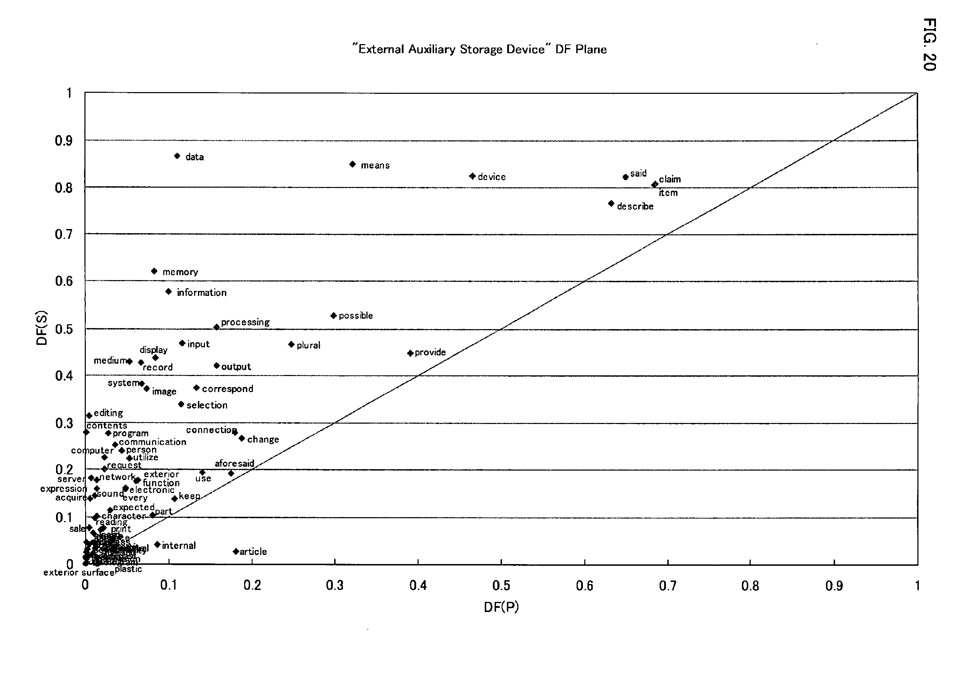

<5-2. TFIDF and DF Plan View: FIG. 19, FIG. 20>

FIG. 19 and FIG. 20 show examples where one unexamined patent publication relating to an "external auxiliary storage device" as the document-to-be-surveyed d is selected as in FIG. 11, and output upon changing the method of acquiring the function value of the appearance frequency of each index term in the document group from the method described in the first embodiment.

FIG. 19 is a diagram showing an example of taking the TFIDF (product of TF (d) and IDF(P)) in relation to the documents-to-be-compared P as the horizontal axis and taking the TFIDF (product of TF(d) and IDF(S)) in relation to the similar documents S as the vertical axis with respect to each index term (d) of the document-to-be-surveyed d, and distributing the result (hereinafter referred to as a TFIDF plan view).

When making an evaluation by adding TF(d) based on FIG. 19, "data", "contents" and "editing" can be evaluated as being similar documents prescribed terms, "article", "calculation", "compatibility", "IC" and "plastic" can be evaluated as being original concept terms. Nevertheless, since most of the points will gather around the origin, it is difficult to directly and easily argue the nature of the document-to-be-surveyed d from the distribution status of the points. As evident when comparing the display illustrated in FIG. 11 of the first .embodiment with FIG. 19, the IDF plan view of the first embodiment is -more preferable in easily and directly analyzing the nature of the document-to-be-surveyed d: As one method of avoiding the gathering of points near the origin, the logarithm of TFIDF may be disposed on the coordinate system.

FIG. 20 is a.diagram showing an example of taking the value obtained through dividing DF in the documents-to-be-compared P by the number of documents N as the horizontal axis and taking the value obtained through dividing DF in the similar documents S by the number of documents N' as the vertical axis with respect to each index term (d) of the document-to-be-surveyed d, and distributing the result (hereinafter referred to as a DF plan view). When making an evaluation based on DF of FIG. 20, "data", "memory", "information", "medium", "editing" and "contents" can be evaluated as being similar documents prescribed terms, "article", "internal" and "plastic" can be evaluated as being original concept terms. Nevertheless, in this case also, since most of the points will gather around the origin, it is difficult to directly and easily argue the nature of the document-to-be-surveyed d from the distribution status of the points. As evident when comparing the display illustrated in FIG. 11 of the first embodiment with FIG. 20, the IDF plan view in which the DF value was transformed with the inverse power of a logarithm from the first embodiment is more preferable in easily and directly analyzing the nature of the document-to-be-surveyed d. As one method of avoiding the gathering of points near the origin, the logarithm of DF itself may be disposed on the coordinate system.

The appearance frequency of the index term in the document group is not limited to the foregoing DF, and, for instance, the total number hits of index term upon searching the target document group with the index term may also be used.

<6. Third Embodiment: Modification of Drawings>

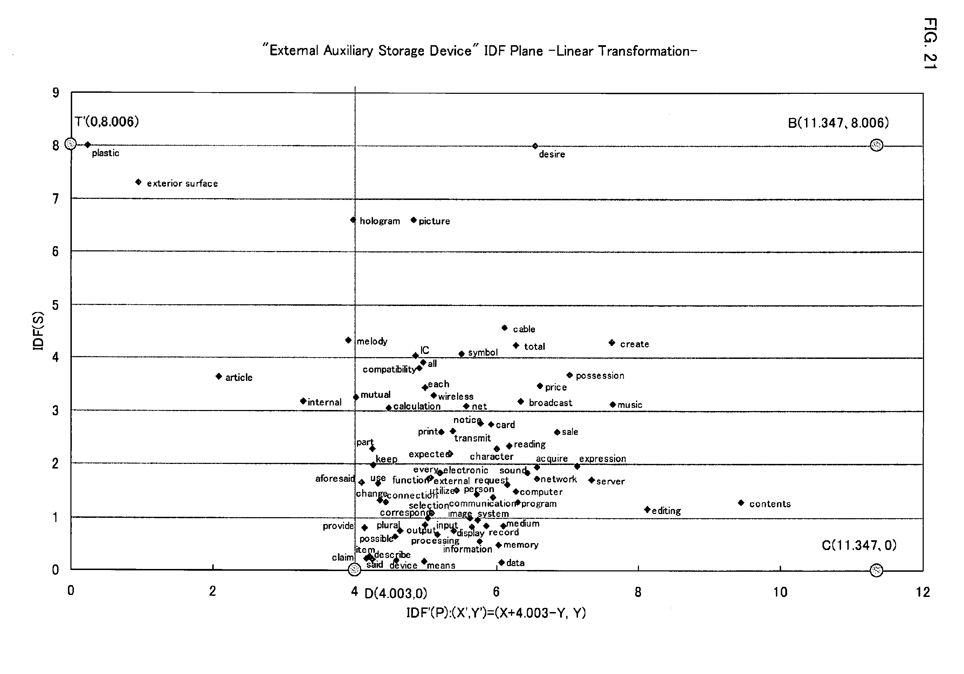

FIG. 21 to FIG. 24 are diagrams showing an example of a map output with the characteristic index term extraction device of the third embodiment. The specific configuration of the characteristic index term extraction device is basically the same as those in the first embodiment, and the detailed explanation thereof is omitted. Thus, only the primary differences will be explained.

A user who will evaluate the document-to-be-surveyed based on the foregoing first or second.embodiment will be able to perceive the character as the general trend of the document by observing the output result of the characteristic index term extraction device without having to read the contents of the document.

Nevertheless, when the observer is inexperienced, if the boundary line BC or the like is inclined against the X axis as shown in FIG. 11, FIG. 13 and FIG. 15 (only FIG. 11 may be shown as a representative example below), there are cases where it may be difficult to specify the area. In particular, when the similar documents S is a subset of the documents-to-be-compared P, for instance, the number of document hits DF(P) upon searching the documents-to-be-compared P with a certain index term can never be a number that is smaller than the number of document hits DF(S) upon searching the similar documents S with the same index term. Further, the number of documents N-DF(P) that do not hit when searching the documents-to-be-compared P with a certain index term will never be smaller than the number of documents N'-DF(S) that do not hit when searching the similar documents S with the same index term. Accordingly, for instance, when attempting to take the foregoing DF(P) as the X axis of the orthogonal coordinate system and attempting to take.the foregoing DF (S) as the Y axis, each index term.will only be disposed in an area where $X \geq Y$ and $N-X \geq N'-Y$. Thus, the boundary line of the existable area will be inclined in a 45 degree angle. Further, for example, with the IDF plan view of the first embodiment, since each index term will only be disposed in an area where $Y \geq X-\ln(N/N')$, the boundary line of the existable area will be inclined in a 45 degree arigle.

Thus, in order to transform the map into a map that can be observed more properly even when viewed by an inexperienced observer, in this embodiment, transformation is performed such that the terminal points A, B,C and D of the parallelogram in the map of FIG. 11 will be located.at the four corners of the rectangle ABCD. Thereby, as a result of interpreting the transformed horizontal axis X' to be an axis representing specialty and interpreting the transformed Y' to be an axis representing originality, even when the evaluator is inexperienced, he/she will.be able to evaluate the document-to-be-surveyed more properly from the transformed map.

Incidentally, even in the case of the DF plan view of FIG. 20 where the DF(P) value is uniformly divided by the number of documents N, although it is possible to make the boundary line of the existable area more vertical than 45 degrees, there will be a location with concentrated index term coordinates resulting from the significant concentration of the index term coordinates near the origin. Thus, as shown in transformation examples 1 to 3, it is desirable to conduct the transformation such that the displacement along the horizontal axis will differ based on the vertical axis value. Transformation to the value in transformation examples 1 to 3 is given based on the function with the Y value.

<6-1. Transformation Example 1: FIG. 21 (Linear Transformation)>

FIG. 21 is a diagram showing a transformation of the parallelogram ABCD of FIG. 11 into a rectangle ABCD without changing the conditions of FIG. 11. In particular, a line parallel to a straight line where Y = X was transformed into a line parallel to the Y axis while retaining the Y axis value. In other words, if the coordinates of the points before transformation are set to (X, Y), coordinates of the point after transformation (X', Y') will be represented by Formula 1.

$$(X', Y') = (X - Y + const, Y) \quad \ldots\ldots\ldots \quad Formula\ 1$$

However, when const = 0 in the formula, the original concept term area a among the parallelogram ABCD of FIG. 11 will be transformed into and housed in an area where X'<0. Meanwhile, when const = $\beta_2/2$ in the formula, such area will be transformed into and housed in an area where X'$\geq$0. FIG. 21 shows a case where const = $\beta_2/2$.

From FIG. 21, it is possible to find characteristic index terms such as "desire", "hologram", "picture", "plastic" and "exterior surface" in the original concept term area a, it is not possible to find any corresponding characteristic index term in the specialty term area b, and it is possible to find characteristic index terms such as "contents" and "editing" in the similar documents prescribed term area c.

When an evaluator of the document-to-be-surveyed observes the map represented as shown in FIG. 21, since the map is separated in a rectangle and not in a parallelogram as shown in FIG. 11, he/she can evaluate the characteristic index terms more properly.

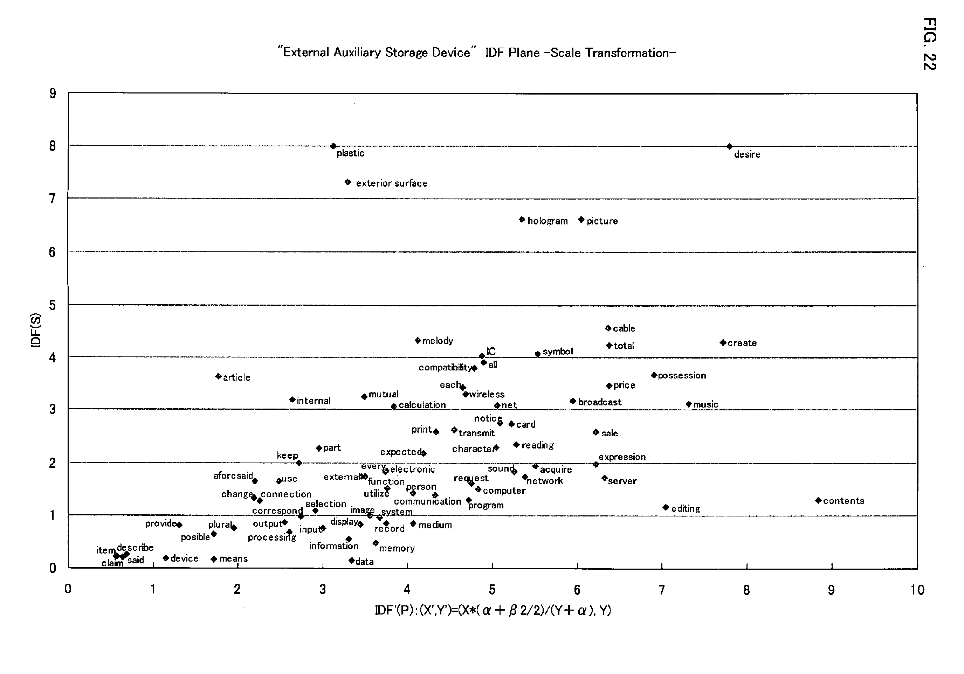

<6-2. Transformation Example 2.: FIG. 22 (Scale Transformation) >

FIG. 22 is a diagram showing an example where the X value of FIG. 11 was subject.to scale transformation in a ratio to the length along the X axis direction from the Y axis to the side BC without changing the conditions of FIG. 11.

In other words, if the coordinates of the points before transformation are set to (X, Y), coordinates of the point after transformation (X', Y') will be represented by Formula 2.

$$(X', Y') = (X \times (\alpha + \beta_2/2)/(Y + \alpha), Y) \quad \ldots\ldots \quad Formula\ 2$$

This corresponds to the special case of Formula 3 which is primary hyperbolic transformation.

$$(X', Y') = (\text{const} \times X/(Y + \alpha), Y) \quad \ldots\ldots\ldots \quad Formula\ 3$$

From FIG. 22, it is possible to find characteristic index terms such as "plastic", "exterior surface", "hologram" and "picture" in the original concept term area a, it is not possible to find any corresponding characteristic index term in the specialty term area b, and it is possible to find characteristic index terms such as "contents" and "editing" in the similar documents prescribed term area c.

In FIG. 22, although a non-existing area of the index term is remaining at the upper left part of the map, the boundary line of the existing area on the right side is vertical. Therefore, when an evaluator of a document-to-be-surveyed observes the map represented as shown in FIG. 22, he/she will be able to more properly evaluate the characteristic index terms of the similar documents prescribed term area c.

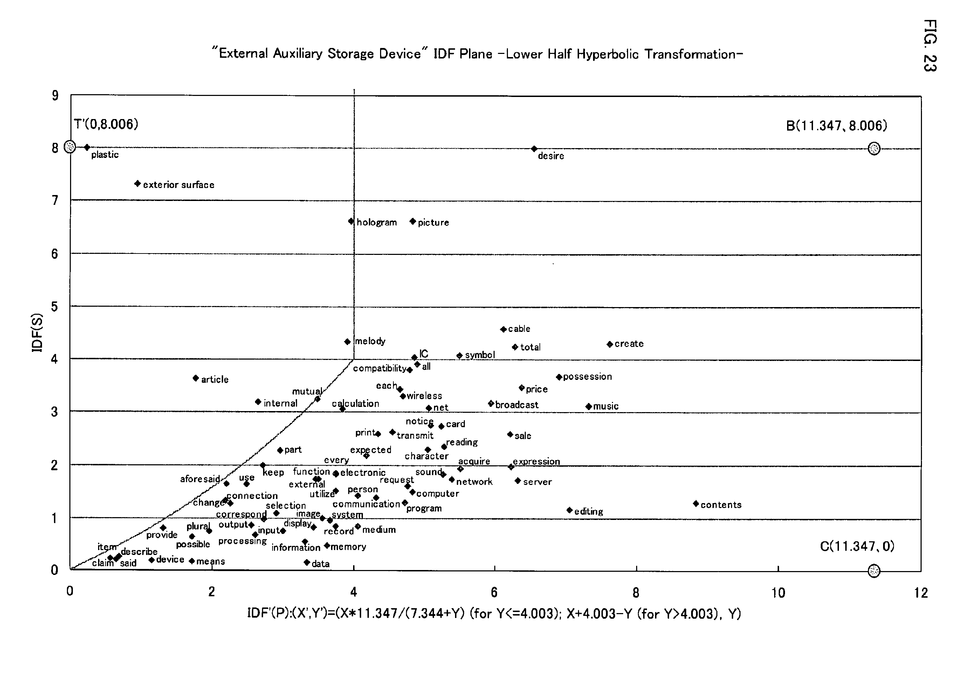

<6-3. Transformation Example 3: FIG. 23 (Lower Half Hyperbolic Transformation)>

FIG. 23 is a diagram showing an example where the formula of transformation example 1 is applied to the upper half of the parallelogram in the diagram and the formula of transformation example 2 is applied to the lower half thereof in order to perform another transformation (combined transformation) without changing the conditions of FIG. 11. In other words, if the coordinates of the points before transformation are set to (X, Y), coordinates of the point after transformation (X', Y') will be represented by Formula 4.

$$X' = \{X(\alpha + \beta_2/2)/(Y + \alpha)\} \times \Theta(\beta_2/2 - Y)$$

$$+ (X - Y + \beta_2/2) \times \Theta(Y - \beta_2/2)$$

However, when x>0, $\Theta(x) = 1$,
when x =0, $\Theta(x) = 1/2$,
when x<0 , $\Theta(x) = 0$

$$Y' = Y \quad\quad\quad\quad\quad\quad\quad\quad \ldots\ldots \quad Formula\ 4$$

From FIG. 23, it is possible to find characteristic index terms such as "picture", "hologram", "exterior surface", "plastic" and "desire" in the original concept term area a, it is not possible to find any corresponding characteristic index term in the specialty term area b, and it is possible to find characteristic index terms such as "contents" and "editing" in the similar documents prescribed term area c.

In FIG. 23, the non-existing area of the index term on the left and right sides of the map has been eliminated, and the boundaries on both.sides of the area are vertical to the X axis. Therefore, when an evaluator of a document-to-be-surveyed observes the map represented as shown in FIG. 23, he/she-will be able to more properly evaluate the characteristic index terms of the respective areas.

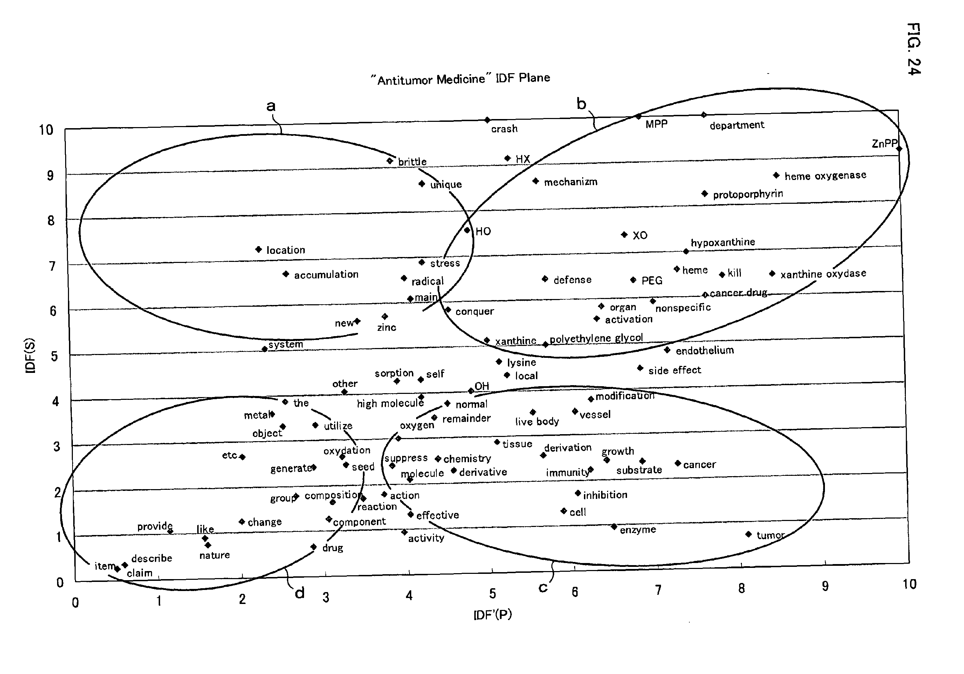

FIG. 24 shows a specific example of a map display when two unexamined patent publications concerning "antitumor medicine" are selected as the documents-to-be-surveyed d, and subject to the transformation (combined transformation) with the same method as shown in FIG. 23.

In FIG. 24 also, as with FIG. 23, the non-existing area of the index term on the left and right sides of the map has been eliminated, and the boundaries on both sides of the area are vertical to the X axis. Therefore, it will be possible to more properly evaluate the characteristic index terms of the respective areas.

FIG. 24 shows a frame of the positions of the original concept term area a, specialty term area b, similar documents prescribed term area.c, and general term area d. As a result of displaying the existing positions.of the respective areas on the map, the area to which each characteristic index term belongs can be displayed in a user-friendly manner.

The mode of displaying the existing positions of the respective areas is not limited to such frame, and may be of other display modes, or a specific name such as "original concept term area" may be displayed in addition to the display of the existing positions of each area. Further, to display the existing positions of each area on the map with the likes of a frame is not limited to the case of performing a transformation to the coordinate value as in the third embodiment, and this may also be conducted in the other embodiments.

In order to display and output the existing positions of each area on the map, for example, data of only the frame showing each area is retained beforehand in the condition recording unit 310, this is read with the map-list-comment combined output unit 440, and then overlapped with the map display of the characteristic index terms and then output. Incidentally, since there may be cases where the upper limit of the IDF(S) will differ or the size of the map will differ depending on the data to be processed, it is desirable to adjust the width and length of the frame data to match the obtained map. Further, when performing transformation to the coordinate value as in the third embodiment, it is desirable to prepare in advance frame data conforming to the coordinate position obtained by such transformation.

From FIG. 24, it is possible to find characteristic index terms such as "brittle", "unique" and "accumulation" in the original concept term area a, it is similarly possible to find characteristic index terms such as "ZnPP", "heme oxygenase" and "protoporphyrin" in the specialty term area b, and it is similarly possible to find characteristic index terms such as "tumor", "enzyme" and "cell" in the similar documents prescribed term area c.

<6-4. Transformation Example 4>

In addition to the foregoing transformation example, as a method of facilitating the observation of the map, for instance, a method of standardizing data may be adopted. In other words, when the coordinates of points before transformation are set to (X, Y), average of X is set to be m(X), and the standard deviation of X is $\sigma(X)$ (and also the same for Y), the coordinates, of points after transformation. (X', Y') will be represented by Formula 5.

$$(X',\ Y') = ((X-m(X))/\sigma(X);\ (Y-m(Y))/\sigma(Y))\ \ \cdots\cdots\cdots\ \text{Formula 5}$$

Based.on this transformation, since the X' axis and Y' axis will be disposed on the average value of X and Y, classification of the .4 areas can be facilitated.

<7. Fourth Embodiment: Application of Self-Organization Map>

A self-organization map (SOM: Self-Organization Map) is technology for clustering numerous data without any advance knowledge. This SOM technique is disclosed in, for instance, the thesis: Self-Organization Semantic Maps, H.Ritter and T.Kohoneh, Biol. Cybern. 61(1989)241-254, or the book: Self-Organizing Maps, T. Kohonen (Springer-Verlag, 1995).

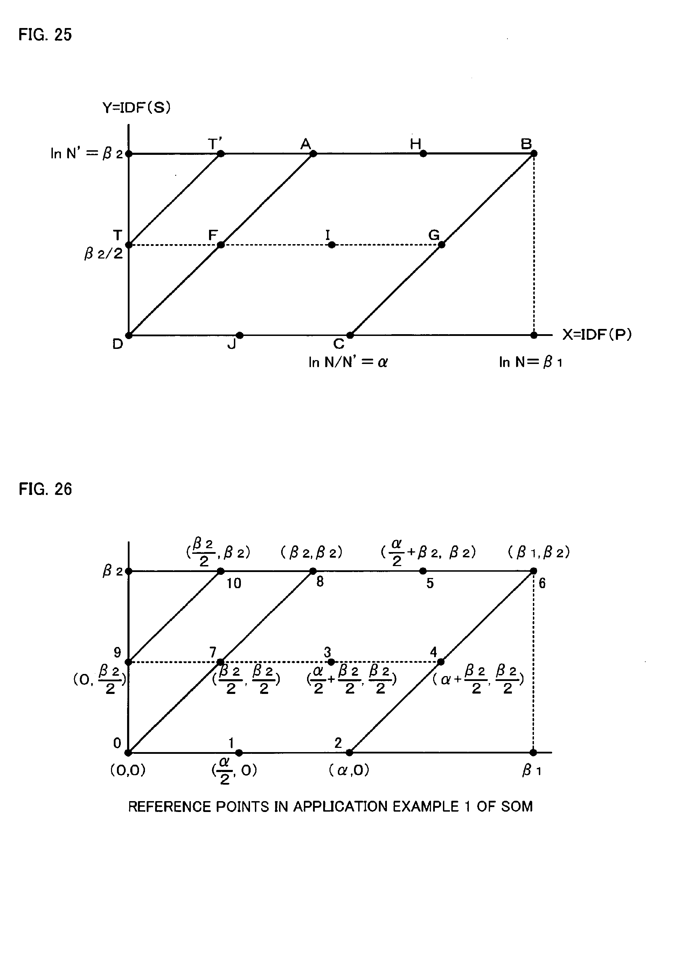

FIG. 25 is a diagram in which FIG. 10 was rewritten for facilitating the understanding of the following explanation. In FIG. 25, each coordinate value is the coordinate value obtained with the same method described in FIG. 11. In FIG. 25, the point $(0, \beta_2/2)$ is T, and the intersecting point of a straight line where $Y = X + \beta_2/2$ of an inclination value 1 passing through T and the extension of the straight line BA is T'. Further, the middle point of AD is F, and the middle point of BC is G. Moreover, the middle point of AB is H, the middle point of FG is I, and the middle point of DC is J.

Here, assume that there are $N_s$ ($i = 1, ..., N_s$) number of extracted characteristic index terms (keywords) $w_i$. These $N_s$ number of characteristic index.terms $w_i$ are distributed and scattered in the area inside the parallelogram ABCD or the pentagon BCDTT'. Nevertheless, it will be difficult to know to which area these index terms belong or do not belong, or to classify them at a glance. Further; since this parallelogram is of an oblique shape, it will be difficult for the evaluator to instantaneously perceive the character of the characteristic index terms properly.

Thus, the coordinates $(X_i, Y_i)$ of these characteristic index terms should be transformed into a map display that will enable the easy and proper perception of their characters. As one of such method, if the characteristic index terms distributed in an area near the respective apexes A, B, C and D of this inclined parallelogram could automatically be separated into 4 areas and represented on the map, the character of these characteristic index terms would be obvious at a glance, and, therefore, the evaluator will be able to properly perceive the character of the characteristic index terms. As one method of realizing this kind of map representation, the following transformation method applying SOM is employed.

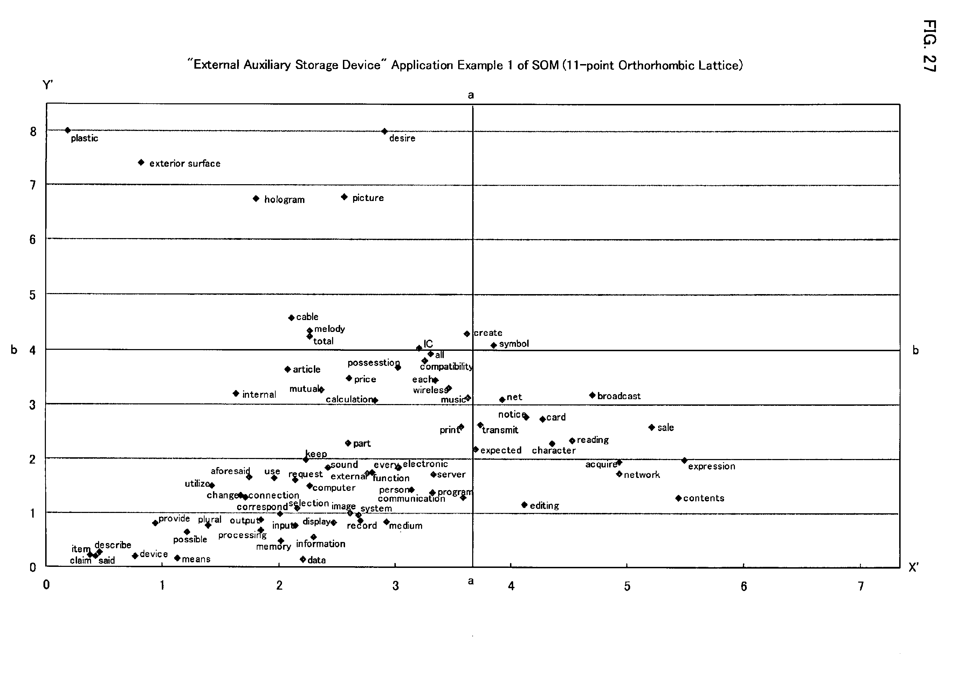

<7-1. Application.Example 1 of Self-Organization Map: FIG. 26, FIG. 27>

The coordinates $(X_i, Y_i)$ of the foregoing $N_s$ number of characteristic index terms are made to be the input vector $K(w_i)$ of this mapping processing. In this X-Y plane, an arbitrary number of reference points $U_j (W_i; t)$ are adopted as arbitrary coordinate values. However, in application example 1, the 11 points of $U_j$ (j: 0, 1, 2, 3, 4, 5, 6, 7, 8, 9, 10) are taken, and the reference points are considered at the coordinates of the 11-point orthorhombic lattice. The initial values of these 11 points are made to be the coordinate values $(m1_j, m2_j)$ corresponding to A, B, C, D, F, G, H, I, J, T, T' in FIG. 25, respectively.

FIG. 26 is a diagram showing an example of the initial values of a reference points in the application example 1 of the self-organization map. In the map.creating condition of the application example 1, as shown in FIG. 26, the initial values of the reference points $U_j(w_i; t)$, in correspondence with j: 0 to 10, are respectively 0(0, 0), 1($\alpha$/2, 0), 2($\alpha$, 0), 3($\alpha$/2 + $\beta_2$-/2, $\beta_2$/2), 4($\alpha$ + $\beta_2$/2, $\beta_2$/2), 5($\alpha$/2 + $\beta_2$, $\beta_2$), 6($\beta_1$, $\beta_2$), 7($\beta_2$/2, $\beta_2$/2), 8($\beta_2$, $\beta_2$), 9(0, $\beta_2$/2), 10($\beta_2$/2, $\beta_2$).

Once the initial values of the reference points are set, for each index term $w_i$ provided by input vector $K(w_i)$, the coordinate of the reference point $U_j(w_i; t)$ nearest from each input point is updated to a value so as to approach each index term $w_i$ based on the following updating formula. Incidentally, the parenthetical reference of foregoing $U_j(w_i; t)$ represents the dependency against each index term $w_i$ and the dependency against the number'of updating steps t. This kind of update is repeated $T_F$ times; for instance, 1000 times.

Based on the reference points $U_j (w_i; T_F)$ of the final step updated based on each index term $w_i$ as described above, a map $R_j = (r1_j(w_i), r2_j(w_i))$ is given. In particular, among the reference points $U_j (w_i; T_F)$ of the final step, the map $R_j$ given based on the reference point $U_j(w_i; T_F)$ nearest from the coordinates of each index term $w_i$ will become the coordinate output to the map.

The updating formula, for example, is represented by Formula 6.

$$\text{Updating Formula} \quad U_j(w_i; \; t+1) \; = \; U_j(w_i; t) \; + \; h(t) \, (K(w_i) - U_j(w_i; t))$$

$$\text{Learn Coefficient} \quad h(t) \; = \; \kappa(t) \; \text{Exp}[-|R_C(w_i; t) - R_j(w_i; t)| / (2\sigma(t)^2)]$$

$$\text{Learning Rate} \quad \kappa(t) \; = \; 1 \; - \; t/T_F$$

$$\text{Proximity Size} \quad \sigma(t) \; = \; \kappa(t)$$

$$\text{Nearest Reference Point} \quad c \; = \; \text{ArgMin}_j |K(w_i) - U_j(w_i; t)|$$

$$\ldots\ldots\ldots\ldots \quad \text{Formula 6}$$

Provided, however, t represents the dependency against the number of updating steps. Further, $\delta_{\{j, 0\}}$ is the Kronecker $\delta$, and when j = 0 this is $\delta_{\{j, 0\}} = 1$, and when j $\neq$ 0 this is $\delta_{\{j, 0\}} = 0$. Moreover, $\text{ArgMin}_j(x)$ is a function for returning j with the smallest x. Incidentally, the reason the proximity size was set to $\sigma(t) = \kappa(t)$ is because the detailed section of the $\sigma(t)$ function will not significantly influence the output results..of this transformation, and, therefore, simplification is thereby enabled.

Under these conditions, coordinate transformation is performed from the U coordinate system to R coordinate system. In other words, $U_j(w_i; T_F) = (m1_J (W_i; T_F), m2_j(w_i; T_F))$ is transformed to $R_j(w_i) (r1_j(w_i), r2_j(w_i))$. This transformation method can be performed in a number of ways, and, for instance, is performed as follows so that the boundary line of the existing area of the index terms will become vertical.

(1) In relation to every j

$$r2_j \; = \; m2_j(w_i; \; T_F)$$

(2) In relation to j = 0, 1, 2, 3, 4, 5, 6

$$r1_j = m1_j(w_i; T_F) - (1-\delta_{\{j, 0\}}) \times m2_j(w_i; T_F) + \gamma$$

(3) In relation to j = 7,8

$$r1_j = m1_j(w_i; T_F) - m2_j(w_i; T_F) + \alpha/4 + \gamma$$

(4) In relation to j = 9, 10

$$r1_j = m1_j(w_i; T_F) - m2_j(w_i; T_F) + \beta_2/2 + \gamma$$

............ Formula 7

Provided that $\gamma = \beta_2 - \alpha$.

Further, the j of $R_j$ shall be the j in which the distance between $K(w_i)$ and $U_j (w_i; T_F)$ has the smallest value. In addition, when it becomes $r1_j < 0$ in the foregoing formula, it is desirable to set $r1_j = 0$.

According.to the foregoing transformation, the map $R_j$ based on the nearest reference point $U_j$ will become new coordinate values (X', Y') mapped based on the coordinate values $(X_i, Y_i)$ of the characteristic index term.

As this kind of map forming condition, coordinate values of j number of reference points, number of updating steps, updating formula, learning coefficient and transformation condition from the U coordinate system to the R coordinate system are stored in the condition recording unit in advance, and, if these are read from the condition recording unit 310 based on the instructions from the input device in order to perform the operation for creating the map as described above, the coordinate value of the IDF coordinate system will ultimately be mapped to the coordinate value of the R coordinate system. The operation for creating this map is now explained.

The foregoing transformation processing of the fourth embodiment is performed with the characteristic index term extraction unit 180. In order to perform this transformation processing, foremost, based on the instructions from the input device 2, the updating formula is read from the condition storage unit 310.

Next, based on the instructions from the input device 2, the coordinates of the IDF plane, obtained by the extraction method as in the first embodiment, is read from the processing result storage unit 320 and then displayed. While viewing the display screen, $N_s$ number of characteristic index terms distributed on the IDF plane is designated in order to set the input value. Further, based on the instructions from the input device 2, the number of updates $T_F$ is set.

When these settings are completed, the operation of creating the map is started automatically or based on the operation start instructions from the input device, and the coordinate values $(X_i, Y_i)$ of $N_s$ number of characteristic index terms are ultimately mapped to the coordinate values of the R coordinates.

FIG. 27 is a diagram showing an example of a map obtained by performing the foregoing transformation to the respective coordinates of FIG. 11. As evident from FIG. 27, each coordinate is separated into 4 rectangular areas divided by two straight lines a-a and b-b.

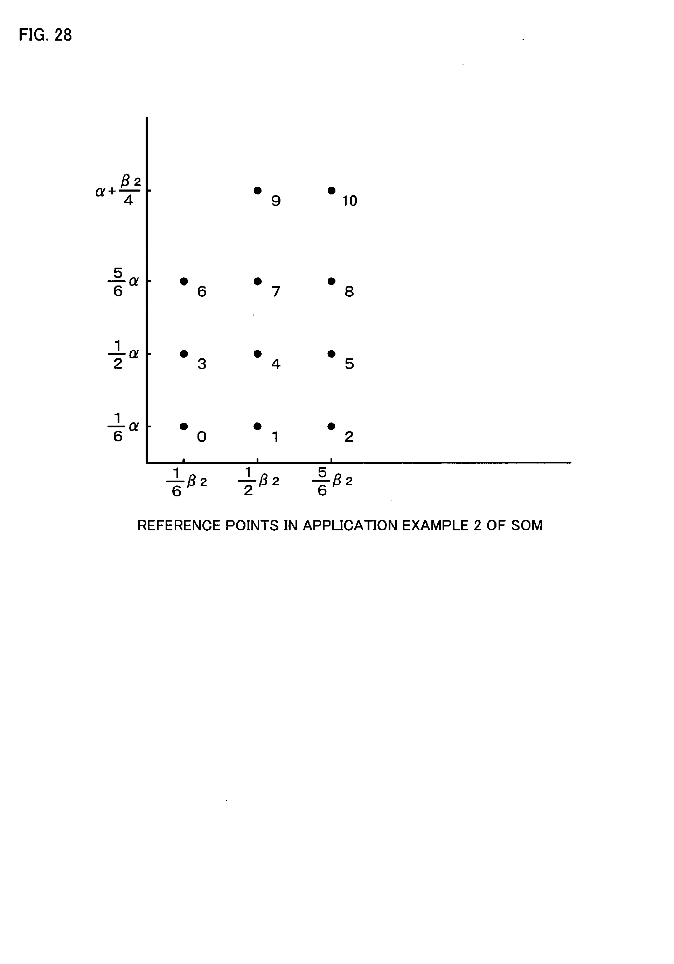

<7-2. Application Example 2 of Self-Organization Map: FIG. 28, FIG. 2.9>

This transformation is an example similar to the application example 1. In the application example 1, the coordinates $(X_i, Y_i)$ of the characteristic index terms were used as is as the input vector $K(w_i)$. However, in application example 2, transformation is performed in advance to the value of each coordinate, and,

$$K(w_i) = (Y_i, Y_i - X_i + \alpha)$$

is used as the input vector.

As a result of this.transformation, the input vector . $K(w_i)$ will be distributed in a rectangular area surrounded by a straight line where $Y = \alpha + \beta_2/2$, $X = \beta_2$, X axis and Y axis. Thus, the initial value of this reference point is also distributed in this area.

FIG. 28 is a diagram showing the placement of the reference points to be used in the application example 2, and these 11 reference points are given numbers from 0 to 10. The initial value of each reference point is the coordinate value of the 11 intersecting points of the straight lines passing through the respective points of $(\beta_2/6, 0)$, $(\beta_2/2, 0)$ and $(5\beta_2/6, 0)$ on the horizontal axis and the straight lines passing through the respective points of $(0, \alpha/6)$, $(0, \alpha/2)$, $(0, 5\alpha/6)$ and $(0, \alpha + \beta_2/4)$ on the vertical axis.

And then, according to the same updating formula as in the application example 1, the reference points $U_j(w_i; t)$ are updated $T_F$ number of times for each index term $w_i$.

The coordinate transformation from the U coordinates to the R coordinates $(r1_j(w_i), r2_j(w_i))$ is conducted as follows to every j so that the existing points of the output coordinates will be distributed in a rectangular area surrounded by straight lines where $X = \alpha + \beta_2/2$, $Y = \beta_2$, Y axis and X axis.

$$r1_j(w_i) = \alpha + \beta_2/2 - m2_j(w_i; T_F) - \delta_{\{j, 6\}}(\alpha/6 + \beta_2/4)$$

$$r2_j(w_i) = m1_j(w_i; T_F) \qquad \ldots \text{Formula 8}$$

According to the foregoing transformation processing, the map $R_j$ based on the nearest reference point $U_j$ will become new coordinate values (X', Y') mapped based on the coordinate values $(X_i, Y_i)$ of the characteristic index term.

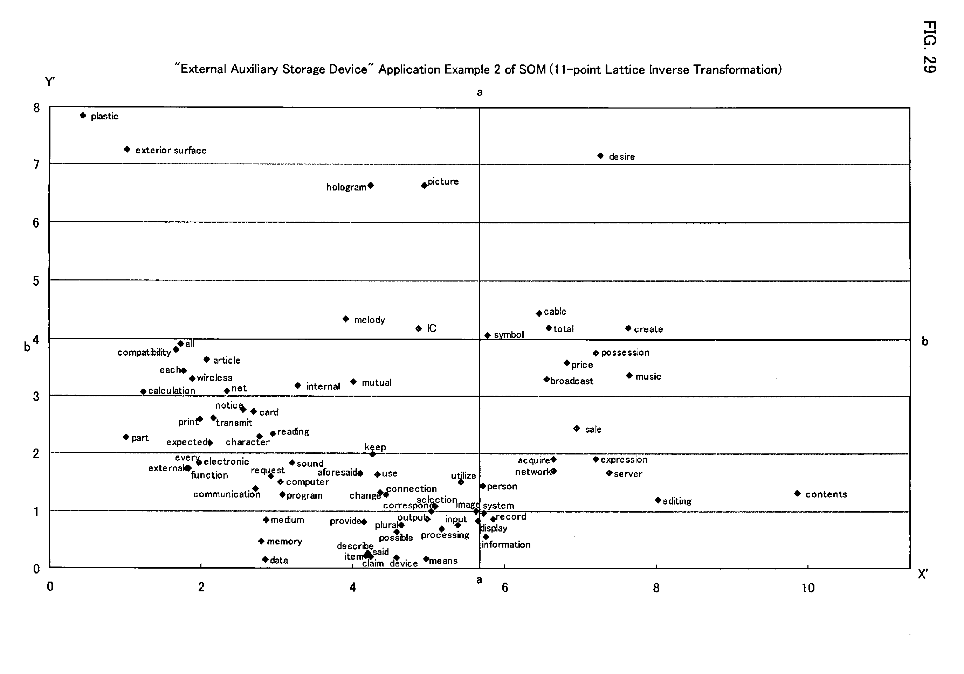

FIG. 29 is a diagram showing an example of the results of performing the foregoing transformation processing to the coordinate of each index term of FIG. 11. The respective coordinates obtained by this transformation processing are separated into four rectangular areas divided by two straight lines a-a and b-b. Further, as in the case of the new coordinate system of FIG. 27, it is evident that the blank area corresponding to the blank area shown in the upper left area of FIG. 11 has also been eliminated.

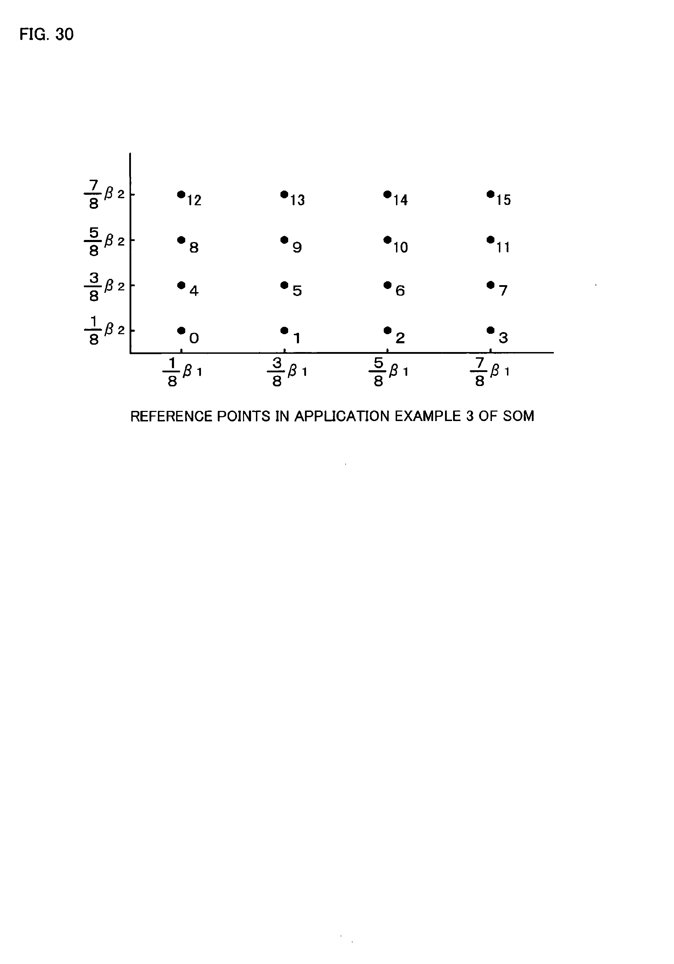

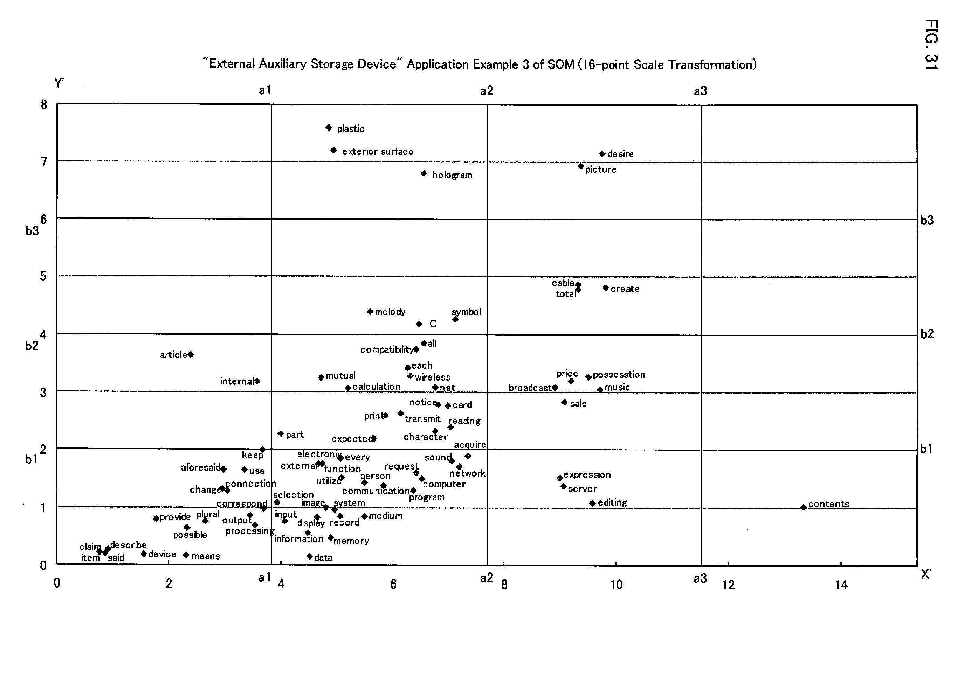

<7-3. Application Example 3 of Self-Organization Map: FIG. 30, FIG. 31>

This transformation is also an example similar to the application example 1. Foremost, the scale transformation explained in the third embodiment is performed to the coordinate value $(X_i, Y_i)$ of each index term of FIG. 11 in order to obtain the input vector $K(w_i)$. In this example, additional 16 reference points are used for performing the transformation processing similar to the application example 1.

FIG. 30 shows the 16 reference points, and shows numbers 0 to 15 being given to these 16 reference points in this coordinate system. The coordinate values of the respective reference points are the 16 intersecting points of straight lines passing through the respective points of $(\beta_1/8, 0)$, $(3\beta_1/8, 0)$, $(5\beta_1/8, 0)$ and $(7\beta_1/8, 0)$ on the horizontal axis and the straight lines passing through the respective points of $(0, \beta_2/8)$, $(0, 3\beta_2/8)$, $(0, 5\beta_2/8)$ and $(0, 7\beta_2/8)$ on the vertical axis.

When performing the transformation with the 16-point grid, by using:

$$K(w_i) = (X_i \times (\alpha + \beta_2/2)/(Y_i + \alpha), Y_i) \qquad \ldots \ldots \ldots \ldots \text{Formula 9}$$

as the input vector, scale transformation is performed in advance in order to make the boundary line of the existing area of the index terms vertical. And, according to the same updating formula as in the application example 1, the reference point $U_j(w_i; t)$ is updated $T_F$ number of times for each index term $w_i$:

The coordinate transformation from the U coordinates to the R coordinates $(r1_j(w_i), r2_j(w_i))$ will be performed as follows to every j.

$$r1_j(w_i) = m1_j(w_i; T_F)$$

$$r2_j(w_i) = m2_j(w_i; T_F)$$

According to the foregoing transformation processing using the 16-point reference value, the map $R_j$ based on

the nearest reference point $U_j$ will become a new coordinate value (X', Y') mapped based on the coordinate value ($X_i$, $Y_i$) of each characteristic index term.

FIG. 31 is a diagram showing an example of the results of performing the foregoing transformation processing using the 16-point reference value to the coordinate of each index term of FIG. 11. The respective coordinates obtained by this transformation processing are separated into four rectangular areas divided by two straight lines a2-a2 and b2-b2.

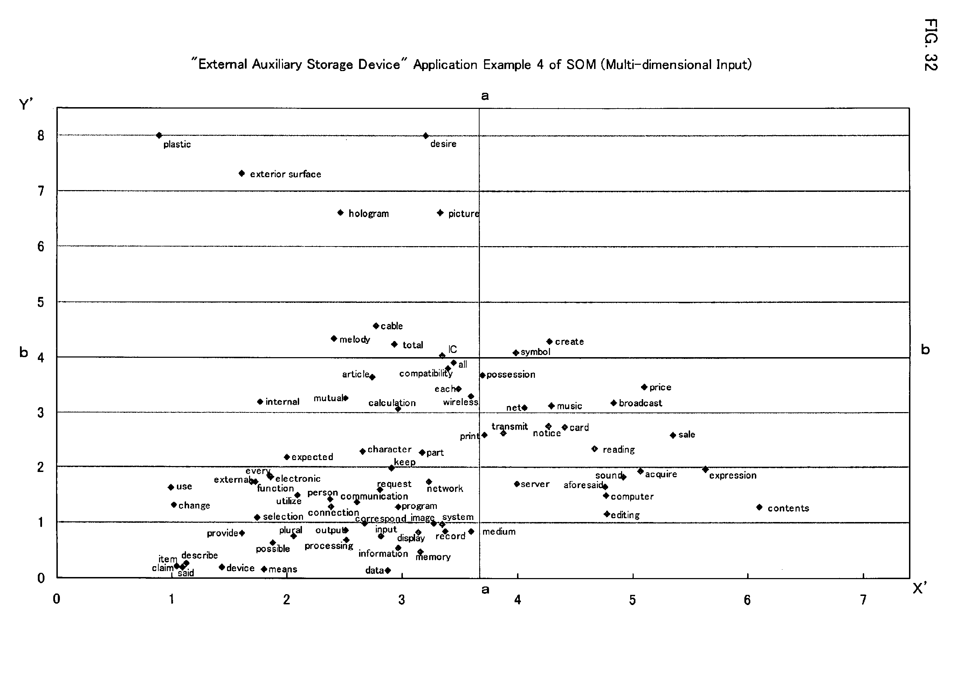

<7-4. Application Example 4 of Self-Organization Map: FIG. 32>

This transformation is also an example similar to the application example 1. Whereas the input vector $K(w_i)$ and reference point $U_j(w_i; t)$ in the application examples 1 to 3 were two dimensional, in this application example, the input vector and reference point are made to be $2 + N_s$ dimensional.

Foremost, by using the vector $V_i$ employing the coordinate value ($X_i$, $Y_i$) of the characteristic index term and employing co-occurrence of such characteristic index term and each of the $N_s$ number of characteristic index terms, the input vector $K(w_i)$ is represented with:

$$K(w_i) = (X_i, Y_i, V_i).$$

Here, by using the co-occurrence data $Co_{\{ii'\}}$ (provided i' = 1, 2, ⋯, $N_s$) obtained from the component $Co(i, i')$ of the co-occurrence matrix, the co-occurrence vector $V_i$ becomes an $N_s$ dimensional vector represented with:

$$V_i = (Co_{\{i1\}}, Co_{\{i2\}}, \cdots, Co_{\{iNs\}}).$$

Here, the component $Co(i, i')$ of the co-occurrence matrix shall be:

$$Co(i,i') = \sum_{\{sen \in d\}} TF(w_i, sen)^\tau \times TF(w_{i'}, sen)^\tau \times \mu_i \times \mu_{i'}$$

... Formula 10

TF(w, sen) represents the appearance frequency of the index term w in a sentence sen, $\tau$ represents the power, and $\mu$ represents the weight. Here, for instance, $\tau = 1/2$, $\mu = 1$ is selected.

TF(w, sen) will be a number of 1 or greater when an index term w appears in the sentence sen, and will be 0 when it does not appear. Thus, the foregoing $TF(w_i, sen)^\tau \times TF(w_{i'}, sen)^\tau \times \mu_i \times \mu_{i'}$ will be a number of 1 or greater when the characteristic index term $w_i$ and characteristic index term $w_i$ appear together (co-occur) in the same sentence sen, and will be 0 when one or both do not appear (do not co-occur). The total number for all sentences sen in the document-to-be-surveyed d will be the component $Co(i, i')$ of the co-occurrence matrix.

Incidentally, the reason why $\tau = 1/2$, $\mu = 1$ was selected is to make the diagonal section $Co(i, i)$ of the co-occurrence matrix TF ($w_i$, d).

The co-occurrence data $Co_{\{ii'\}}$, which is the component of the co-occurrence vector $V_i$, is obtained by standardizing the component $Co(i, i')$ of the co-occurrence matrix with the average in the i', and then dividing this by the square root of the number of dimensions $N_s$ of $V_i$, and is represented as follows.

$$Co_{\{ii'\}} = \frac{Co(i,i') - (1/Ns)\sum_{i'=1}^{Ns} Co(i,i')}{\sigma(Co(i,i')) \times \sqrt{Ns}}$$

... Formula 11

Here, $(1/N_s)\Sigma_{i'=1}^{Ns} Co(i, i')$ is an average of $Co(i, i')$ in the i' = 1, 2, ... , $N_s$.

Further, $\sigma(\text{Co}(i, i'))$ is the standard deviation of Co.$(i, i')$ in the $i' = 1, 2, \cdots, N_s$.

By standardizing this kind of component Co$(i, i')$ of the co-occurrence matrix and dividing it by the square root of the number of dimensions $N_s$ in order to obtain the component Co$_{\{ii'\}}$ of the co-occurrence vector $V_i$, the magnitude of the co-occurrence vector $V_i$ will become 1.

As the input vector, among the $2 + N_s$ dimension vectors represented with K $(w_i) = (X_i, Y_i, V_i)$ above, with respect to portions such as $X_i$ and $Y_i$, those subject to the transformation of the application example 2 or the application example 3 may also be used. However, the explanation provided below uses K$(w_i) = (X_i, Y_i, V_i)$ as is.

Next, by employing the coordinate $(m1_j, m2_j)$ of the initial value of each reference point in the application example 1 above, the initial value of each reference point $U_j (w_i; t)$ is represented as:

$$(\text{m1}_j, \ \text{m2}_j, \ \text{L}_j).$$

Here, $L_j$ is the $N_s$ dimension vector, and each component shall adopt the random value within intervals [0, 1].

Next, as with the application example 1, the coordinate of the reference point $U_j(w_i; t)$ nearest from each input point is updated $T_F$ times regarding each index term $w_i$ given by the input vector K$(w_i)$. As the updating formula, Formula 6 used in the application example 1 above may be used.

Then, among the reference points $U_j(w_i; T_F)$ of the final step updated regarding each index term $w_i$, map $R_j = (r1_j(w_i), r2_j(w_i))$ is given based on the reference point nearest from the input vector of each index term $w_i$. The coordinate transformation from the U coordinates to the R coordinates, for example, may also use Formula 7 above used in the application example 1.

Here, what is different from the application example 1 is that, whereas in the application example 1 the reference point $U_j(w_i; T_F)$ of the final step was two dimensional, in the application example 4, the reference point $U_j(w_i; T_F)$ of the final step is $2 + N_s$ dimensional. Nevertheless, in the application example 4 also, since only two components $m1_j(w_i; T_F)$, $m2_j$ $(w_i; T_F)$ among the reference point $U_j(w_i; T_F)$ of the final step are used for obtaining a two-dimensional map $R_j$, the transformation formula of Formula 7 can be used without change. The map $R_j$ obtained above will become the new coordinate value $(X', Y')$ mapped based on the coordinate value $(X_i, Y_i)$ of each characteristic index term.

In the application example 4, since a component using the co-occurrence is added to the input vector, the updating process of the reference points $U_j(w_i; t)$ of characteristic index terms $w_i$ having similar co-occurrence will show similar behavior. Thus, when mapping on the R coordinate system, the characteristic index terms having similar co-occurrence will be mapped to close positions in comparison to the cases of the application examples 1 to 3 which do not give consideration to the co-occurrence.

However, the primary objective of this embodiment is not to show the co-occurrence or its similarity, but rather to analyze the characteristics of the document-to-be-surveyed by using the relationship of IDF(P) and IDF(S). Thus, the influence of the co-occurrence in the final result.may be small. This is why it was divided by the square root of the number of dimensions $N_s$ when the respective components of the co-occurrence vector $V_i$ were sought in the foregoing Formula 11. Incidentally, although $\tau = 1$ may be used in the foregoing Formula 10, since it is divided by the square root of the number of dimensions $N_s$, the result will not be much different from the case where $\tau = 1/2$.

FIG. 32 is a diagram showing an example of the results upon performing transformation processing using the $2 + N_s$ dimension vector, to which the foregoing co-occurrence was added, to the coordinate of each index term of FIG. 11. The respective coordinates obtained by this transformation processing are separated into four rectangular areas divided by two straight lines a-a and b-b. When comparing this with FIG. 27, which is the result of the application example 1, whereas in FIG. 27, for instance, the characteristic index term "price" is classified in the general term area and the characteristic index term "expected" is classified in the similar documents prescribed term area, in FIG. 32, the characteristic index term "price" is classified in the similar documents prescribed term area and the characteristic index term "expected" is classified in the general term area. Thus, in FIG. 32, classification allowing an easier comprehension of the characteristics of the documerit-to-be-surveyed is realized.

<7-5. Application Example 5 of Self-Organization Map>

Based on the application examples 1 to 4 of the foregoing self-organization map, since it is clear which index term belongs to which area, the data thereof can be used in the automatic creation of the index term list or comment as in the first embodiment. For instance, by conducting an AND search between the data of the index term obtained in the application examples 1 to 4 of the self-organization map and the data for creating the index term list shown in FIG. 12, FIG. 14.and FIG., 16, the index terms belonging to the respective areas can be narrowed down appropriately

Incidentally, in the foregoing first to fourth embodiments, although a case of selecting the similar documents S from the documents-to-be-compared P was explained as the most preferable case, the source-documents-for-selection to become the selection source of the similar documents S may be a document group other than the documents-to-be-compared P. Here, since the similar documents S. will no longer be a subset of the documents-to-be-compared P, there is a possibility that the boundary line of the existing .area of the index term may not become vertical even when subject to the scale transformation of the third embodiment. Moreover, it will be necessary to input the source-documents-for-selection for selecting the similar documents S separately from the documents-to-be-compared P. Nevertheless, other than this, the same operation and effect can be yielded as those explained in each of the foregoing embodiments.

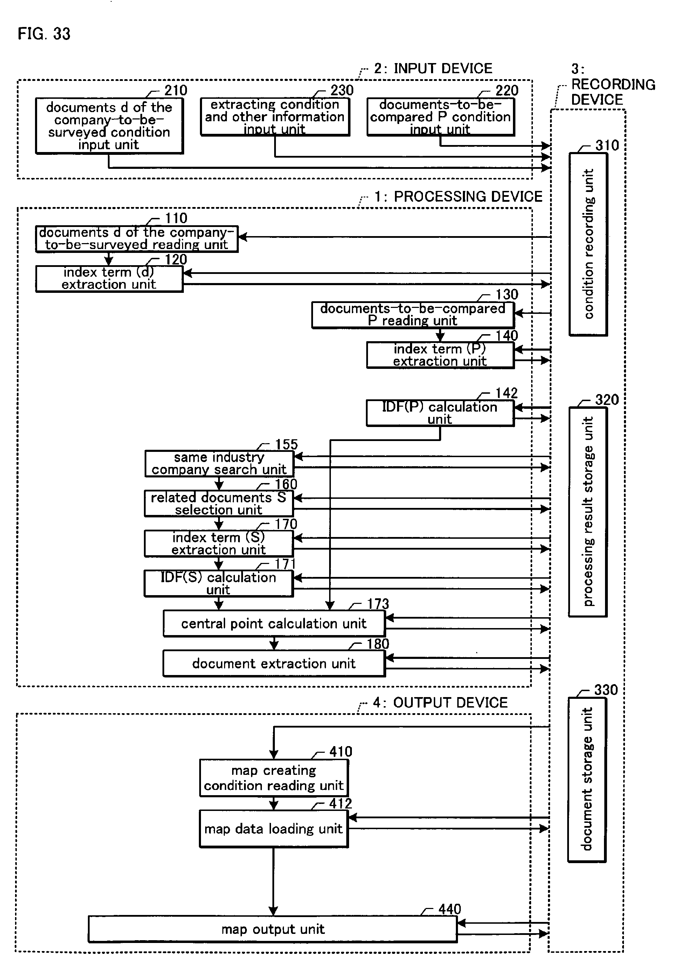

<8. Fifth Embodiment: FIG. 33 to FIG. 37 (Consolidation.of Index Term Positioning Data)>

Next, analysis of the document characteristic and characterization of the document group based on the document distribution are explained. In the first to fourth embodiments, characterization of the document d was conducted based on index term distribution, where with the present embodiment, index term information (micro information) is consolidated in the document information (macro information), and the survey target will be expanded to a document group consisting of a plurality of documents. A document characteristic analysis device capable of analyzing the general positioning of a document-to-be-surveyed included in a document-group-to-be-surveyed in relation to other document groups, or trend of the overall document-group-to-be-surveyed from the perspective of specialty or originality has not been known to date, and this embodiment realizes such device.
The document characteristic analysis device of this embodiment is configured the same as the characteristic index term extraction device described in the first to fourth embodiments other than as described below. Differences with the characteristic index term extraction device of the first embodiment are now mainly explained.
Instead of analyzing the character of the document-to-be-surveyed based on the distribution of characteristic index terms on the map, the document characteristic analysis device of this embodiment introduces.a greater observation scale, and the analysis of a document-group-to-be-surveyed based on distribution of documents can be performed by conducting the following replacements:

Index term $\rightarrow$ Each document of document-group-to-be-surveyed; (IDF(P), IDF(S)) vector of index terms $\rightarrow$ Average of (IDF(P), IDF(S)) vector of index terms in each document of document-group-to-be-surveyed;
Dbcument-to-be-surveyed d $\rightarrow$ Document-group-to-be-surveyed; Similar documents S $\rightarrow$ Related documents S which is a group document having a common attribute with the document-group-to-be-surveyed.

In this example, an explanation is provided where the document-group-to-be-surveyed are made to be a document group of a single company-to-be-surveyed, and the related documents S are made to be a document group of a company group belonging to the same industry as those of the company-to-be-surveyed.
When taking patent documents as an example also in this embodiment, for instance, the documents-to-be-compared P are made to be a document group of all patents and the related documents S are made to be a patent document group of the company group belonging to the same industry as those of the company-to-be-surveyed. And, regarding the documents d of the company-to-be-surveyed, IDF calculation is performed in P and S for each index term, the central point based on the average value thereof in each document d is calculated, and this value is made to be the (X, Y) coordinate of each document d. When the coordinates of documents d of the relevant company is mapped on an X-Y plane, the document distribution of this company can be obtained.

<8-1. Configuration and Operation of Fifth Embodiment>

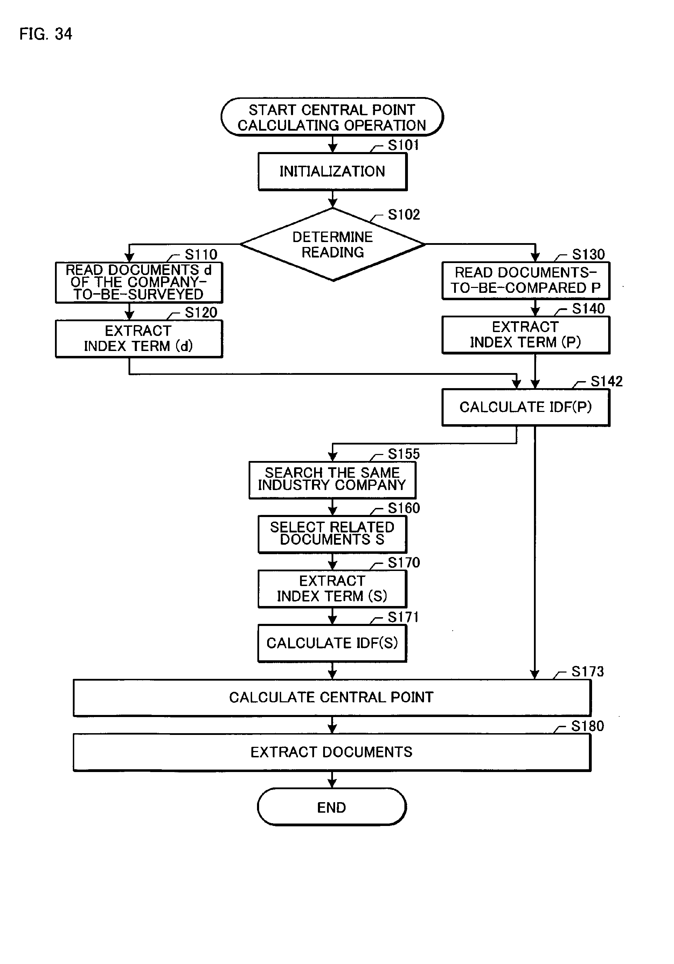

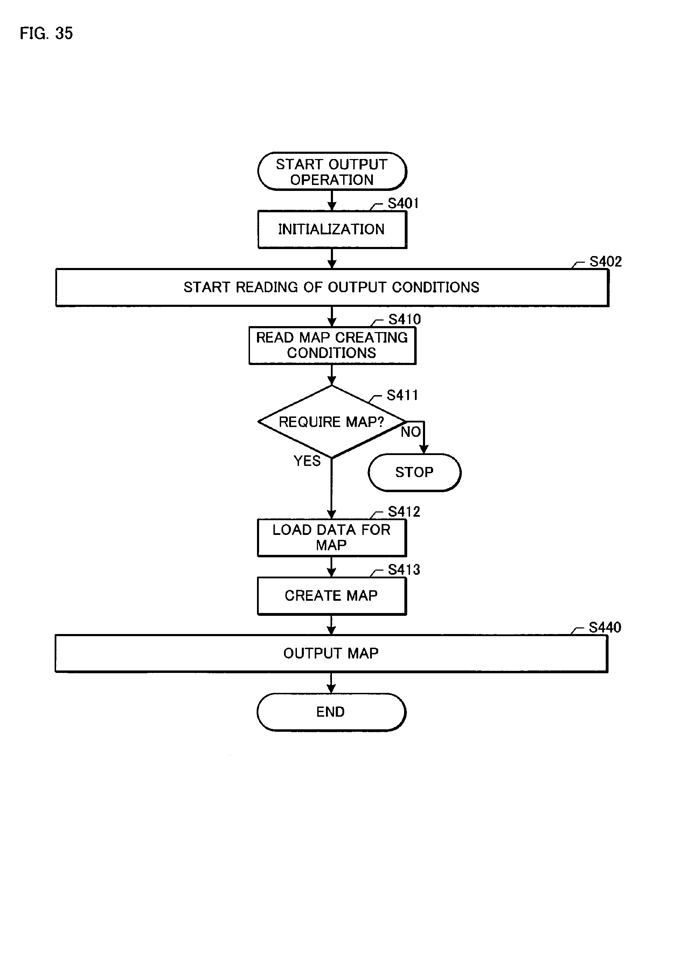

FIG. 33 is a.diagram showing a hardware configuration of a document characteristic analysis device of the fifth embodiment. FIG. 34 is a flowchart showing the operation of the processing device 1 of the document characteristic analysis device; and FIG. 35 is a flowchart showing the operation of a map output in the output device 4 of the document characteristic analysis device.
Unlike the similar documents S of the first embodiment, the related documents S of the fifth.embodiment are not selected based on similarity. Thus, as shown in FIG. 33, the similarity calculation unit 150 illustrated in FIG. 2 is.no longer necessary, and, therefore, the TF(d) calculation unit 121 or the TF(P) calculation unit 141 of FIG. 2 is also not required. Similarly, as shown in FIG. 34, the similarity calculation step S150 in FIG. 4 is no longer required, and, therefore, the TF(d) calculation step S121 or the TF(P) calculation step S141 in FIG. 4 is also not required.
Selection of the related documents S may be conducted, for instance, according to the conditions input with the extracting condition and other information input unit 230 of the input device 2. In other words, when searching for a company.in the same industry as those of the company-to-be-surveyed based on the industry classification, foremost, the names of major corporations and their "standard industry classification" or other industry classifications are stored in the condition recording unit 310. Then, a same industry company search unit 155 searches for the name of the company belonging to the same industry as those of the company-to-be-surveyed. With the searched company name as the key, the related documents S selection unit 160 searches the documents-to-be-compared P with bibliographic data as the target, and the related documents S are selected thereby.

Incidentally, the related documents S selection unit 160 may further narrow down the related documents S under certain conditions from the document group of the same industry.

The related documents S selection unit 160 outputs the related documents S selected as described above to the index term (S) extraction unit 170 or the like. Upon receiving the input of the related documents S, the index term (S) extraction unit 170 extracts index terms (S), and sends them to the IDF(S) calculation unit 171 or the like. Based on the results of the IDF(P) calculation unit 142 and the IDF(S) calculation unit 171, the central point calculation unit 173 calculates the central point.

Further, the primary objective of the fifth embodiment is to output a document distribution map. When a list is not to be output as in the first embodiment, as shown in FIG. 33, the list.output condition reading unit 420 and the list data loading unit 422 illustrated in FIG. 2 will no longer be required. Similarly, as shown in FIG. 35, the respective steps from the list output condition reading step S420 to the list creation step S423 depicted in FIG. 5 will also become unnecessary. When a comment is not to be output as in the first embodiment, the comment creating condition reading unit 430 and the comment creating unit 432 illustrated in FIG. 2 will no longer be required. Similarly, the respective steps from the comment creating condition reading step S430 to the comment creation step S433 depicted in FIG. 5 will also become unnecessary..

It is desirable that the coordinate value of the central point in the respective documents of the company-to-be-surveyed is an average value obtained by weighting the TF weight:

$$\rho(w_i) \ = \ TF(w_i; \ d) / \Sigma \ TF(w_i; \ d)$$

to the coordinate value of each index term $w_i$. However, it is not limited thereto, and a plain average value may also be used.

When there are enormous amounts of documents of the company-to-be-surveyed, it is preferable to narrow down the documents to representative documents and outputting these on the map so that it will be easier to comprehend the trend as the document.group of the company-to-be-surveyed. Thus, among the document-group-to-be-surveyed, documents having high similarity against the document-group-to-be-surveyed and documents having low similarity against the document-group-to-be-surveyed are extracted and output from the document extraction unit 180.

Determination of similarity of each document in relation to the document-group-to-be-surveyed, for instance, for each document d, those with a high average value $(1/d_N)\{DF(w_1, E0) + DF_{(W2}, E0) + \cdots + DF(w_{dN}, E0)\}$ of the number of hit documents DF $(w_i, E0)$ upon searching the document-group-to-be-surveyed (E0) with each index term $w_i$ are determined to be "similar", and those with a low average value are determined to be "non-similar" ($d_N$ represents the number of index terms in the document d). As the extraction method, for instance, a method of extracting a fixed number in the ascending order and descending order of the average value, or, for example, a method of extracting documents that adopt Z greater than "average value of every Z + standard deviation of every Z" and extracting documents that adopt Z less than "average number of every Z - standard deviation of every Z" when Z is a number obtained through dividing the average value by the number of documents of the document-group-to-be-surveyed, and so on may be considered.

The narrowing to representative documents based on the determination of similarity described above can be used for narrowing the document-group-to-be-surveyed, as well.as for narrowing upon selecting the related documents S. In other words, for each document of the document group of the same industry, the average value of the number of documents hits when searching the document group of the same industry regarding each index.term, and documents are narrowed to documents having a high average value (similar) and documents having a low average value (non-similar) for selecting the related documents S. Incidentally, the narrowing to be performed upon selecting the related documents S may be based on the determination of similarity as described above, or by randomly extracting documents from a document group of the same industry, or based on IPC.

<8-2. Map Output Example>

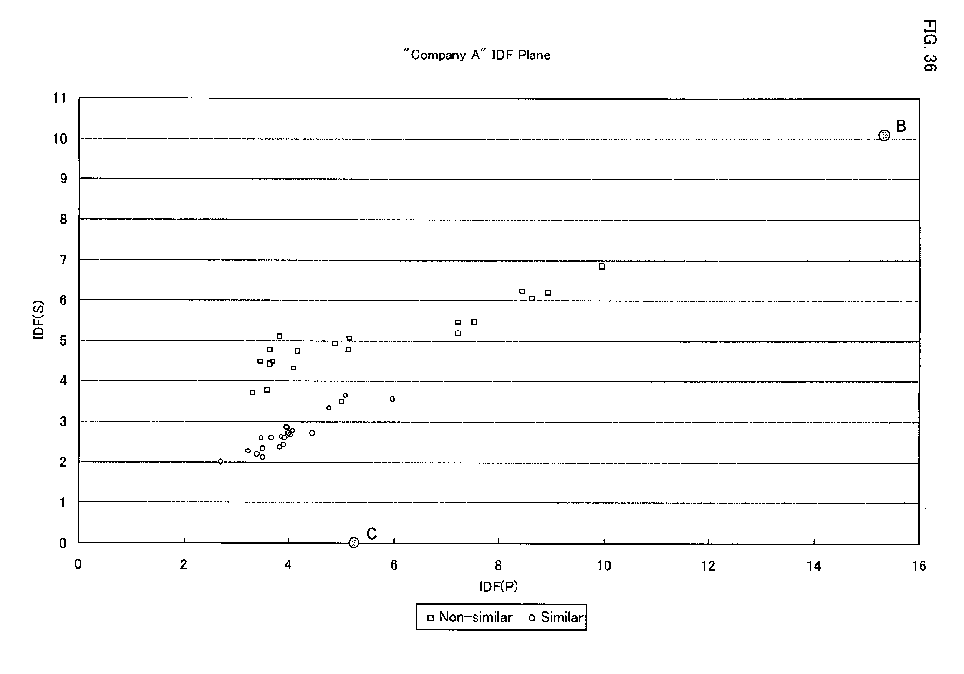

FIG. 36 is a diagram showing the document characteristic based on the positioning in the industry regarding 20 documents of high similarity and 20 documents of low similarity among all documents of single company as the document-group-to-be-surveyed. This FIG. 36 corresponds to the corporate document characteristic representative diagram of the present invention. In FIG. 36, a plain average value was used as the central value of each document. When the corporate documents d are mapped to the IDF plan view, distribution of the corporate documents can be obtained.

In this map obtained as described above, coordinates of nearly all documents are distributed in an area above the straight line where $Y = (\beta_2/(\beta_1) X$ ($\beta_1$ is the maximum value ln N of the X coordinate based on the N number of documents of the documents-to-be-compared P, and $\beta_2$ is the maximum value ln N' of the Y coordinate based on the N' number of documents of the related documents S). Among the above, documents with numerous original concept terms appear in the area that is more upper left than Y = X, and documents with numerous specialty terms appear in the area that is right of $X = \beta_1-\beta_2$. Since standard documents appear in the middle area, it is easy to tell which area is distributed with many documents, and the trend of corporate documents can be comprehended thereby.

The reason why it is possible to evaluate that documents with numerous original concept terms appear in the area that is more upper left than Y = X is now explained. The change in the DF value upon adding vast amounts of documents to the related documents S can be classified into three categories; namely, those in which the increase in the DF value is equivalent to the increase in the number of documents, those in which the DF value hardly changes, and those in which the DF value increases drastically. The IDF change in each of the foregoing cases will be, no change, increase and decrease, respectively. Therefore, the index term distribution on the IDF plane upon adding vast amounts of documents to the related documents S tends to migrate toward the direction of a straight line where Y = X. Here, since the average of each document is taken, the tendency of approaching the straight line where Y = X is more evident. This tendency suggests that documents with numerous original concept terms will appear in the area above Y = X. Further, the.reason why it is possible to evaluate that documents with numerous specialty terms appear in the area that is right of $X = \beta_1-\beta_2$ is now explained. When the average of the index term coordinates of the similar documents prescribed term area c and.the index term coordinates belonging to the general term area d is sought, it is considered that the X coordinate value of terminal point C ($\beta_1-\beta_2$, 0) of the similar documents prescribed term area c will roughly be the maximum value. Therefore, standard documents will not appear in the area on the right of $X = \beta_1-\beta_2$, and this can be evaluated as documents with numerous specialty terms.
As described above, the remaining area where Y≤X and X≤$\beta_1-\beta_2$ becomes the standard document area.

Further, the reason why the coordinates of most documents are distributed in the area above the straight line where $Y = (\beta_2/\beta_1)X$ is explained. Since the coordinate of the central value of each document takes on an average value of the index term, it is possible to hypothecate uniformity (DF(P) = N/k, DF(S) = N'/k, k≥1). From this hypothecation of uniformity and definition of planar coordinates (X, Y) = (<IDF(P)>$_w$, <IDF(S)>$_w$), $Y = (\beta_2/\beta_1)X + (\alpha/\beta_1)$ln k is derived. Thereby, $Y≥(\beta_2/\beta_1)X$ is realized in k that satisfied k≥1.

According to the trend described above, it will be possible to use the document characteristic analysis device of this embodiment to analyze the general positioning and trend of the documents-to-be-surveyed without a person reading the contents of the document-group-to-be-surveyed or related documents. In other words, among the corporate document group as the document-group-to-be-surveyed, it will be possible to know whether a specific document is a standard document in the industry, whether it is a document having a specialized character, or whether it is a document having an original character. Further, among the corporate document group as the document-group-to-be-surveyed, it will be possible to detect the standard document, detect a document having a specialized character, or detect a document having an original character. Further, the trend of the overall document-group-to-be-surveyed can be evaluated as a document group with many standard documents, a document group with many documents having originality, or a document group with many documents having specialty.

Further, in FIG. 36, among the document-group-to-be-surveyed, 20 documents with high similarity and 20 documents with low similarity are extracted and output. As a result of such extraction, a document having a low similarity in the document-group-to-be-surveyed and high originality or high specialty in the related documents S can be evaluated as being a particularly unique document. Further, even if the similarity in the document-group-to-be-surveyed is low, it is still possible to evaluate that the document having low originality or low specialty or the standard document in the related documents S can be mere combination of existing concepts or publicly known technologies.

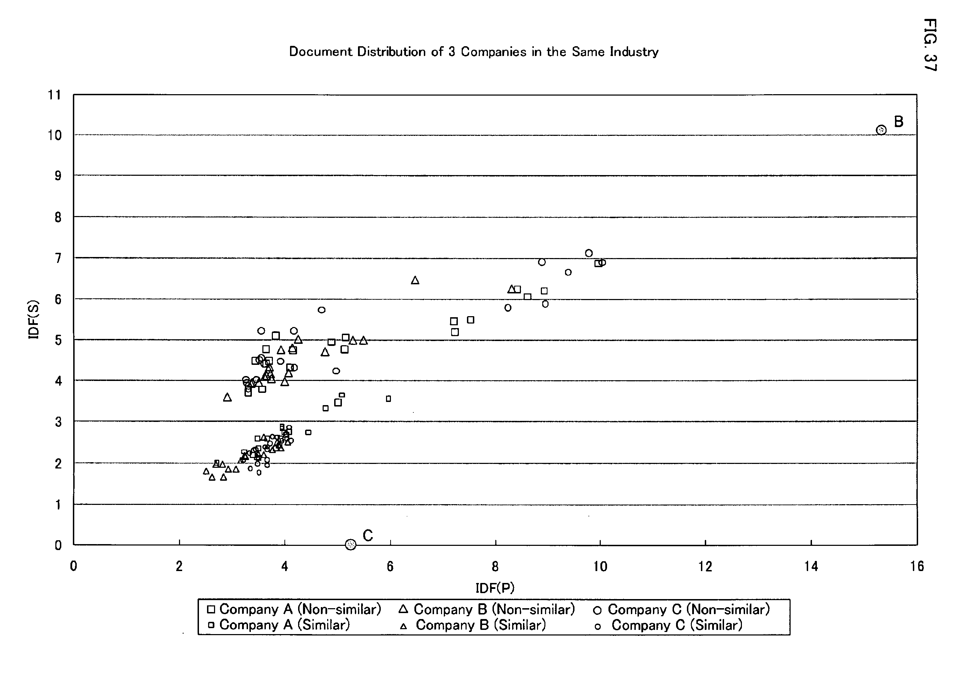

FIG. 37 is a diagram showing the document characteristics of 3 companies by selecting document groups of the 3 companies belonging to.the same industry as the document-groups-to-be-surveyed. When comparing these, documents of Company A and Company C tend to be documents with numerous specialty terms, and documents of Company B tend to be documents with numerous original concept terms. FIG. 37 corresponds to the corporate document characteristic representative diagram of the present invention. As a result of analyzing a plurality of document groups as the document-groups-to-be-surveyed and mutually comparing such document groups, the trend of the overall document group can be evaluated even more properly.

<8-3. Modified Example 1 of Fifth Embodiment (Selection of Related Documents)>

In the foregoing example, although a case was explained where a document group of a company belonging to the same industry as those of the company-to-be-surveyed or a further narrowed document group was used as the related documents S, the related documents S are not limited to the above. For instance; a document group belonging.to the same technical field as those of the document group of the company-to-be-surveyed may be retrieved with IPC and be used as the related documents S.

In the case of retrieving a document group belonging to the same field based on IPC, in the processing device 1 shown in FIG. 33, an IPC extraction unit (not shown) is provided, and this IPC extraction unit is used to extract IPC from the bibliographic data of all patent documents of the company-to-be-surveyed. When several IPCs are to be extracted, only a prescribed number of upper-ranked IPCs with the most number of corresponding documents are extracted. And, with the extracted.IPC as the key, the related documents S selection unit 160 conducts a search targeting the bibliographic data of the documents-to-be-compared P, and the related documents S are selected thereby. This selecting condition, for example, is input with the extracting condition and other information input unit 230 of the input device 2.

As a result of using such selected related documents S, it will be possible to analyze the positioning and trend in the documents in the same technical field as those of the documents of the company-to-be-surveyed.

<8-4. Modified Example 2 of Fifth Embodiment (Acquisition Method 1 of Document-Group-to-be-Surveyed)>

In the foregoing example, although a case was explained where a document group of the company-to-be-surveyed was used as the document-group-to-be-surveyed, the document-group-to-be-surveyed are not limited to the above. For instance, a document group belonging to the same technical field among an unspecified patent document groups may be retrieved with IPC and be used as the document-group-to-be-surveyed.

For instance, considered is a case of analyzing a document group filed in 2000 and given a certain IPC as the document-group-to-be-surveyed. As the related documents S, for example, a document group filed between 1980 and 1999 and given the same IPC as the foregoing IPC is selected. The document-group-to-be-surveyed are analyzed with the other conditions.being the same.

As a result of the above, it is possible to evaluate whether the filing trend in 2000 in the technical field given such IPC shifted toward an original direction, whether it shifted toward a specialized direction, or whether it remained within a scope that can be considered standard in comparison to the applications of the past 20 years. Further, among the applications filed in 2000 in the technical field given such. IPC, it is possible to evaluate whether a specific application is of an original nature, whether it is of a specialized nature, or whether it remained within a scope that can be considered standard in comparison to the applications of the past 20 years. Moreover, among the applications filed in 2000 in the technical field given such IPC, it is possible to detect an application having an original nature, an application.having a specialized nature and an application that remained within a scope that can be considered standard in comparison to the applications of the past 20 years.

Further, the analysis of applications filed in 2000 in the technical field given such IPC can also be compared with the analysis used in other document-group-to-be-surveyed.

For example, the filing period of the document-group-to-be-surveyed and the related documents S are set to be 2000 and between 1980 and 1999, respectively, as with the foregoing case in order to perform another analysis on a separate IPC. As a result of comparing different IPCs, it will be possible to evaluate fields where the shift in technology is fast, fields where the technology has matured, and so on.

Further, for instance, a document group filed in 2001 and given a certain IPC is used as the document-group-to-be-surveyed, and a document group filed between 1981 and 2000 and given the same IPC as the foregoing IPC is used as the related documents S in order to perform the analysis. This analysis is compared with the analysis in the case of targeting the year 2000 as the subject of survey. Thereby, the filing trend in 2000 and the filing trend in 2001 in the same technical field can be compared.

<8-5. Modified Example 3 of Fifth Embodiment (Acquisition Method 2 of Document-Group-to-be-Surveyed)>

Further, for example, considered is a case of analyzing a document group given a certain IPC (e.g., designated up to a subgroup such as A61K6/05) as the document-group-to-be-surveyed. A document group given an IPC (e.g., designated up to a main group such as A61K6/) corresponding to the upper hierarchy of such IPC is selected as the related documents S. The document-group-to-be-surveyed are analyzed with the other conditions being the same.

Thereby, it will be possible to evaluate whether a specific document among the document-group-to-be-surveyed is a document having a unique nature (many original concept terms, many specialty terms, etc.) or whether it is a document that remains within a scope that can be considered standard in relation to the document group of the upper hierarchy of IPC. Further, it will also be possible to detect a document having a unique nature (many original concept terms, many specialty terms, etc.) or a document that remains within a scope that can be considered standard in relation to the document group of the upper hierarchy of IPC among the document-group-to-be-surveyed.

**EP 1 677 210 A1**

**Claims**

1. An index term extraction device, comprising:

input means for inputting a document-to-be-surveyed, documents-to-be-compared to be compared with said document-to-be-surveyed, and source-documents-for-selection to become the selection source of similar documents that are similar to said document-to-be-surveyed;
index term extraction means for extracting index terms from said document-to-be-surveyed;
first appearance frequency calculation means for calculating a function value of an appearance frequency of each of said extracted index terms in said documents-to-be-compared;
similar documents selecting means for selecting said similar documents from said source-documents-for-selection based on data of said document-to-be-surveyed;
second appearance frequency calculation means for calculating a function value of an appearance frequency of each of said extracted index terms in said similar documents; and
output means for outputting each index term and positioning data thereof, based on the combination of the calculated function value of the appearance frequency in said documents-to-be-compared and the calculated function value of the appearance frequency in said similar documents, regarding each index term.

2. The index term extraction device according to claim 1, wherein said documents-to-be-compared are used as said source-documents-for-selection.

3. The index term extraction device according to claim 1 or claim 2, wherein said similar documents selecting means calculates, with respect to each document of said document-to-be-surveyed and said source-documents-for-selection, a vector having as its component a function value of an appearance frequency in each document of each index term contained in each document, or a function value of an appearance frequency in said source-documents-for-selection of each index term contained in each document; and selects from said source-documents-for-selection documents having a vector of a high degree of similarity to said vector calculated with respect to said document-to-be-surveyed, and makes the selected documents similar documents.

4. The index term extraction device according to any one of claims 1 to 3, wherein said.output means outputs, based on the results of the respective calculation means,
an index term of a first group having a low appearance frequency in said documents-to-be-compared and in said similar documents,
an index term of a second group having a higher appearance frequency in said documents-to-be-compared in comparison to the index term of said first group, and
an index term of a third group having a higher appearance frequency in said similar documents in comparison to the index term of said first group.

5. The index term extraction device according to any one of claims 1 to 3, wherein said output means outputs, based on the results of the respective calculation means,
an index term of a third group having a lower appearance frequency in said documents-to-be-compared in comparison to an index term of a fourth group having a high appearance frequency in said documents-to-be-compared and in said similar documents,
an index term of a second group having a lower appearance frequency in said similar documents in comparison to the index term of said fourth group, and
an index term of a first group having a lower appearance frequency in said similar documents in comparison to the index term of said third group and further having a lower appearance frequency in said documents-to-be-compared in comparison to the index term.of said second group.

6. An index term extraction device, comprising:

input means for inputting a document-to-be-surveyed, documents-to-be-compared to be compared with said document-to-be-surveyed, and similar documents that are similar to said document-to-be-surveyed;
index term extraction means for extracting index terms from said document-to-be-surveyed;
first appearance frequency calculation means for calculating a function value of an appearance frequency of each.of said extracted index terms in said documents-to-be-compared;
second appearance frequency calculation means for calculating a function value of an appearance frequency of each of said extracted index terms in said similar documents; and

output means for outputting, based on the results of the respective calculation means, an index term of a first group having a low appearance frequency in said documents-to-be-compared and in said similar documents,

an index term of a second group having a higher appearance frequency in said documents-to-be-compared in comparison to the index term of said first group, and
an index term of a third group having a higher appearance frequency in said similar documents in comparison to the index term of said first group.

7. An index term extraction device, comprising:

input means for inputting a document-to-be-surveyed, documents-to-be-compared to be compared, with said document-to-be-surveyed, and similar documents that are similar to said document-to-be-surveyed;
index term.extraction means for extracting index terms from said document-to-be-surveyed;
first appearance frequency calculation means for calculating a function value of an appearance frequency of each of said extracted index terms in said documents-to-be-compared;
second appearance frequency calculation means for calculating a function value of an appearance frequency of each of said extracted index terms in said similar documents; and
output means for outputting, based on the results of the respective calculation means,
an index term of a third group having a lower appearance frequency in said documents-to-be-compared in comparison to an index term of a fourth group having a high appearance frequency.in said documents-to-be-compared and in said similar documents,
an index term of a second group having a lower appearance frequency in said similar documents in comparison to the index term of said fourth group, and
an index term of a first group having a lower appearance frequency in said similar documents in comparison to the index term of said third group and further having a lower appearance frequency in said documents-to-be-compared in comparison to the index term of said second group.

8. The index term extraction device according to any one of claims 1 to 7, wherein the function value of the appearance frequency in said documents-to-be-compared or said similar documents is a logarithm of a value obtained by multiplying the total number of documents of said documents-to-be-compared or said similar documents to the reciprocal of said appearance frequency.

9. The index term extraction device according to any one of claims 1 to 8, wherein said output means disposes and outputs each index term by taking the function value of the appearance frequency in said documents-to-be-compared as a first axis of a coordinate system and taking the function value of the appearance frequency in said similar documents as a second axis of said coordinate systems.

10. The index term extraction device according to any one of claims 4 to 8, wherein said output.:means respectively lists and outputs the index term of said first group, the index term of said second group, and the index term of said third group.

11. The index term extraction device according to any one of claims 4 to 8, wherein said output means automatically creates and outputs supporting documentation of said document-to-be-surveyed through the use of the index term of said first group, the index term of said second group, and the index term of said third group.

12. The index term extraction device according to any one of claims 1 to 8,
wherein each of said similar documents is included in said documents-to-be-compared,
wherein said output means disposes and outputs each index term by further transforming the function value of the appearance frequency in said documents-to-be-compared and taking the same as a first axis of a coordinate system and taking the function value of the appearance frequency in said similar documents as a second axis of said coordinate system, and
wherein said transformation is conducted such that a boundary line of an existable area of said index terms on said coordinate system, based on said similar documents being a subset of said documents-to-be-compared, approaches vertical line of said first axis.

13. The index term extraction device according to claim 12, wherein said transformation is given according to the function with the appearance, frequency in said similar documents.

**14.** The index term extraction device.according to any one of claims 1 to 13,
further comprising term frequency calculation means for calculating an appearance frequency, in said document-to-be-surveyed, of each index term in said document-to-be-surveyed,
wherein said output means reflects and outputs the appearance frequency, in said document-to-be-surveyed, of each index term in said document-to-be-surveyed.

**15.** The index term extraction device according to any one of claims 1 to 8, wherein, when said output means, for each index term, takes the function value of the appearance frequency in said documents-to-be-compared as a first axis of a coordinate system and takes the function value of the appearance frequency in said similar documents as a second axis of said coordinate system, said output means disposes each index term so as to further approach a reference point that is the closest to said index term among a plurality of reference points on said coordinate system and outputs each index term on said coordinate system.

**16.** The index term extraction device according to any one of claims 1 to 8, further comprising:

reference point setting means for setting coordinates of a plurality of reference points on a coordinate system;
means for updating a prescribed number of times the coordinate data of a.reference point that is closest to said index term among said plurality of reference points so as to further approach said index term when, for each index term, the function value of the appearance frequency in said documents-to-be-compared is taken as a first axis of the coordinate system and the function value of the appearance frequency in said similar documents is taken as a second axis of said coordinate system; and
coordinate calculation means for calculating coordinates for disposing said index term based on said updated reference point,
wherein said output means disposes and outputs each index term on said coordinate system based on the coordinates calculated by said coordinate calculation means.

**17.** An index term extraction method, comprising:

an input step for inputting a document-to-be-surveyed, documents-to-be-compared to be compared with said document-to-be-surveyed, and source-documents-for-selection to become the selection source of similar documents that are similar to said document-to-be-surveyed;
an index term extraction step for extracting index terms from said document-to-be-surveyed;
a first appearance frequency calculation step for calculating a function value of an appearance frequency of each of said extracted index terms in said documents-to-be-compared;
similar documents selecting step for selecting said similar documents from .said source-documents-for-selection based on data of said document-to-be-surveyed;
a second appearance frequency calculation step for calculating a function value of an appearance frequency of each of said extracted index terms in said similar documents; and
an output step for outputting each index term and positioning data thereof based on the combination of the calculated function value of the appearance frequency in said documents-to-be-compared and the calculated function value of the appearance frequency in said similar documents, regarding each index term.

**18.** An index term extraction method, comprising:

an input step for inputting a document-to-be-surveyed, documents-to-be-compared to be compared with said document-to-be-surveyed, and similar documents that are similar to said document-to-be-surveyed;
an index term extraction step for extracting index terms from said document-to-be-surveyed;
a first appearance frequency calculation step for calculating a function value of an appearance frequency of each of said extracted index terms in said documents-to-be-compared;
a second appearance frequency calculation step for calculating a function value of an appearance frequency.of each of said extracted index terms in said similar documents; and
an output step for outputting, based on the results of the respective calculation steps,
an index term of a first group having a low appearance frequency in said documents-to-be-compared and in said similar documents,
an index term of a second group having a higher appearance frequency in said documents-to-be-compared in comparison to the index term of said first group, and an index term of a third group having a higher appearance frequency in said similar documents in comparison to the index term of said first group.

**19.** An index term extraction program for causing a computer to execute:

an input step for inputting a document-to-be-surveyed, documents-to-be-compared to be compared with said document-to-be-surveyed, and source-documents-for-selection to become the selection source of similar documents that are similar to said document-to-be-surveyed;

an index term extraction step for extracting index.terms from said document-to-be-surveyed;

a first appearance frequency calculation step for calculating a function value of an appearance frequency of each of.said extracted index terms in.said documents-to-be-compared;

similar documents selecting step for selecting said similar documents from said source-documents-for-selection based on data of said document-to-be-surveyed;

a second appearance frequency calculation step for calculating a function value of an appearance frequency of each of said extracted index terms in said similar documents; and

an output step for outputting each index term and positioning data thereof based on the combination of the calculated function value of the appearance frequency in said documents-to-be-compared and the calculated function value of the appearance frequency in said similar documents, regarding each index term.

**20.** An index term extraction program for causing a computer to execute:

an input step for.inputting a document-to-be-surveyed, documents-to-be-compared to be compared with said document-to-be-surveyed, and similar documents that are similar to said document-to-be-surveyed;

an index term extraction step for extracting index terms from said document-to-be-surveyed;

a first appearance frequency calculation step for calculating a function value of an appearance frequency of each of said extracted index terms in said documents-to-be-compared;

a second appearance frequency calculation step for calculating a function value of an appearance frequency of each of said extracted index terms in said similar documents; and

an output step for outputting, based on the results of the respective calculation steps, an index term of a first group having a low appearance frequency in said documents to be compared and in said similar documents, an index term of a second group having a higher appearance frequency in said documents-to-be-compared in comparison to the index term of said first group, and

an index term of a third group having a higher appearance frequency in said similar documents in comparison to the index term of said first group.

**21.** A character representative diagram of a document-to-be-surveyed, wherein, for each index term in the document-to-be-surveyed,

a function value of an appearance frequency in documents-to-be-compared to be compared with said document-to-be-surveyed is taken as a first axis of a coordinate system, and

a function value of an appearance frequency in similar documents that are similar to said document-to-be-surveyed is taken as a second axis of said coordinate system.

**22.** A character representative diagram of a document-to-be-surveyed having disposed therein index terms in the-document-to-be-surveyed, wherein

an index term of a first group having a low appearance frequency in documents-to-be-compared to be compared with said document-to-be-surveyed and in similar documents that are similar to said document-to-be-surveyed is disposed in a first area,

an index term of a second group having a higher appearance frequency in said documents-to-be-compared in comparison to the index term of said first group is disposed in a second area, and

an index term of a third group having a higher appearance frequency in said similar documents in comparison to the index term of said first group is disposed in a third area.

**23.** A character representative diagram of a document-to-be-surveyed having disposed therein index terms in the document-to-be-surveyed, wherein

an index term of a third group having a lower appearance frequency in documents-to-be-compared to be compared with said document-to-be-surveyed in comparison to an index term of a fourth group having a high appearance frequency in said documents-to-be-compared and in similar documents.that are similar to said document-to-be-surveyed is disposed in a third area,

an index term of a second group having a lower appearance frequency in said similar documents in comparison to the index term of said fourth group is disposed in a second area, and

an index term of a first group having a lower.appearance frequency in said similar documents in comparison to the index term of said third group and further having a lower appearance frequency in said documents-to-be-compared in comparison to the index term of said second group is disposed in a first area.

24. A document characteristic analysis device, comprising:

input means for inputting a document-group-to-be-surveyed including a plurality of documents-to-be-surveyed, documents-to-be-compared to be compared with each document-to-be-surveyed, and related documents having a common attribute with said document-group-to-be-surveyed;
index term extraction means for extracting index terms in each document-to-be-surveyed;
third appearance frequency calculation means for calculating a function value of an appearance frequency of each of said extracted index terms in said documents-to-be-compared;
fourth appearance frequency calculation means for calculating a function value of an appearance frequency of each of said extracted index terms in said related documents;
central point calculation means for calculating a central point in each document-to-be-surveyed based on the combination of the calculated function value of the appearance frequency in said documents-to-be-compared and the calculated function value of the appearance frequency in said related documents, regarding each index term; and
output means for outputting data of said central point in each document-to-be-surveyed.

25. The document characteristic analysis device according to claim 24, wherein the calculation of said central point in each document-to-be-surveyed is conducted by calculating the weighted average of the index term coordinates, which is an average value obtained by performing weighting to the coordinate value of each index term based on the function value of the appearance frequency in said documents-to-be-compared and the function value of the appearance frequency in said related documents, regarding each index term, with the ratio of term frequency value of each index term in relation to term frequency value total in said documents.

26. The document characteristic analysis device according to claim 24 or claim 25, wherein data of said central point is output by extracting documents each having high similarity to said document-group-to-be-surveyed and documents each having low similarity to said document-group-to-be-surveyed, among said document-group-to-be-surveyed.

27. A document characteristic analysis method, comprising:

an input step for inputting a document-group-to-be-surveyed including a plurality of documents-to-be-surveyed, documents-to-be-compared to be compared with each document-to-be-surveyed, and related documents having a common attribute with said document-group-to-be-surveyed;
an index term extraction step for extracting index terms in each document-to-be-surveyed;
a third appearance frequency calculation step for calculating a function value of an appearance frequency of each of said extracted index terms in said documents-to-be-compared;
a fourth appearance frequency calculation step for calculating a function value of an appearance frequency of each of said extracted index terms in said related documents;
central point calculation step for calculating a central point in each document-to-be-surveyed based on the combination of the calculated function value of the appearance.frequency in said documents-to-be-compared and the calculated function value of the appearance frequency in said related documents, regarding each index term; and
an output step for outputting data of said central point in each document-to-be-surveyed.

28. A document characteristic analysis program for causing a computer to execute:

an input step for inputting a document-group-to-be-surveyed including a plurality of documents-to-be-surveyed, documents-to-be-compared to be compared with each document-to-be-surveyed, and related documents having a common attribute with said document-group-to-be-surveyed;
an index term extraction step for extracting index terms in each document-to-be-surveyed;
a third appearance frequency calculation step for calculating a function value of an appearance frequency of each of said extracted index terms in said documents-to-be-compared;
a fourth appearance frequency calculation step for calculating a function value of an appearance frequency of each of said extracted index terms in said related documents;
central point calculation step for calculating a central point in each document-to-be-surveyed based on the combination of the calculated function value of the appearance frequency in said documents-to-be-compared and the calculated function value of the appearance frequency in said related documents, regarding each index term; and

an output.step for outputting data of said central point in each document-to-be-surveyed.

29. A document characteristic representative diagram of documents-to-be-surveyed, regarding each of a plurality of documents included in the documents-to-be-surveyed, taking positioning with respect to documents-to-be-compared to be compared with each document-to-be-surveyed as a first axis of a coordinate -system and taking positioning with respect to related documents having a common attribute with said documents-to-be-surveyed as a second axis of said coordinate system, wherein

a coordinate value of each of said documents-to-be-surveyed on said coordinate system is set to be a central point, in each document-to-be-surveyed, of index term coordinate values each having as component thereof a function value of an appearance frequency in said documents-to-be-compared of each index term and a function value of an appearance frequency in said related documents of each index term.

FIG. 1

```
                              ┌──────────────────────┐─2
                              │    INPUT DEVICE      │
                              └──────────┬───────────┘
                                         │
                                         ▼
     ┌──────────────────────┐─1              ┌──────────────────────┐─3
     │  PROCESSING DEVICE   │───────────────▶│   RECORDING DEVICE   │
     │                      │◀───────────────│                      │
     └──────────┬───────────┘                └──────────────────────┘
                │
                ▼
     ┌──────────────────────┐─4
     │    OUTPUT DEVICE     │
     └──────────────────────┘
```

FIG. 2

**2 : INPUT DEVICE**

**3 :**
**RECORDING**
**DEVICE**

210
document-to-be-
surveyed d condition
input unit

230
extracting condition
and other information
input unit

220
documents-to-be-
compared P condition
input unit

310
condition recording unit

**1 : PROCESSING DEVICE**

110
document-to-be-surveyed
d reading unit

120
index term (d)
extraction unit

130
documents-to-be-compared
P reading unit

140
index term (P)
extraction unit

121
TF(d) calculation unit

141
TF(P) calculation unit

142
IDF(P) calculation
unit

150
similarity calculation
unit

160
a similar documents
S selection unit

170
index term (S)
extraction unit

171
IDF(S) calculation
unit

180
characteristic index term
extraction unit

320
processing result storage unit

**4 : OUTPUT DEVICE**

330
document storage unit

410
map creating
condition reading unit

420
list output condition
reading unit

430
comment creating
condition reading unit

412
map data loading unit

422
list data loading unit

432
comment creating
unit

440
map-list-comment combined output unit

FIG. 3

```
          ┌─────────────────────┐
          │  START CONDITION    │
          │  INPUT OPERATION    │
          └──────────┬──────────┘
                     │  ┌─ S201
          ┌──────────▼──────────┐
          │   INITIALIZATION    │
          └──────────┬──────────┘
                     │  ┌─ S202
          ┌──────────▼──────────┐
          │  DETERMINE INPUT    │
          │     CONDITIONS      │
          └─────────────────────┘
```

INPUT DOCUMENT-TO-BE-SURVEYED d CONDITION — S210

CONFIRM CONDITIONS — S211    NO

YES

INPUT EXTRACTING CONDITION AND OTHER INFORMATION — S230

CONFIRM CONDITIONS — S231    NO

YES

INPUT DOCUMENTS-TO-BE-COMPARED P CONDITION — S220

CONFIRM CONDITIONS — S221    NO

YES

STORE CONDITIONS — S310

END

FIG. 4

START CHARACTERISTIC INDEX TERM EXTRACTING OPERATION

S101 — INITIALIZATION

S102 — DETERMINE READING

S110 — READ DOCUMENT-TO-BE-SURVEYED d

S130 — READ DOCUMENTS-TO-BE-COMPARED P

S120 — EXTRACT INDEX TERM (d)

S140 — EXTRACT INDEX TERM (P)

S121 — CALCULATE TF(d)

S141 — CALCULATE TF(P)

S142 — CALCULATE IDF(P)

S150 — CALCULATE SIMILARITY

S160 — SELECT SIMILAR DOCUMENTS S

S170 — EXTRACT INDEX TERM (S)

S171 — CALCULATE IDF(S)

S180 — EXTRACT CHARACTERISTIC INDEX TERM

END

FIG. 5

```
                        ┌─────────────────┐
                        │  START OUTPUT   │
                        │   OPERATION     │
                        └────────┬────────┘
                                 │        ┌─ S401
                        ┌────────▼────────┐
                        │ INITIALIZATION  │
                        └────────┬────────┘
                                 │                              ┌─ S402
    ┌────────────────────────────▼────────────────────────────────────┐
    │           START READING OF OUTPUT CONDITIONS                     │
    └────┬──────────────────────┬──────────────────────┬──────────────┘
         │ ┌─ S410              │ ┌─ S420              │ ┌─ S430
    ┌────▼────────┐        ┌────▼────────┐        ┌────▼─────────┐
    │READ MAP     │        │READ LIST    │        │READ COMMENT  │
    │CREATING     │        │OUTPUT       │        │CREATING      │
    │CONDITIONS   │        │CONDITIONS   │        │CONDITIONS    │
    └────┬────────┘        └────┬────────┘        └────┬─────────┘
```

FIG. 6

| CHARACTERISTIC INDEX TERM EXTRACTING DEVICE<br>INPUT CONDITION SETTING (1) |
|---|

BACK
SET

SELECT CONDITIONS IN THE WINDOWS BELLOW

**TARGET DOCUMENT**

| | |
|---|---|
| document-to-be-surveyed | ■ |
| documents-to-be-compared | ☐ |

**DOCUMENT TYPE**

| | |
|---|---|
| unexamined patents | ■ |
| registered patents | ☐ |
| utility models | ☐ |
| academic documents | ☐ |

**DATA READ**

| | |
|---|---|
| company DB1 | ☐ |
| company DB2 | ☐ |
| JPO IPDL | ☐ |
| PATOLIS | ☐ |
| other commercially available DB1 | ☐ |
| other commercially available DB2 | ☐ |

| | | | |
|---|---|---|---|
| FD | Document 1 | ☐ |
| CD | Document 2 | ☐ |
| MO | Document 3 | ■ |
| DVD | Document 4 | ☐ |
| others | Document 5 | ☐ |
| | Document 6 | ☐ |

FIG. 7

| CHARACTERISTIC INDEX TERM EXTRACTING DEVICE<br>INPUT CONDITION SETTING (2) |
|---|

BACK
SET

SELECT CONDITIONS IN THE WINDOWS BELLOW

**TARGET DOCUMENT**

| | |
|---|---|
| document-to-be-surveyed | ☐ |
| documents-to-be-compared | ■ |

**DOCUMENT TYPE**

| | |
|---|---|
| unexamined patents | ■ |
| registered patents | ■ |
| utility models | ☐ |
| academic documents | ☐ |

**EXTRACTION CONTENT**

| | |
|---|---|
| claims | ■ |
| related art | ☐ |
| object of the invention | ☐ |
| means and effect | ☐ |
| embodiments | ☐ |
| description of the drawings | ☐ |
| drawings | ☐ |
| abstract | ■ |
| bibliographic items | ☐ |
| procedural information | ☐ |
| registration information | ☐ |
| others | ☐ |

**DATA READ**

| | |
|---|---|
| company DB1 | ■ |
| company DB2 | ☐ |
| JPO IPDL | ☐ |
| PATOLIS | ☐ |
| other commercially available DB1 | ☐ |
| other commercially available DB2 | ☐ |
| FD | ☐ |
| CD | ☐ |
| MO | ☐ |
| DVD | ☐ |
| others | ☐ |

## FIG. 8

CHARACTERISTIC INDEX TERM EXTRACTING DEVICE
EXTRACT CONDITION SETTING

SELECT CONDITIONS IN THE WINDOWS BELLOW

BACK
SET

INDEX TERM EXTRACTING
CONDITION

| | |
|---|---|
| internal keyword clipping 1 | ■ |
| internal keyword clipping 2 | ☐ |
| external keyword clipping 1 | ☐ |
| external keyword clipping 2 | ☐ |

SIMILAR DOCUMENTS
SELECTING CONDITION

| | | |
|---|---|---|
| number of similar documents | top 100 cases | ☐ |
| number of non-similar documents | top 1000 cases | ☐ |
| | top 3000 cases | ■ |
| | top 5000 cases | ☐ |
| | numerical input | ☐ |

SIMILARITY CALCULATION
METHOD

| | |
|---|---|
| similarity 1 | ■ |
| similarity 2 | ☐ |
| similarity 3 | ☐ |
| similarity 4 | ☐ |
| similarity 5 | ☐ |
| similarity 6 | ☐ |

## FIG. 9

CHARACTERISTIC INDEX TERM EXTRACTING DEVICE
OUTPUT CONDITION SETTING

SELECT CONDITIONS IN THE WINDOWS BELLOW

BACK
SET

MAP CALCULATION
INFORMATION

| | |
|---|---|
| X axis IDF(P) | ■ |
| Y axis IDF(S) | ■ |

OUTPUT DATA

| | | |
|---|---|---|
| original concept terms | none | ☐ |
| specialty terms | top 5 terms | ☐ |
| similar documents prescribed terms | top 10 terms | ☐ |
| | top 15 terms | ☐ |
| | top 20 terms | ■ |
| | numerical input | ☐ |

MAP FORMAT

| | |
|---|---|
| 1 map | ■ |
| 2 maps | ☐ |
| 1 map with list | ☐ |
| 2 maps with list | ☐ |
| 1 map with comment | ☐ |
| 2 maps with comment | ☐ |
| 1 map with list and comment | ☐ |
| 2 maps with list and comment | ☐ |

COMMENT

(free entry)

FIG. 10

FIG. 11

"External Auxiliary Storage Device" IDF Plane

FIG. 12

"External Auxiliary Storage Device"
Extracted up to 20 words from each area

| Order of X' value | a: Original concept terms | b: Specialty terms | c: Similar documents prescribed terms | d: General terms |
|---|---|---|---|---|
| 1 | picture | | contents | aforesaid |
| 2 | hologram | | editing | provide |
| 3 | symbol | | expression | claim |
| 4 | IC | | server | item |
| 5 | all | | acquire | describe |
| 6 | compatibility | | network | said |
| 7 | net | | sound | keep |
| 8 | card | | computer | use |
| 9 | notice | | request | change |
| 10 | each | | program | connection |
| 11 | wireless | | communication | possible |
| 12 | character | | person | device |
| 13 | exterior surface | | every | plural |
| 14 | melody | | electronic | means |
| 15 | plastic | | medium | output |
| 16 | transmit | | utilize | correspond |
| 17 | print | | function | external |
| 18 | calculation | | external | function |
| 19 | expected | | record | selection |
| 20 | communication | | system | processing |

FIG. 13

EP 1 677 210 A1

"Urgent Message" IDF Plane

T'(4.003,8.006)

B(15.350,8.006)

◆ old age

◆ differential

base station ◆ ◆ DGPS

◆ well-known

◆ going out

◆ hospital

correction ◆   procedures ◆ suitable   ◆ fire department

base ◆   around   individual   cope with   positioning

same   ◆ refer   speaker

fixed   calculate   accumulation   ID   push down

ON ◆   database   ◆ satellite

OFF   incoming   ◆ map

generate   button   ◆ GPS

purpose   alarm

identify   ◆ contact

external   specify   message   ◆ center

move   satisfy   station   telephone   ◆ situation

in   switch   sound

position   predetermined   mobile   outgoing

structure   output   display   person

time   memory   communication

provide   status   detect   system   transmit

describe   occur   receive

case   signal

item   claim   information   ◆ message

said   device   ◆ urgent   C(7.34397,0)

characterized

IDF(S)

IDF(P)

0   2   4   6   8   10   12   14   16

52

FIG. 14

"Urgent Message"
Extracted up to 20 words from each area

| Order of X' value | a: Original concept terms | b: Specialty terms | c: Similar documents prescribed terms | d: General terms |
|---|---|---|---|---|
| 1 | differential | fire department | situation | structure |
| 2 | well-known | | message | in |
| 3 | procedures | | urgent | characterized |
| 4 | database | | center | provide |
| 5 | accumulation | | telephone | claim |
| 6 | refer | | outgoing | item |
| 7 | OFF | | mobile | describe |
| 8 | around | | station | position |
| 9 | ON | | sound | move |
| 10 | identify | | communication | said |
| 11 | correction | | switch | predetermined |
| 12 | calculate | | specify | device |
| 13 | switch | | transmit | satisfy |
| 14 | specify | | person | status |
| 15 | person | | receive | means |
| 16 | external | | external | output |
| 17 | same | | system | external |
| 18 | system | | satisfy | detect |
| 19 | generate | | memory | occur |
| 20 | purpose | | display | time |

FIG. 15

"Hair Shampoo" IDF Plane

FIG. 16

"Hair Shampoo"
Extracted up to 20 words from each area

| Order of X' value | a: Original concept terms | b: Specialty terms | c: Similar documents prescribed terms | d: General terms |
|---|---|---|---|---|
| 1 | comb | fly away | amphoteric | said |
| 2 | mL | Polyoxyethylene oleate | hair | the |
| 3 | potassium | methylcarboxybetaine | hydroxyalkyl | body |
| 4 | medicinal effect | dialkyl diallyl ammonium | bubbles | state |
| 5 | age | dried | skin | characterized |
| 6 | act | methylglucoside | anion | after |
| 7 | external use | creamy | cation | usage |
| 8 | damage | mile | fatty acid | claim |
| 9 | medium | wash hair | silicone | item |
| 10 | static charge | shampoo | ammonium | describe |
| 11 | handling | | rinse aid | provide |
| 12 | accumulation | | alkenyl | invention |
| 13 | protein | | hydrosoluble | etc. |
| 14 | trouble | | alcoholic | change |
| 15 | process | | alcohol | range |
| 16 | parallel use | | interface | use |
| 17 | finger | | remainder | less |
| 18 | long time | | methyl | exist |
| 19 | long term | | feeling | degree |
| 20 | brush | | sum | amount |

"External Auxiliary Storage Device" IDF Plane

FIG. 17

EP 1 677 210 A1

FIG. 18

EP 1 677 210 A1

"External Auxiliary Storage Device" IDF Plane

♦ Index term  ◇ Index term of top 10 TF value

FIG. 19

"External Auxiliary Storage Device" TFIDF Plane

FIG. 20

"External Auxiliary Storage Device" DF Plane

FIG. 21

"External Auxiliary Storage Device" IDF Plane −Linear Transformation−

EP 1 677 210 A1

60

T'(0,8.006)

B(11.347、8.006)

plastic

exterior surface

desire

hologram  picture

cable

melody

IC  symbol  total  create

compatibility  all

possession

article

each

price

mutual  wireless

internal  calculation  net  broadcast  music

notice  card

print  sale

transmit

part  reading

keep  expected  character  acquire  expression

every  electronic  sound

aforesaid  use  function  external request  network  server

change  connection

utilize  person  computer

selection  communication  program

correspond  image  system

editing  contents

provide  plural  input  medium

possible  output

claim  processing  display  record

item  describe  information  memory

said  device  means  data

C(11.347、0)

IDF(S)

D(4.003,0)

IDF'(P):(X',Y')=(X+4.003−Y, Y)

"External Auxiliary Storage Device" IDF Plane -Scale Transformation-

FIG. 22

EP 1 677 210 A1

IDF(S)

$$IDF'(P):(X',Y')=(X*(\alpha + \beta\,2/2)/(Y + \alpha),\ Y)$$

plastic, desire, exterior surface, hologram, picture, cable, melody, IC, symbol, total, create, compatibility, all, article, each, possession, mutual, wireless, price, internal, calculation, net, broadcast, music, notice, card, print, transmit, reading, sale, part, expected, character, expression, keep, aforesaid, use, every, electronic, sound, acquire, external, function, request, network, server, change, connection, person, computer, contents, selection, utilize, communication, program, editing, correspond, image, system, provide, plural, output, display, input, record, medium, posible, processing, information, memory, item, describe, claim, said, device, means, data

FIG. 23

EP 1 677 210 A1

"External Auxiliary Storage Device" IDF Plane -Lower Half Hyperbolic Transformation-

IDF'(P):(X',Y')=(X*11.347/(7.344+Y) (for Y<=4.003); X+4.003-Y (for Y>4.003), Y)

FIG. 24

FIG. 25

FIG. 26

REFERENCE POINTS IN APPLICATION EXAMPLE 1 OF SOM

FIG. 27

EP 1 677 210 A1

"External Auxiliary Storage Device" Application Example 1 of SOM (11-point Orthorhombic Lattice)

plastic
desire
exterior surface
hologram
picture
cable
melody
total
create
IC
symbol
all
possesstion
compatibility
article
price
each
internal
mutual
wireless
calculation
music
net
broadcast
notice
card
print
transmit
sale
part
reading
keep
expected
character
sound
every
electronic
aforesaid
use
request
external
function
server
acquire
expression
utilize
computer
person
network
change
connection
program
communication
correspond
selection
image
system
editing
contents
provide
plural
output
input
display
record
medium
possible
processing
item
describe
memory
information
claim
said
device
means
data

FIG. 28

REFERENCE POINTS IN APPLICATION EXAMPLE 2 OF SOM

FIG. 29

"External Auxiliary Storage Device" Application Example 2 of SOM (11-point Lattice Inverse Transformation)

FIG. 30

REFERENCE POINTS IN APPLICATION EXAMPLE 3 OF SOM

FIG. 31

EP 1 677 210 A1

"External Auxiliary Storage Device" Application Example 3 of SOM (16-point Scale Transformation)

FIG. 32

EP 1 677 210 A1

"External Auxiliary Storage Device" Application Example 4 of SOM (Multi-dimensional Input)

FIG. 33

**2: INPUT DEVICE**

**210** documents d of the company-to-be-surveyed condition input unit

**230** extracting condition and other information input unit

**220** documents-to-be-compared P condition input unit

**3: RECORDING DEVICE**

**310** condition recording unit

**1: PROCESSING DEVICE**

**110** documents d of the company-to-be-surveyed reading unit

**120** index term (d) extraction unit

**130** documents-to-be-compared P reading unit

**140** index term (P) extraction unit

**142** IDF(P) calculation unit

**155** same industry company search unit

**160** related documents S selection unit

**170** index term (S) extraction unit

**171** IDF(S) calculation unit

**173** central point calculation unit

**180** document extraction unit

**320** processing result storage unit

**4: OUTPUT DEVICE**

**410** map creating condition reading unit

**412** map data loading unit

**440** map output unit

**330** document storage unit

FIG. 34

START CENTRAL POINT
CALCULATING OPERATION

S101
INITIALIZATION

S102
DETERMINE
READING

S110
READ DOCUMENTS d
OF THE COMPANY-
TO-BE-SURVEYED

S120
EXTRACT
INDEX TERM (d)

S130
READ DOCUMENTS-
TO-BE-COMPARED P

S140
EXTRACT
INDEX TERM (P)

S142
CALCULATE IDF(P)

S155
SEARCH THE SAME
INDUSTRY COMPANY

S160
SELECT RELATED
DOCUMENTS S

S170
EXTRACT
INDEX TERM (S)

S171
CALCULATE IDF(S)

S173
CALCULATE CENTRAL POINT

S180
EXTRACT DOCUMENTS

END

FIG. 35

```
        ( START OUTPUT )
        (  OPERATION   )
               │
               ▼        ┌─ S401
        ┌──────────────┐
        │INITIALIZATION│
        └──────────────┘
               │
               ▼                                    ┌─ S402
┌──────────────────────────────────────────────────────┐
│      START READING OF OUTPUT CONDITIONS               │
└──────────────────────────────────────────────────────┘
               │        ┌─ S410
        ┌──────────────┐
        │READ MAP CREATING│
        │   CONDITIONS    │
        └──────────────┘
               │
               ▼        ┌─ S411
            ◇REQUIRE MAP?◇──NO──▶( STOP )
               │
              YES
               │        ┌─ S412
        ┌──────────────┐
        │ LOAD DATA FOR│
        │     MAP      │
        └──────────────┘
               │        ┌─ S413
        ┌──────────────┐
        │  CREATE MAP  │
        └──────────────┘
               │                                    ┌─ S440
┌──────────────────────────────────────────────────────┐
│                  OUTPUT MAP                           │
└──────────────────────────────────────────────────────┘
               │
               ▼
            ( END )
```

FIG. 36

"Company A" IDF Plane

□ Non-similar    o Similar

FIG. 37

Document Distribution of 3 Companies in the Same Industry

EP 1 677 210 A1

## INTERNATIONAL SEARCH REPORT

International application No.

PCT/JP2004/015082

| A. | CLASSIFICATION OF SUBJECT MATTER |
|---|---|

Int.Cl⁷ G06F17/30

According to International Patent Classification (IPC) or to both national classification and IPC

| B. | FIELDS SEARCHED |
|---|---|

Minimum documentation searched (classification system followed by classification symbols)

Int.Cl⁷ G06F17/30, 19/00

Documentation searched other than minimum documentation to the extent that such documents are included in the fields searched

| Jitsuyo Shinan Koho | 1922–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

JICST FILE(JOIS), WPI, INSPEC(DIALOG), keyword: SOM, JIKOSOSHIKIKA, TF/IDF, TEKISUTOMAININGU (in Japanese and in English)

| C. | DOCUMENTS CONSIDERED TO BE RELEVANT |
|---|---|

| Category* | Citation of document, with indication, where appropriate, of the relevant passages | Relevant to claim No. |
|---|---|---|
| X<br><br>A | Naoya MORIYA, et al., "Shinkyu Gakushu Shido Yoryo ni okeru Yogo Shutsugen ni Kansuru Kento", Shingaku Giho, 14 December, 1999 (14.12.99), pages 61 to 68 | 1-3,9,14,17, 19<br><br>4-8,10-13, 15-16,18,20, 24-28 |
| A | JP 11-212978 A (Mitsubishi Electric Corp.), 06 August, 1999 (06.08.99), Full text; Figs. 1 to 9 (Family: none) | 1-20,24-28 |

☐ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18 November, 2004 (18.11.04) | 07 December, 2004 (07.12.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

International application No.

PCT/JP2004/015082

| Box No. II | Observations where certain claims were found unsearchable (Continuation of item 2 of first sheet) |
| --- | --- |

This international search report has not been established in respect of certain claims under Article 17(2)(a) for the following reasons:

1. ☒ Claims Nos.: 21-23, 29

because they relate to subject matter not required to be searched by this Authority, namely:

Claims 21-23, 29 relate to a feature expression diagram or a document characteristic expression diagram which falls in mere presentations of information and does not require search by the International Search Authority under the provisions or PCT Article 17(2)(a)(i) and PCT Rule 39.1(v).

2. ☐ Claims Nos.:

because they relate to parts of the international application that do not comply with the prescribed requirements to such an extent that no meaningful international search can be carried out, specifically:

3. ☐ Claims Nos.:

because they are dependent claims and are not drafted in accordance with the second and third sentences of Rule 6.4(a).

| Box No. III | Observations where unity of invention is lacking (Continuation of item 3 of first sheet) |
| --- | --- |

This International Searching Authority found multiple inventions in this international application, as follows:

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**     ☐   The additional search fees were accompanied by the applicant's protest.

☐   No protest accompanied the payment of additional search fees.

Form PCT/ISA/210 (continuation of first sheet (2)) (January 2004)